(19) Europäisches Patentamt
European Patent Office
Office européen des brevets

(11) EP 1 322 847 B1

(12) **EUROPEAN PATENT SPECIFICATION**

(45) Date of publication and mention of the grant of the patent:
**09.08.2006 Bulletin 2006/32**

(21) Application number: **01963435.1**

(22) Date of filing: **05.09.2001**

(51) Int Cl.:
***F02D 41/14** (2006.01)* ***F02D 33/02** (2006.01)*
***F02B 37/22** (2006.01)*

(86) International application number:
**PCT/JP2001/007694**

(87) International publication number:
**WO 2002/029229 (11.04.2002 Gazette 2002/15)**

(54) **CONTROL OF SUPERCHARGER**

REGELUNG EINES TURBOLADERS

REGULATION D'UN COMPRESSEUR DE SURALIMENTATION

(84) Designated Contracting States:
**DE FR GB**

(30) Priority: **05.10.2000 JP 2000306484**

(43) Date of publication of application:
**02.07.2003 Bulletin 2003/27**

(73) Proprietor: **NISSAN MOTOR CO., LTD.**
**Yokohama-shi,**
**Kanagawa 221-0023 (JP)**

(72) Inventor: **SHIRAKAWA, Takashi**
**Yokohama-shi, Kanagawa 244-0812 (JP)**

(74) Representative: **Grünecker, Kinkeldey, Stockmair & Schwanhäusser**
**Anwaltssozietät**
**Maximilianstrasse 58**
**80538 München (DE)**

(56) References cited:
**US-A- 4 702 080** **US-A- 5 782 092**

- **PATENT ABSTRACTS OF JAPAN vol. 010, no. 216 (M-502), 29 July 1986 (1986-07-29) & JP 61 053421 A (NISSAN MOTOR CO LTD), 17 March 1986 (1986-03-17)**
- **PATENT ABSTRACTS OF JAPAN vol. 2000, no. 06, 22 September 2000 (2000-09-22) & JP 2000 087782 A (TOYOTA MOTOR CORP), 28 March 2000 (2000-03-28)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a control device according to the preamble portion of claim 1 and to a control method according to the preamble portion of claim 8, to control the intake fresh air amount of a supercharged engine.
Such a control method and control device are known from US 4,702,080.
JP 08-338256 A published by the Japanese Patent Office in 1996 discloses feedback control of a supercharging pressure variation mechanism of a turbocharger of an engine to a target value.
This prior art technique detects the supercharging pressure or the intake fresh air amount of the intake passage of the engine, and controls the supercharging pressure variation mechanism so that the supercharging pressure or intake fresh air amount coincides with a target value determined according to a running condition.
The turbocharger comprises an exhaust gas turbine disposed in the exhaust passage of the engine, and a compressor driven by the exhaust gas turbine , compresses air and supplies it to the engine via the intake passage.
The supercharging pressure variation mechanism comprises a gate which varies the inflowpath cross-sectional area of exhaust gas led to the exhaust gas turbine.
This feedback control compensates scatter in the performance of a sensor for detecting the supercharging pressure and an actuator that drives the supercharging pressure variation mechanism.
However, there is a considerable response delay until the gate operation of the exhaust gas turbine disposed in the exhaust passage of the engine affects the fresh air amount actually aspirated by the engine. On the basis of such a response delay, it is difficult to set the gain of feedback control large.
It takes some time before scatter in the performance of the sensor or actuator is compensated and the fresh air amount settles to the target value.
The prior art technique therefore has a problem in that control error is large in the transient running state of the engine.
It is an object of this invention to improve the fresh air amount control response of a supercharger.
For the apparatus aspect, this objective is solved by a control device according to claim 1.
For the method aspect, this objective is solved by a control method according to claim 8.
Preferred embodiments are laid down in the dependent claims.
In the following, the present invention is explained in greater detail with respect to several embodiments thereof in conjunction with the accompanying drawings, wherein:

FIG. 1 is a schematic diagram of a control device for a diesel engine according to an embodiment.
FIG. 2 is a schematic diagram of a common rail fuel injection mechanism with which the diesel engine is provided.
FIG. 3 is a flowchart describing a routine for calculating a target fuel injection amount *Qsol*performed by a controller according to an embodiment.
FIG. 4 is a diagram describing the contents of a map of a basic fuel injection amount *Mqdrv* stored by the controller.
FIG. 5 is a diagram describing the contents of a map of an EGR valve lift amount stored by the controller.
FIG. 6 is a flowchart describing a routine for calculating a target EGR amount *Tqec* per cylinder performed by the controller.
FIG. 7 is a flowchart describing a routine for calculating a cylinder intake fresh air amount *Qac* performed by the controller.
FIG. 8 is a flowchart describing a routine for calculating an intake fresh air flowrate *Qas0* of the intake passage performed by the controller.
FIG. 9 is a diagram describing the contents of an intake fresh air amount map stored by the controller.
FIG. 10 is a flowchart describing a routine for calculating a target EGR rate *Megr* performed by the controller.
FIG. 11 is a diagram describing the contents of a map of a basic target EGR rate *Megrb* stored by the controller.
FIG. 12 is a diagram describing the contents of a map of a water temperature correction coefficient *Kegr_tw* stored by the controller.
FIG. 13 is a flowchart describing a complete combustion determining routine performed by the controller.
FIG. 14 is a flowchart describing a routine for calculating an EGR rate *Megrd* in an intake valve position performed by the controller.
FIG. 15 is a flowchart describing a routine for calculating a time constant inverse value *Kkin* performed by the controller.
FIG. 16 is a flowchart describing the contents of a map of a volume efficiency equivalent basic value *Kinb* performed by the controller.
FIG. 17 is a flowchart describing a routine for calculating a target intake fresh air amount *tQac* performed by the controller.
FIG. 18 is a diagram describing the contents of a map of a target intake fresh air amount basic value *tQacb* stored by the controller.

FIG. 19 is a diagram describing the contents of a map of a correction coefficient *ktQac* stored by the controller.

FIG. 20 is a diagram describing the contents of a map of a target intake fresh air amount *tQac* stored by the controller.

FIG. 21 is a flowchart describing a routine for calculating a real EGR amount *Qec* performed by the controller.

FIG. 22 is a flowchart describing a subroutine for calculating an EGR amount feedback correction coefficients *Kqac00,* an EGR flow velocity feedback correction coefficient *Kqac0,* and an EGR flow velocity learning correction coefficient *Kqac,* performed by the controller.

FIG. 23 is a flowchart describing a routine for setting a feedback control permission flag *fefb* performed by the controller.

FIG. 24 is a flowchart describing a routine for setting a learning value reflection permission flag *felrn2* performed by the controller.

FIG. 25 is a flowchart describing a routine for setting a learning permission flag *felrn* performed by the controller.

FIG. 26 is a flowchart describing a subroutine for calculating the EGR amount feedback correction coefficient *Kqac00* performed by the controller.

FIG. 27 is a diagram describing the contents of a map of a correction gain *Gkfb* of an EGR flowrate stored by the controller.

FIG. 28 is a diagram describing the contents of a map of a water temperature correction coefficient *Kgfbtw* of an EGR amount stored by the controller.

FIG. 29 is a flowchart describing a subroutine for calculating the EGR flow velocity feedback correction coefficient *Kqac0* performed by the controller.

FIG. 30 is a diagram describing the contents of a map of an EGR valve flow velocity correction gain *Gkfbi* stored by the controller.

FIG. 31 is a diagram describing the contents of a map of a water temperature correction coefficient *Kgfbitw* of an EGR flow velocity stored by the controller.

FIG. 32 is a diagram describing the contents of a map of an error rate learning value *Rqacn* stored by the controller.

FIG. 33 is a flowchart describing a subroutine for updating the error rate learning value *Rqacn* performed by the controller.

FIG. 34 is a diagram describing the contents of a map of a learning rate *Tclrn* stored by the controller.

FIG. 35 is a flowchart describing a routine for calculating an EGR valve flow velocity *Cqe* performed by the controller.

FIG. 36 is a diagram describing the contents of a map of the EGR valve flow velocity *Cqe* stored by the controller.

FIG. 37 is a flowchart describing a routine for calculating a target opening area *Aev* of the EGR valve performed by the controller.

FIG. 38 is a flowchart describing a routine for setting a duty value *Dtyvnt* of a pressure control valve of a variable nozzle performed by the controller.

FIG. 39 is a flowchart describing a subroutine for setting an overboost determining flag *FOVBST* performed by the controller.

FIGs. 40A - 40E are timing charts describing a variation of the overboost determining flag *FOVBST with* respect to a variation of an accelerator opening.

FIG. 41 is a diagram describing the contents of a map of an overboost determining intake gas amount *TQcyl* stored by the controller.

FIG. 42 is a diagram describing the characteristics of an efficiency of a turbocharger with which the diesel engine is provides.

FIG. 43 is a flowchart describing a subroutine for setting a suppression release flag *FCLROB* performed by the controller.

FIGs. 44A and 44B are timing charts describing a variation of the overboost determining flag *FOVBST* and the suppression release flag *FCLROB.*

FIG. 45 is a flowchart describing a routine for calculating an overboost suppressing period *TTMROB* performed by the controller.

FIG. 46 is a diagram describing the contents of a map of an overboost suppressing period basic value *TTMROBO* stored by the controller.

FIG. 47 is a diagram describing the contents of a map of an overboost suppressing period correction coefficient *KTMROB* stored by the controller.

FIG. 48 is a flowchart describing a routine for calculating a suppression release period *TTMRCLROB* performed by the controller.

FIG. 49 is a diagram describing the contents of a map of a suppression release period basic value *TTMRCLROBO* stored by the controller.

FIG. 50 is a diagram describing the contents of a map of a suppression release period correction coefficient *KTMRCLROB* stored by the controller.

FIG. 51 is a flowchart describing a subroutine for calculating a target opening rate *Rvnt* of the variable nozzle performed by the controller.

FIG. 52 is a diagram describing the contents of a map of a target opening rate basic value *Rvnt0* of the variable nozzle in an EGR operation region under the overboost suppressing control, stored by the controller.

FIG. 53 is a diagram describing the contents of a map of the target opening rate basic value *Rvnt0* of the variable nozzle in the EGR operation region under a normal engine control, stored by the controller.

FIG. 54 is a diagram describing the contents of a map of a target opening rate basic value *Rvnt0* of the variable nozzle in a non-EGR operation region under the overboost suppressing control, stored by the controller.

FIG. 55 is a diagram describing the contents of a map of a target opening rate basic value *Rvnt0* of the variable nozzle in the non-EGR operation region under the normal engine control, stored by the controller.

FIG. 56 is similar to FIG. 51, but showing a second embodiment of this invention with respect to the subroutine for calculating the target opening rate *Rvnt* of the variable nozzle.

FIG. 57 is a diagram describing the contents of a map of the target opening rate basic value *Rvnt0* of the variable nozzle in the EGR operation region under the overboost suppressing control, according to a second embodiment.

FIG. 58 is a diagram describing the contents of a map of the target opening rate basic value *Rvnt0* of the variable nozzle in the EGR operation region under the normal engine control, according to the second embodiment

FIGs. 59A - 59C are timing charts describing an effect of an EGR rate on an exhaust gas composition and an intake fresh air amount of the diesel engine.

FIG. 60 is a flowchart describing a routine for calculating an open loop control amount *Avnt* of an opening rate of the variable nozzle and a delay processing value *Rvnte* of the target opening rate *Rvnt* of the variable nozzle performed by the controller.

FIGs. 61A - 61D are timing charts describing a variation of an exhaust gas amount of the diesel engine with respect to a variation of a fuel injection amount.

FIG. 62 is a diagram describing the contents of a map of an advance correction gain *TGKVNTO* when the variable nozzle is operating in an opening direction, stored by the controller.

FIG. 63 is a diagram describing the contents of a map of an advance correction gain *TGKVNTC* when the variable nozzle is operating in a closing direction, stored by the controller.

FIG. 64 is a diagram describing the contents of a map of a time constant inverse value *TTCVNTO* of an advance correction of the opening rate of the variable nozzle when it is operating in the opening direction, stored by the controller.

FIG. 65 is a diagram describing the contents of a map of a time constant inverse value *TTCVNTC* of the advance correction of the opening rate of the variable nozzle when it is operating in the closing direction, stored by the controller.

FIG. 66 is a flowchart describing a subroutine for calculating a feedback correction amount *Avnt_fb* of the opening rate of the variable nozzle and an opening rate learning value *Ravlr* performed by the controller.

FIG. 67 is a flowchart describing a subroutine for setting a feedback control permission flag *FVNFB* of the opening rate of the variable nozzle performed by the controller.

FIG. 68 is a diagram showing an operation region of the diesel engine where the controller feedback controls the opening rate of the variable nozzle.

FIG. 69 is a flowchart describing a subroutine for setting feedback gains of the opening rate of the variable nozzle.

FIG. 70 is a diagram describing the contents of a map of a proportional gain basic value *Gkvntp0* stored by the controller.

FIG. 71 is a diagram describing the contents of a map of an integral gain basic value *Gkvnti0* stored by the controller.

FIG. 72 is a diagram describing the contents of a map of an exhaust gas amount correction coefficient *Gkvqexh* stored by the controller.

FIG. 73 is a diagram describing the contents of a map of an opening rate correction coefficient *Gkvavnt* stored by the controller.

FIG. 74 is a flowchart describing a subroutine for calculating the feedback correction amount *Avnt_fb* of the opening rate of the variable nozzle performed by the controller.

FIG. 75 is a flowchart describing a subroutine for setting a learning permission flag *FVNLR* of the opening rate of the variable nozzle performed by the controller.

FIG. 76 is a diagram showing an operation region of the diesel engine where the controller perform learning control of the opening rate of the variable nozzle.

FIG. 77 is a flowchart describing a subroutine for calculating the opening rate learning value *Ravlr* performed by the controller.

FIG. 78 is a diagram describing the contents of a map of a learning speed *Kvntlrn* stored by the controller.

FIG. 79 is a diagram describing the contents of a map of an operation region reflection coefficient *Gkvntlnq* stored by the controller.

FIG. 80 is a diagram describing the contents of a map of an opening rate reflection coefficient *Gkvntlav* stored by the controller.

FIG. 81 is a flowchart describing a subroutine for calculating a command opening rate linearization processing value *Ratdty* performed by the controller.

FIG. 82 is a flowchart describing a subroutine for calculating a final command opening rate *Trvnt* performed by the controller.

FIG. 83 is a diagram describing the contents of a map of the command opening rate linearization processing value *Ratdty* stored by the controller.

FIG. 84 is a flowchart describing a subroutine for calculating a command duty value *Dtyv* output to the pressure control valve, performed by the controller .

FIG. 85 is a flowchart describing a subroutine for setting a duty hold flag *fvnt2* performed by the controller.

FIG. 86 is a flowchart describing a subroutine for calculating a temperature correction amount *Dty_t* performed by the controller.

FIG. 87 is a diagram describing the contents of a map of a basic exhaust gas temperature *Texhb* stored by the controller.

FIG. 88 is a diagram describing the contents of a map of a water temperature correction coefficient *Ktexh_ Tw* stored by the controller.

FIG. 89 is a diagram describing the contents of a map of the temperature correction amount *Dty_t* stored by the controller.

FIG. 90 is a diagram describing an effect of the temperature on the relation between the duty value of the pressure control valve and the opening rate of the variable nozzle.

FIG. 91 is a diagram of the contents of a map of a duty value *Duty_h_p* when the variable nozzle is fully closed while the command opening rate linearization processing value *Ratdty* is increasing, stored by the controller.

FIG. 92 is a diagram of the contents of a map of a duty value *Duty_l_p* when the variable nozzle is fully open while the command opening rate linearization processing value *Ratdty* is increasing, stored by the controller.

FIG. 93 is a diagram of the contents of a map of a duty value *Duty_h_n* when the variable nozzle is fully closed while the command opening rate linearization processing value *Ratdty* is decreasing, stored by the controller.

FIG. 94 is a diagram of the contents of a map of a duty value *Duty_l_n* when the variable nozzle is fully open while the command opening rate linearization processing value *Ratdty* is decreasing, stored by the controller.

FIG. 95 is a diagram describing a hysteresis in the relation between the command opening rate linearization processing value *Ratdty* and the duty values according to the embodiments.

FIG. 96 is a flowchart describing a subroutine for checking the operation of the variable nozzle performed by the controller.

FIG. 97 is a flowchart describing a routine for calculating the duty value *Dtyvnt* of the pressure control valve performed by the controller.

FIG. 98 is a diagram describing the contents of a map of a control pattern value *Duty_pu* stored by the controller.

FIG. 99 is a diagram describing the contents of a map of a duty value *Duty_p_ne* for checking the operation of the variable nozzle, stored by the controller.

FIGs. 100A - 100D are timing charts describing a variation of the cylinder intake fresh air amount with respect to a variation of the opening rate of the variable nozzle.

FIGs. 101A and 101B are a flowchart describing a subroutine for calculating the opening rate learning value *Ravlr* according to a third embodiment, and

FIG. 102 is a diagram describing a hysteresis in the relation between the duty value of the pressure control valve and the opening rate of the variable nozzle.

Referring to FIG. 1 of the drawings, a diesel engine 1 comprises an intake passage 3 and exhaust passage 2. The diesel engine 1 is a multi-cylinder diesel engine so constructed that the pattern of heat release is single stage combustion due to performing low temperature pre-mixture combustion. Such a diesel engine is disclosed by JP 08-86251 A published by the Japanese Patent Office in 1999. Intake air of the intake air passage 3 is supplied to each cylinder of the diesel engine 1 via a collector 3A and an intake manifold 3B.

A compressor 55 of a turbocharger 50 and a intake throttle 60 driven by a throttle actuator 61 are installed in the intake passage 3 upstream of the collector 3A.

A swirl control valve is provided in an intake port leading from the intake passage 3 to each cylinder. When the diesel engine 1 is running at low rotation speed on low load, the swirl control valve closes part of the passage and sets up a swirl in the flow of air flowing into the combustion chamber of the diesel engine 1.

The combustion chamber comprises a large diameter toroidal combustion chamber. This is a combustion chamber wherein a cylindrical cavity of the same diameter is formed on a piston from a cap surface to a base. A conical part is formed at the base of the cavity. As a result, resistance to the swirl flowing in from the outside of the cavity is reduced, and mixing of air and fuel is promoted. Also, due to the shape of the cavity, the swirl diffuses from the center of the cavity to the outside as the piston descends.

The diesel engine 1 comprises a common rail type fuel injection mechanism 10.

Referring to FIG. 2, a fuel injection mechanism 10 comprises a fuel tank 11, fuel supply passage 12, supply pump 14, pressure accumulating chamber 16A formed in a common rail 16, and a nozzle 17 which is provided for every cylinder. After the fuel supplied from the supply pump 14 is stored in a pressure accumulator 16A via a high pressure fuel passage 15, it is distributed to each of the nozzles 17.

The nozzle 17 comprises a needle valve 18, nozzle chamber 19, fuel passage 20 to the nozzle chamber 19, retainer 21, hydraulic piston 22, return spring 23, fuel passage 24 which leads high pressure fuel to the hydraulic piston 22, and three-way solenoid valve 25 interposed in the fuel passage 24. A check valve 26 and an orifice 27 are also provided in parallel in the fuel passage 24. The return spring 23 pushes the needle valve 18 in the closing direction of the lower part of the figure via the retainer 21. The hydraulic piston 22 comes in contact with the upper edge of the retainer 21.

The three-way valve 25 comprises a port A connected to the pressure accumulating chamber 16A, port B connected to the fuel passage 24 and port C connected to a drain 28. When the three-way valve 25 is OFF, ports A and B are connected and ports B and C are shut off. As a result, the fuel passages 20 and 24 are connected, and high pressure fuel is led to both the upper part of the hydraulic piston 22 and the nozzle chamber 19 from the pressure accumulating chamber 16A. As the pressure-receiving surface area of the hydraulic piston 22 is larger than the pressure-receiving surface area of the needle valve 18, in this state, the needle valve 18 sits in the valve seat, and the nozzle 17 is thereby closed.

In the state where the three-way valve 25 is ON, the ports A and B are shut off, and the ports B and C are connected.

Consequently, the fuel pressure of the fuel passage 24 which pushes the hydraulic piston 22 downward is released to the fuel tank 11 via the drain 28, the needle valve 18 lifts due to the fuel pressure of the nozzle chamber 19 which acts on the needle valve 18 in an upward direction, and the fuel of the nozzle chamber 19 is injected from the hole at the end of the nozzle 17. If the three-way valve 25 is returned to the OFF state, the fuel pressure of the pressure accumulating chamber 16A again acts downward on the hydraulic piston 22, the needle valve 18 sits in the valve seat, and fuel injection is terminated.

That is, fuel injection start timing is adjusted by the change-over timing from OFF to ON of the three-way valve 25, and fuel injection amount is adjusted by the duration of the ON state. Therefore, if the pressure of the pressure accumulating chamber 16A is the same, the fuel injection amount increases the longer the ON time of the three-way valve 25.

Further, to adjust the pressure of the pressure accumulating chamber 16A, the fuel injection mechanism 10 comprises a return passage 13 which returns the surplus fuel discharged by the supply pump 14 to the fuel supply passage 12. The return passage 13 is provided with a pressure regulating valve 31. The pressure regulating valve 31 opens and closes the return passage 13, and adjusts the pressure of the pressure accumulating chamber 16A by varying the fuel injection amount to the pressure accumulating chamber 16A.

The fuel pressure of the pressure accumulating chamber 16A is equal to the fuel injection pressure of the nozzle 17, and the fuel injection rate is higher the higher the fuel pressure of the pressure accumulating chamber 16. The three-way valve 25 and the pressure regulating valve 31 function according to the input signal from a controller 41.

The above construction of the fuel injection mechanism 10 is disclosed and known from pp. 73 - 77, Lecture Papers of the 13th Symposium on the Internal Combustion Engine.

Now, referring again to FIG. 1, after the exhaust gas in the exhaust passage 2 drives an exhaust gas turbine 52 of the turbocharger 50, it is discharged into the atmosphere via a catalytic converter 62. The catalytic converter 62 traps nitrogen oxides (NOx) when the diesel engine 1 operates under a lean air-fuel ratio, and reduces the trapped NOx by hydrocarbon (HC) contained in the exhaust gas when the diesel engine 1 operates under a rich air-fuel ratio.

The turbocharger 50 comprises the exhaust gas turbine 52 and the compressor 55 which supercharges the intake fresh air in the intake passage 3 according to the rotation of the exhaust gas turbine 52. The compressor 55 is provided in the middle of the intake passage 3, and the intake passage 3 supplies air compressed by the compressor 55 to the diesel engine 1. A variable nozzle 53 driven by a pressure actuator 54 is provided at an inlet to the exhaust gas turbine 52.

The pressure actuator 54 comprises a diaphragm actuator 59 which drives the variable nozzle 53 according to a signal pressure, and a pressure control valve 56 which generates the signal pressure according to a signal input from the controller 41.

The controller 41 controls the variable nozzle 53 to reduce the nozzle opening when the rotation speed of the diesel engine 1 is low. As a result, the flow velocity of exhaust gas introduced to the exhaust gas turbine 52 is increased so that a predetermined supercharging pressure is attained. On the other hand, the controller 41 controls the variable nozzle 53 to fully open, when the rotation speed of the diesel engine 1 is high, in order to introduce exhaust gas into the exhaust gas turbine 52 without resistance.

When the air-fuel mixture is burnt in the diesel engine 1, noxious NOx are formed. The NOx amount largely depends on the combustion temperature, and the generation amount of NOx can be suppressed by making the combustion temperature low. This diesel engine 1 reduces the oxygen concentration in the combustion chamber by exhaust recirculation (EGR), and thereby realizes low-temperature combustion. For this purpose, the diesel engine 1 comprises an exhaust gas recirculation (EGR) passage 4 which connects the exhaust passage 2 upstream of the exhaust gas turbine 52 and a collector 3A of the intake passage 3. The EGR passage 4 is provided with a diaphragm type exhaust gas recirculation (EGR) valve 6 which responds to a control negative pressure provided from a negative pressure control valve 5 and a cooling system 7.

The negative pressure control valve 5 generates a negative pressure in response to a duty signal input from the controller 41, and thereby varies the rate of exhaust gas recirculation (EGR rate) via the EGR valve 6.

For example, in the low rotation speed, low load range of the diesel engine 1, the EGR rate is a maximum 100 percent, and as the rotation speed and load of the diesel engine 1 increase, the EGR rate is decreased. On high load, since the exhaust gas temperature is high, intake air temperature will rise if a large amount of EGR is performed. If the intake air temperature rises, NOx will no longer decrease, the ignition delay of injected fuel becomes shorter, and it becomes impossible to achieve pre-mixture combustion. Therefore, the EGR rate is made to decrease in stages as the rotation speed and load of the diesel engine 1 increase.

The cooling system 7 leads part of the engine cooling water to a water jacket 8 surrounding the EGR passage 4, and cools the recirculated exhaust gas in the EGR passage 4. A cooling water inlet 7A of the water jacket 8 is provided with a flow control valve 9 which adjusts the recirculating amount of cooling water according to a signal from the controller 41.

A pressure regulating valve 31, the three-way valve 25, the negative pressure control valve 5, the pressure actuator 54 and the flow control valve 9 are respectively controlled by signals from the controller 41. The controller 41 comprises a microcomputer equipped with a central processing unit (CPU), random access memory (RAM), read-only memory (ROM) and input/output interface (I/O interface). It should be noted that the controller 41 may comprise plural microcomputers.

Signals corresponding to detection values are input to the controller 41 from a pressure sensor 32 which detects a fuel pressure of the pressure accumulating chamber 16A, an accelerator opening sensor 33 which detects an opening *Cl* of a vehicle accelerator pedal, a crank angle sensor 34 which detects a rotation speed *Ne* and crank angle of the diesel engine 1, a cylinder identifying sensor 35 which identifies cylinders of the diesel engine 1, a water temperature sensor 36 which detects a cooling water temperature *Tw* of the diesel engine 1, an intake air temperature sensor 37 which detects an intake air temperature *Ta* of the diesel engine 1, an atmospheric pressure sensor 38 which detects an atmospheric pressure *Pa* and an air flow meter 39 which detects an intake fresh air flowrate of the intake passage 3 upstream of the compressor 55. The atmospheric pressure sensor 38 and air flow meter 39 are installed in the intake passage 3 upstream of the intake throttle 60.

Based on the rotation speed of the diesel engine 1 and accelerator opening, the controller 41 calculates a target fuel injection amount of the nozzle 17 and target pressure of the pressure accumulating chamber 16A. The fuel pressure of the pressure accumulating chamber 16A is feedback controlled by opening and closing the pressure regulating valve 31 so that the actual pressure of the pressure accumulating chamber 16A detected by the pressure sensor 32 coincides with the target pressure.

The controller 41 also controls an ON time of the three-way valve 25 according to the calculated target fuel injection amount, and a fuel injection start timing in response to the running conditions of the diesel engine 1 by the change-over timing to ON of the three -way valve 25. For example, when the diesel engine 1 is in a low rotation speed, low load state under a high EGR rate, the fuel injection start timing is delayed near top dead center (TDC) of the piston so that the ignition delay of injected fuel is long. Due to this delay, the combustion chamber temperature at the time of ignition is lowered, and the generation of smoke due to the high EGR rate is suppressed by increasing the pre-mixture combustion ratio. On the other hand, the injection start timing is advanced as the rotation speed and load of the diesel engine 1 increase. This is due to the following reason. Specifically, even if the ignition delay period is constant, the ignition delay crank angle obtained by converting the ignition delay period increases in proportion to the increase in engine speed. Therefore, in order to fire the injected fuel at a predetermined crank angle, the injection start timing needs to be advanced at high rotation speed.

The controller 41 controls the fresh air amount of the diesel engine 1 by controlling the supercharging pressure of the turbocharger 50 via the variable nozzle 53 and the EGR amount via the EGR valve 6.

However, the supercharging pressure and the EGR amount affect each other, and if the EGR amount is changed, it may be necessary to change the opening of the variable nozzle 53.

As the supercharging pressure control precision and the EGR amount control precision both fall when the engine 1 is in a transient state , it becomes difficult to control these parameters which are affecting each other.

Thus, the controller 41 computes a target intake fresh air amount *tQac* according to running conditions of the engine 1, and sets a target opening rate *Rvnt* of the variable nozzle 53 of the turbocharger 50 based on this target intake fresh air amount *tQac,* and an EGR amount *Qec* per cylinder in the intake valve position of the diesel engine 1, or an EGR rate *Megrd* in the intake valve position of the diesel engine 1.

On the other hand, the controller 41 assigns a feedback region for opening rate control, and controls the intake fresh air amount by feedback to a target value via feedback control by proportional/integral control of the supercharging pressure in the feedback region.

At this time, a learning value is calculated based on the integral correction value when the integral correction value during feedback control has converged, and learning control of supercharging pressure based on the learned value is performed.

However, in the prior art learning approach, due to a response delay in the engine intake system, learning control may cause a disturbance to feedback control, and the fresh air amount and supercharging pressure may become unstable.

Thus, when the learning control is performed, this embodiment subtracts the part replaced by the learning value from the integral correction value in the following control cycle so that the total correction value does not change.

Next, the above control performed by the controller 41 will be described with reference to flowcharts. FIG. 3, FIG. 4 and FIGs. 7-13 are known from JP 10-288071 A published by the Japanese Patent Office in 1998.

The routine for calculating common parameters used for control of supercharging pressure and the EGR amount will first be described. The common parameters are a target fuel injection amount Osol of a fuel injection mechanism 10, a target EGR rate *Megr* of the EGR valve 6, a time constant inverse value *Kkin,* a real EGR rate *Megrd,* a cylinder intake fresh air amount *Qac,* an intake fresh air flowrate *Qas0* of the intake passage, the real EGR amount *Qec* and the target intake fresh air amount *tQac*.

The time constant inverse value *Kkin* is a value representing an EGR control delay due to a collector 3A interposed between the EGR valve 6 and the intake valve of the diesel engine 1. The real EGR rate *Megrd* shows the EGR rate of the intake air which passes through the intake valve of the diesel engine 1. The real EGR rate *Megrd* varies with a first order delay relative to the target EGR rate *Megr*. The calculation of these parameters is performed independently of the supercharging pressure control routine, and the EGR amount control routine.

First, referring to FIG. 3, the routine for calculating the target fuel injection amount *Qsol* will be described. This routine is performed in synchronism with a REF signal output by the crank angle sensor 34 for each reference position of the combustion cycle of each cylinder. In the case of a four-stroke cycle engine, the REF signal is output every 180 degrees for a four cylinder engine, and every 120 degrees for a six cylinder engine.

First, in a step S1, the engine speed *Ne* is read, and in a step S2, the accelerator opening *Cl* is read.

In a step S3, a basic fuel injection amount *Mqdrv is* calculated by looking up a map shown in FIG. 4 based on the engine rotation speed *Ne* and the accelerator opening *Cl.* This map is stored beforehand in the memory of the controller 41.

In a step S4, the target fuel injection amount *Qsol* is calculated by adding an increase correction based on an engine cooling water temperature *Tw,* etc., to the basic fuel injection amount *Mqdrv*.

It should be noted however that the above routine does not consider the residual air amount in the EGR gas. So, according to this invention, the actual fuel injection amount by the fuel injection mechanism 10 is not necessarily equal to the target fuel injection amount *Qsol* calculated in the above routine, but to a final target fuel injection amount *Qfin* described later.

Next, referring to FIG. 10, a routine for calculating the target EGR rate *Megr* will be described. This routine is also performed in synchronism with the REF signal.

The controller 41 first reads the engine rotation speed *Ne,* the target fuel injection amount *Qsol* and the engine cooling water temperature *Tw* in a step S51.

In a step S52, referring to a map shown in FIG. 12, the basic target EGR rate *Megrb* is calculated from the engine rotation speed *Ne* and the target fuel injection amount *Qsol.* This map is stored beforehand in the memory of the controller 41. In this map, the basic target EGR rate *Megrb* is set larger in a region where the operating frequency of the engine is higher. This region corresponds to a region where both the rotation speed *Ne* and the load are small. In this map, the load is represented by the target fuel injection amount *Qsol..* When the engine output is high, smoke tends to be generated, so in such a region, the basic target EGR rate *Megrb* is set to have small values.

In a step S53, referring to a map shown in FIG. 13, a water temperature correction coefficient *Kegr_Tw* of the basic target EGR rate *Megrb* is calculated from the cooling water temperature *Tw*. This map is also stored beforehand in the memory of the controller 41.

In a step S54, the target EGR rate *Megr* is calculated by the following equation (1) from the basic target EGR rate *Megrb* and water temperature correction coefficient *Kegr_Tw.*

$$Megr = Megrb \cdot Kegr_tw \qquad (1)$$

In a step S55, a subroutine shown in FIG. 13 which determines whether or not the diesel engine 1 is in a complete combustion state, is performed.

Describing this subroutine, firstly in a step S61, the engine rotation speed *Ne* is read, and in a step S62, the engine rotation speed *Ne* and a complete combustion determining slice level *NRPMK* corresponding to a complete combustion rotation speed are compared.

The slice level *NRPMK is* set, for example, to 400rpm. When the engine rotation speed *Ne* exceeds the slice level *NRPMK,* the routine proceeds to a step S63.

Here, a counter value *Tmrkb* is compared with a predetermined time *TMRKBP,* and when the counter value *Tmrkb* is larger than the predetermined time *TMRKBP,* a complete combustion flag is turned ON in a step S64, and the subroutine is terminated.

When the engine rotation speed *Ne* is below the slice level *NRPMK* in the step S62, the subroutine proceeds to a step S66. Here, the counter value *Tmrkb* is cleared to zero, the complete combustion flag is turned OFF in a next step S67, and the subroutine is terminated.

When the counter value *Tmrkb* is below the predetermined time *TMRKBP* in the step S63, the counter value *Tmrkb* is incremented in a step S65 and the subroutine is terminated.

In this subroutine, even if the engine rotation speed *Ne* exceeds the slice level *NRPMK,* the complete combustion flag does not turn ON immediately, and the complete combustion flag only changes to ON after this state has continued for the predetermined time *TMRKBP.*

Referring again to FIG. 10, after performing the subroutine of FIG. 13, the controller 41 determines the complete combustion flag in a step S56. When the complete combustion flag is ON, the routine of FIG. 10 is terminated. When the complete combustion flag is OFF, the target EGR rate *Megr* is reset to zero in a step S57, and the routine of FIG. 10 is terminated.

Next, referring to FIGs. 14 and 15, a routine for calculating the time constant inverse value *Kkin* and the real EGR rate *Megrd* will now be described. The real EGR rate *Megrd* varies with a first order delay relative to the target EGR rate *Megr.*As the calculations of the time constant inverse value *Kkin* and the real EGR rate *Megrd* are inter-related, they will be described together.

FIG. 15 shows a routine for calculating the time constant inverse value *Kkin.* This routine is performed in synchronism with the REF signal.

The controller 41 reads the engine rotation speed *Ne*, the target fuel injection amount *Qsol* and the immediately preceding value $Megrd_{n-1}$ (%) of the real EGR rate in a step S101. The immediately preceding value $Megrd_{n-1}$ is a value of *Megrd* calculated on the immediately preceding occasion when the routine was performed.

In a step S102, a volume efficiency equivalent basic value *Kinb* is calculated from the engine rotation speed *Ne* and the target fuel injection amount *Qsol* by looking up a map shown in FIG. 16 previously stored in the memory of the controller 41.

In a step S103, a volume efficiency equivalent value *Kin* is calculated from the following equation (2). When EGR is performed, the proportion of fresh air in the intake air falls, and the volume efficiency decreases. This reduction is reflected in the calculation of the volume efficiency equivalent value *Kin* via the volume efficiency equivalent basic value *Kinb.*

$$Kin = Kinb \cdot \frac{1}{1+\frac{Megrd_{n-1}}{100}} \qquad (2)$$

In a step S104, the time constant inverse value *Kkin* corresponding to the capacity of the collector 3A is calculated by multiplying the volume efficiency equivalent value *Kin* by a constant *KVOL.*

The constant *KVOL* is expressed by the following equation (3).

$$KVOL = (VE/NC)/VM \qquad (3)$$

where, VE= displacement of diesel engine 1,
NC = number of cylinders of diesel engine 1, and
VM = capacity of passage from collector 3A to the intake valve.

FIG. 14 shows the routine for calculating the real EGR rate *Megrd.* This routine is performed at an interval of ten milliseconds.

The controller 41 first reads the target EGR rate *Megr* in a step S91.

In a following step S92, the time constant inverse value *Kkin* is read. The routine of FIG. 15, which calculates the time constant inverse value *Kkin,* is performed in synchronism with the REF signal, and this routine which calculates the real EGR rate *Megrd* is performed at an interval of ten milliseconds. Therefore, the time constant inverse value *Kkin* read here is the time constant inverse value *Kkin* calculated by the routine of FIG. 15 immediately before the execution of the routine of FIG. 14. Likewise, the immediately preceding value $Megrd_{n-1}$ of the real EGR rate read by the routine of FIG. 15 is the real EGR rate calculated by the routine of FIG. 14 just before the execution of the routine of FIG. 15.

In a step S93, the real EGR rate *Megrd* is calculated from the following equation (4) using the target EGR rate *Megr,* immediately preceding value $Megrd_{n-1}$, and time constant inverse value *Kkin.*

$$Megrd = Megr \cdot Kkin \cdot Ne \cdot Ke2\# + Megrd_{n-1} \cdot (1 - Kkin \cdot Ne \cdot KE2\#) \quad (4)$$

where, *KE2#*=constant.

In this equation, $Ne \cdot KE2\#$ is a value to convert the EGR rate per intake stroke of each cylinder, to an EGR rate per unit time.

Next, referring to FIG. 7, a routine for calculating the cylinder intake fresh air amount *Qac* will be described. This routine is performed in synchronism with the REF signal. The cylinder intake fresh air amount *Qac* expresses the intake fresh air amount in the intake valve position of one cylinder of the diesel engine 1. The cylinder intake fresh air amount *Qac* is calculated from the fresh air flowrate *Qas0* of the intake passage 3 detected by the air flow meter 39, but as the air flow meter 39 is situated upstream of the compressor 55, the cylinder intake fresh air amount *Qac* is calculated considering the time until the air which has passed through the air flow meter 39 is taken into the cylinder via the collector 3A.

First, in a step S31, the controller 41 reads the engine rotation speed *Ne* and the fresh air flowrate *Qas0* of the intake passage 3.

In a step S32, the intake fresh air flowrate *Qas0* is converted into an intake fresh air amount *Qac0* per cylinder by the following formula (5).

$$Qac0 = \frac{Qas0}{Ne} \cdot KCON\# \quad (5)$$

where, *KCON#=* constant.

The constant *KCON#* is a constant for converting the intake fresh air flowrate *Qas0* of the intake passage 3 into the intake fresh air amount *Qac0* per cylinder. In a four-cylinder engine, two cylinders perform air intake in each rotation, so the constant *KCON#* is 30. In a six-cylinder engine, three cylinders perform air intake in each rotation, so the constant *KCON#* is 20.

A considerable time is required until the air which has passed through the air flow meter 39 is actually taken into the cylinder. In order to correct for this time difference, the controller 41 performs the processing of steps S33, S34.

In the step S33, considering the time required from the air flow meter 39 to the inlet of the collector 3A, a value $Qac0_{n-L}$ of *Qac0* which was EGR flow velocity feedback correction coefficient the routine executed L times ago, is set as an intake fresh air amount *Qacn* per cylinder at the inlet of the collector 3A. The value of L is determined experimentally.

In the step S34, considering the time difference from the collector 3A to the intake valve of each cylinder of the diesel engine 1, the cylinder intake fresh air amount *Qac* is calculated by equation (6) of first order delay.

$$Qac = Qac_{n-1} \cdot (1 - Kkin) + Qacn \cdot Kkin \quad (6)$$

where, *Kkin* = time constant inverse value, and

$Qac_{n-1}$ = *Qac* calculated on the immediately preceding occasion the routine was executed.

The signal input into the controller 41 from the air flow meter 39 is an analog voltage signal Us, and the controller 41 converts the analog voltage signal Us into the intake fresh air flowrate *Qas0* of the intake passage 3 by performing a routine shown in FIG, 8. This routine is performed at an interval of four milliseconds.

In a step S41, the controller 41 reads the analog voltage signal Us, and in a step S42, converts this into a flowrate *Qas0_d* by looking up a map shown in FIG. 9. This map is stored beforehand in the memory of the controller 41.

Further, in a step S43, weighted average processing is performed on the flowrate *Qas0_d,* and the value obtained is taken as the intake fresh air flowrate *Qas0* of the intake passage 3.

Next, referring to FIG. 21, a routine for calculating the real EGR amount *Qec* will be described. The real EGR amount *Qec* corresponds to an EGR amount per cylinder in the intake valve position. This routine is performed at an interval of ten milliseconds.

Firstly in a step S121, the controller 41 reads the intake fresh air amount *Qacn* per cylinder at the inlet of the collector 3A, the target EGR rate *Megr,* and the time constant inverse value *Kkin* corresponding to the collector capacity. For the intake fresh air amount *Qacn* per cylinder at the inlet of the collector 3A, a value calculated by the routine of FIG. 7 is used, and for the time constant inverse value *Kkin,* a value calculated by the routine of FIG. 15 is used.

In a next step S122, an EGR amount *Qec0* per cylinder at the inlet of the collector 3A is calculated by the following equation (7).

$$Qec0 = Qacn \cdot Mger \qquad (7)$$

In a next step S123, real EGR amount *Qec* is calculated by the following equation (8) and the routine is terminated.

$$Qec = Qec0 \cdot Kkin \cdot Ne \cdot KE\# + Qec_{n-1} \cdot (1 - Kkin \cdot Ne \cdot KE\#) \qquad (8)$$

where, $Qec_{n-1} = Qec$ calculated on the immediately preceding occasion the routine was performed.

The EGR amount *Qec* per cylinder in the intake valve position is equivalent to the real EGR amount per cylinder of the diesel engine 1. In the following description, the EGR amount Qec per cylinder in the intake valve position is referred to as the real EGR amount for simplicity.

FIG. 17 shows a routine for calculating the target intake fresh air amount *tQac.* This routine is performed at an interval of ten milliseconds.

Firstly in a step S111, the control unit 41 reads the engine rotation speed Ne, target fuel injection amount *Qsol* and real EGR rate *Megrd.* In a step S112, the real EGR rate *Megrd* is compared with a predetermined value *MEGRLV#.* The predetermined value *MEGRLV#* is a value for determining whether or not exhaust gas recirculation is actually being performed, and is set to, for example, 0.5%.

In the step S112, when *Megrd > MEGRLV#,* the routine proceeds to a step S113. On the other hand, if *Megrd*≤ *MEGRLV#,* the routine proceeds to a step S116. In order to treat the case of a very small exhaust gas recirculation to be the same as the case where exhaust gas recirculation is not performed, the predetermined value *MEGRLV#* is not set to zero.

In the step S113, a target intake fresh air amount basic value *tQacb* is calculated from the engine rotation speed *Ne* and real EGR rate *Megrd* by looking up a map shown in FIG. 18. When the engine rotation speed *Ne* is constant, this map gives a larger target intake fresh air amount basic value *tQacb* the larger the real EGR rate *Megrd.* This map is previously stored in the memory of the control unit 41.

Next, in a step S114, a correction coefficient *ktQac* of the target intake fresh air amount is calculated from the engine rotation speed *Ne* and the target fuel injection amount *Qsol* by looking up a map shown in FIG. 19. The correction coefficient *ktQac* is a coefficient for setting the target intake fresh air amount according to the running condition of the vehicle.

In a step S115, the target intake fresh air amount *tQac* is calculated by multiplying the target intake fresh air amount basic value *tQacb* by the correction coefficient *ktQac.*

On the other hand, in the step S116, the target intake fresh air amount *tQac* when exhaust gas recirculation is not performed, is calculated from the engine rotation speed *Ne* and the target fuel injection amount *Qsol* by looking up a map shown in FIG. 20.

After calculating the target intake fresh air amount *tQac* in this way, the routine is terminated.

The control of the EGR amount of the EGR valve 6 as well as the control of the supercharging pressure of the turbocharger 50 by the controller 41 are performed based on these common parameters, the target fuel injection amount *Qsol,* the time constant inverse value *Kkin,* the target EGR rate *Megr,* the real EGR rate *Megrd,* the cylinder intake fresh air amount *Qac,* the real EGR amount *Qec* and the target intake fresh air amount *tQac.*

The control of the EGR amount is performed by controlling an opening area of the EGR valve 6 to be equal to a target opening area *Aev.*

Next, the routine for calculating the target opening area *Aev* of the EGR valve 6 for this control will be described referring to FIG. 37. This routine is performed in synchronism with the REF signal.

First, the controller 41 reads a target EGR amount *Tqec* per cylinder in the position of the EGR valve 6, an EGR amount feedback correction coefficient *Kqac00* and the EGR valve flow velocity *Cqe* in a step S231.

These values are calculated by separate routines.

The target EGR amount *Tqec* per cylinder in the position of the EGR valve 6 is calculated by the routine shown in FIG. 6. The EGR amount feedback correction coefficient *Kqac00* is calculated by a separate routine shown in FIG. 22, and a subroutine shown in FIG. 26. The EGR valve flow velocity *Cqe* is calculated by the routine shown in FIG. 35.

These routines will first be described.

Referring to FIG. 6, firstly in a step S21, the controller 41 reads the intake fresh air amount *Qacn* at the inlet of a collector 3A. The intake fresh air amount *Qacn* per cylinder at the inlet of the collector 3A is a value calculated by the step S33 of FIG. 7.

Next, in a step S22, the target EGR rate *Megr* is read. The target EGR rate *Megr is* a value calculated by the routine of FIG. 10.

Next, in a step S23, a required EGR amount *Mqec* is calculated by equation (9).

$$Mqec = Qacn \cdot Megr \tag{9}$$

In a next step S24, delay processing is performed on the required EGR amount *Mqec* by the following equation (10) using a time constant inverse value *Kkin* calculated by the routine of FIG. 15, and this is converted to an intermediate value corresponding to the required EGR amount per cylinder in the intake valve position of the diesel engine 1.

$$Rqec = Mqec \cdot Kkin + Rqec_{n-1} \cdot (1 - Kkin) \tag{10}$$

where, $Rqec_{n-1}$ = *Rqec* calculated on the immediately preceding occasion the routine was performed.

In a next step S25, advance processing is performed by the following equation (11) using the intermediate value *Rqec* and required EGR amount *Mqec,* to calculate a target EGR amount *Tqec* per cylinder in the position of the EGR valve 6.

$$Tqec = GKQEC \cdot Mqec - (GKQEC - 1) \cdot Rqec_{n-1} \tag{11}$$

FIG. 22 shows the routine for calculating the EGR amount feedback correction coefficient *Kqac00,* an EGR flow velocity feedback correction coefficient *Kqac0,* and an EGR flow velocity learning correction coefficient *Kqac.*

This routine is performed in synchronism with the REF signal.

The EGR amount feedback correction coefficient *Kqac00* read in a step S231 of FIG. 37 is calculated by this routine.

First, in a step S131, the controller 41 first reads the target intake fresh air amount *tQac,* cylinder intake fresh air amount *Qac,* engine rotation speed *Ne* and target fuel injection amount *Qsol.*

In a step S132, a delay processing value *tQacd* of the target intake fresh air amount *tQac* is calculated using the following equation (12), from the target intake fresh air amount *tQac* and the time constant inverse value *Kkin* calculated by the routine of FIG. 15.

$$tQacd = tQac \cdot Kkin \cdot KQA\# + tQacd_{n-1} \cdot (1 - Kkin \cdot KQA\#) \tag{12}$$

where, *KQA#*= constant, and
$tQacd_{n-1}$ = *tQacd* calculated on the immediately preceding occasion
when the routine was executed.

In a following step S133, a feedback control permission flag *fefb,* a learning permission flag *felrn* and a learning value reflection permission flag *felrn2* which are related to the control of the EGR valve opening are read.

These flags are set by the independent routines shown in FIG. 23, FIG. 24 and FIG. 25, respectively.

FIG. 23 shows the routine for setting the feedback control permission flag *fefb.* This routine is performed at an interval of ten milliseconds.

Referring to FIG. 23, firstly in a step S271, the controller 41 reads the engine rotation speed *Ne,* target fuel injection amount *Qsol,* real EGR rate *Megrd* and water temperature *Tw.*

In subsequent steps S152-S155, the EGR amount feedback control conditions are determined.

In the step S152, it is determined whether or not the real EGR rate *Megrd* exceeds a predetermined value *MEGRFB#.* The predetermined value *MEGRFB#* is a value for checking that exhaust gas recirculation is actually performed. In the step S 153, it is determined whether or not the cooling water temperature *Tw* exceeds a predetermined value *TwFBL#.* The predetermined value *TwFBL#* is set to 30°C. In a step S154, it is determined whether or not the target fuel injection amount *Qsol* exceeds a predetermined value *QSOLFBL#.*

The predetermined value *QSOLFBL#* is a value for checking that the diesel engine 1 is not in a fuel cut state. In a step S155, it is determined whether or not the engine rotation speed *Ne* exceeds a predetermined value *NeFBL#.* The predetermined value *NeFBL#* is a value for checking that the vehicle is not in a low-speed region where the diesel engine 1 stops rotation.

When all of the conditions of step S152-S155 are satisfied, the routine proceeds to a step S156 and increments a timer value *Ctrfb.*

In a following step S158, it is determined whether or not the timer value *Ctrfb* is greater than a predetermined value *TMRFB#.* The predetermined value *TMRFB#* is set to, for example, a value less than one second. When the result of this determination is affirmative, the routine sets the feedback control permission flag *fefb* to one in a step S159, and the routine is terminated.

On the other hand, if any of the conditions of the steps S152-S155 is not satisfied, in a step S157, the routine resets the timer value *Ctrfb* to zero, and proceeds to a following step S160.

When the determination of the step S158 is negative, the routine also proceeds to the step S160.

In the step S160, the feedback control permission flag *fefb* is reset to zero and the routine is terminated.

According to this routine, the feedback control permission flag *fefb* is set to one only when the state where all of the conditions of the steps S152-S155 were satisfied, continues for a time exceeding the predetermined value *TMRFB#,* and in other cases, the feedback control permission flag *fefb* is reset to zero.

FIG. 24 shows a routine for setting the learning value reflection permission flag *felrn2.* This routine is also performed at an interval of ten milliseconds.

Referring to FIG. 24, firstly in a step S161, the controller 41 reads the engine rotation speed *Ne,* target fuel injection amount *Qsol,* real EGR rate *Megrd* and cooling water temperature *Tw.*

In subsequent steps S162-S165, EGR amount learning value reflection conditions are determined.

In the step S162, it is determined whether or not the real EGR rate *Megrd* exceeds a predetermined value *MEGRLN2#.* The predetermined value *MEGRLN2#* is a value for checking that exhaust gas recirculation is actually performed. In the step S163, it is determined whether or not the cooling water temperature *Tw exceeds* a predetermined value *TwLNL2#.* The predetermined value *TwLNL2#* is set to 20°C. In the step S164, it is determined whether or not the target fuel injection amount *Qsol* exceeds a predetermined value *QSOLLNL2#.* The predetermined value *QSOLLNL2#* is a value for checking that the diesel engine 1 is not in a fuel cut state. In the step S165, it is determined whether or not the engine rotation speed *Ne* exceeds a predetermined value *NeLNL2#.* The predetermined value *NeLNL2#* is a value for checking that the vehicle is not in a low-speed region where the diesel engine 1 stops rotation.

Only when all of the conditions of step S162-S165 are satisfied, the routine proceeds to a step S166 and increments a timer value *Ctrln2.*

In the following step S168 it is determined whether or not the timer value *Ctrln2* exceeds a predetermined value *TMRLN2#.* The predetermined value *TMRLN2#* is set to 0.5 seconds. When the result of this determination is affirmative, the routine sets the learning value reflection permission flag *felrn2* to one in a step S169, and the routine is terminated.

On the other hand, when any of the conditions of the steps S162-S165 is not satisfied, in a step S167, the routine resets the timer value *Ctrln2* to zero, and proceeds to a following step S170. When the determination of the step S168 is negative, the routine also proceeds to the step S170.

In the step S170, the learning value reflection permission flag *felrn2* is reset to zero and the routine is terminated.

FIG. 25 shows the routine for setting the learning permission flag *felrn.* This routine is also performed at an interval of ten milliseconds.

Referring to FIG. 25, firstly in a step S171, the controller 41 reads the engine rotation speed *Ne*, target fuel injection amount *Qsol,* real EGR rate *Megrd,* and water temperature *Tw.*

In subsequent steps S172-S177, the EGR amount learning permission conditions are determined.

In the step S172, it is determined whether or not the real EGR rate *Megrd* exceeds a predetermined value *MEGRLN#.* The predetermined value *MEGRLN#* is a value for checking that exhaust gas recirculation is actually performed. In the step S173, it is determined whether or not the cooling water temperature *Tw* exceeds a predetermined value *TwLNL#.* The predetermined value *TwLNL#* is set to 70-80°C. In the step S174, it is determined whether or not the target fuel injection amount *Qsol* exceeds a predetermined value *QSOLLNL#.* The predetermined value *QSOLLNL#* is a value for checking that the diesel engine 1 is not in a fuel cut state. In the step S175, it is determined whether or not the engine rotation speed *Ne* exceeds a predetermined value *NeLNL#.* The predetermined value *NeLNL#* is a value for checking that the vehicle is not in a low-speed region where the diesel engine 1 stops rotation. In the step S176, it is determined whether or not the feedback control permission flag *fefb* is one. In the step S177, it is determined whether or not the learning value reflection permission flag *felrn2* is one.

Only when all of the conditions of the steps S172-S177 are satisfied, the routine proceeds to a step S178 and increments a timer value *Ctrln.*

In a following step S180, it is determined whether or not the timer value *Ctrln* exceeds a predetermined value *TMRLN#.* The predetermined value *TMRLN#* is set to four seconds. When the result of this determination is affirmative, the routine sets the learning permission flag *felrn* to one in a step S181, and the routine is terminated. On the other hand, if any of the conditions of the steps S172-S177 are not satisfied, in a step S179, the routine resets the timer value *Ctrln* to zero, and proceeds to a following step S182. The routine also proceeds to the step S182 when the determination of the step S180 is negative. In the step S182, the learning permission flag *felrn* is reset to zero, and the routine is terminated.

Referring again to FIG. 22, after reading this feedback control permission flag *fefb,* learning value reflection permission flag *felrn2* and learning permission flag *felrn,* in a step S134, the controller 41 determines whether or not the feedback control permission flag *fefb* is one.

When the feedback control permission flag *fefb* is one, after calculating the feedback correction coefficient *Kqac00* of the EGR amount in a step S135, and the feedback correction coefficient *Kqac0* of the EGR valve flow velocity *Cqe* in a step S136, the controller 41 proceeds to a step S139.

On the other hand, when the feedback control permission flag *fefb* is not one in the step S134, the controller 41 sets the feedback correction coefficient *Kqac00* of the EGR amount to one in a step S137, sets the feedback correction coefficient *Kqac0* to one in a following step S138, and then proceeds to the step S139.

Now, the calculation of the feedback correction coefficient *Kqac00* of the EGR amount performed in the step S135 and the calculation of the feedback correction coefficient *Kqac0* of the EGR velocity performed in the step S136, will be described.

The calculation of the feedback correction coefficient *Kqac00* of the EGR amount is performed by a subroutine of FIG. 26.

Referring to FIG. 26, in a step S191, the controller 41 first reads the delay processing value *tQacd* of the target intake fresh air amount, cylinder intake fresh air amount *Qac,* engine rotation speed Ne, target fuel injection amount Qsol and the cooling water temperature Tw. The delay processing value *tQacd* is a value calculated in the step S132 of FIG. 22.

In a step S192, a correction gain *Gkfb* of the EGR flowrate is calculated by looking up a map shown in FIG. 27 previously stored in the memory of the controller 41, based on the engine rotation speed *Ne* and the target fuel injection amount *Qsol.* In a following step S193, a water temperature correction coefficient *Kgfbtw* of the correction gain is calculated by looking up a map shown in FIG. 28 previously stored in the memory of the controller 41, based on the cooling water temperature *Tw.*

In a final step S194, the feedback correction coefficient *Kqac00* of the EGR amount is calculated by the following equation (13), using the correction gain *Gkfb* and the water temperature correction coefficient *Kgfbtw.*

$$Kqac00 = (tQacd / Qac - 1) \cdot Gkfb \cdot Kgfbtw + 1 \qquad (13)$$

*(tQacd/Qac-1),* the first term on the right hand side of equation (13), is an error ratio of the target intake fresh air amount delay processing value *tQacd* relative to the cylinder intake fresh air amount *Qac.* Therefore, the feedback correction coefficient *Kqac00* of the EGR amount is a value centered on one.

The calculation of the feedback correction coefficient *Kqac0* of the EGR valve flow velocity is performed by a subroutine shown in FIG. 29.

Referring to FIG. 29, in a step S201, the controller 41 first reads the delay processing value *tQacd,* cylinder intake fresh air amount *Qac*, engine rotation speed *Ne*, target fuel injection amount *Osol* and the cooling water temperature *Tw.*

In a step S202, a correction gain *Gkfbi* of the EGR valve flow velocity is calculated by looking up a map shown in FIG. 30 previously stored in the memory of the controller 41, based on the engine rotation speed *Ne* and the fuel injection amount *Qsol.*

In a step S203, a water temperature correction coefficient *Kgfbitw* of the correction gain is calculated by looking up a map shown in FIG. 31 previously stored in the memory of the controller 41, based on the cooling water temperature *Tw.*

In a following step S204, an error ratio *Rqac0* is calculated by the following equation (14), using the correction gain *Gkfbi* and the water temperature correction coefficient *Kgfbitw.*

$$Rqac0 = (tQacd / Qac - 1) \cdot Gkfbi \cdot Kgfbitw + Rqac0_{n-1} \quad (14)$$

where, $Rqac0_{n-1}$ = *Rqac0* calculated on the immediately preceding occasion the subroutine was executed.

In a following step S205, by adding one to the error ratio *Rqac0,* the EGR flow velocity feedback correction coefficient *Kqac0* is calculated. Therefore, the feedback correction coefficient *Kqac0* of the EGR valve flow velocity is a value proportional to the integral of the error ratio.

Now, referring again to FIG. 22, after setting the feedback correction coefficient *Kqac00* of the EGR amount and the feedback correction coefficient *Kqac0* of the EGR valve flow velocity, in the step S139, the controller 41 determines whether or not the learning value reflection permission flag *felrn2* is one.

When the learning value reflection permission flag *felrn2* is one, i.e., when reflection in EGR amount control of the learning value is permitted, in a step S140, the controller 41 reads the error ratio learning value *Rqacn* by looking up a map shown in FIG. 32 previously stored in the memory of the controller 41, based on the engine rotation speed *Ne* and the target fuel injection amount *Qsol.* In a next step S141, the EGR flow velocity learning correction coefficient *Kqac* is calculated by adding one to the error ratio learning value *Rqacn.*

When the learning value reflection permission flag *felrn2* is not one in the step S139, the controller 41 sets the EGR flow velocity learning correction coefficient *Kqac* to one in a step S142.

After the processing of the step S141 or step S142, in a step S143, the controller 41 determines whether or not the learning permission flag *felrn* is one.

When the learning permission flag *felrn* is one, in a step S144, the controller 41 subtracts one from the EGR flow velocity feedback correction coefficient *Kqac0* to calculate the current value *Rqacp* of the error ratio. In a following step S146, the learning value is updated using the subroutine of FIG. 33, and the routine is terminated.

When the learning permission flag *felrn* is not one, in a step S145, the controller 41 resets the current value *Rqacp* of the error ratio to zero, and terminates the routine of FIG. 22.

Next, the updating of the learning value performed in the step S146 will be described.

Referring to FIG. 33, in a step S211, the controller 41 first reads the engine rotation speed *Ne,* target fuel injection amount *Qsol* and error ratio *Rqacp* calculated in the step S144 of FIG. 22.

In a step S212, a learning rate *Tclrn* is calculated by looking up a map shown in FIG. 34 previously stored in the memory of the controller 41, based on the engine rotation speed *Ne* and target fuel injection amount *Qsol.*

In a step S213, the error ratio learning value *Rqacn* is calculated by looking up the aforesaid map of FIG. 32, based on the engine rotation speed *Ne* and target fuel injection amount *Qsol.*

In a following step S214, weighted average processing by the following formula (15) is added to the error ratio *Rqacp* read in the step S211, and updating of the error ratio learning value is performed.

$$Rqacn(new) = Rqacp \cdot Tclrn + Rqacn(old) \cdot (1 - Tclrn) \quad (15)$$

where, *Rqacn(new)* = error ratio learning value *Rqacn* to be written on the map,
*Rqacp* = error ratio read in the step S211, and
*Rqacn(old)* = error ratio learning value *Rqacn* read from the map in the step S213.

In a next step S215, the stored value of the map of FIG. 32 is overwritten using the error ratio learning value *Rqacn(new)* calculated in this way.

By terminating the subroutine of FIG. 33, the controller 41 terminates the processing of the routine of FIG. 22.

Next, referring to FIG. 35, a routine for calculating the EGR valve flow velocity *Cqe* will be described.

First, in a step S221, the controller 41 reads the real EGR amount *Qec*, real EGR rate *Megrd* and cylinder intake fresh air amount *Qac.*

In a next step S222, the controller 41 reads the feedback correction coefficient *Kqac0* of the EGR valve flow velocity and EGR flow velocity learning correction coefficient *Kqac.*

In a next step S223, a corrected real EGR amount *Qec_h* is calculated by the following equation (16)

$$Qec_h = Qec \cdot Kqac \cdot Kqac0 \quad (16)$$

In steps S224-S227, an initial value of the corrected real EGR amount *Qec_h* when EGR operation begins, is set. In the step S224, it is determined whether or not the corrected real EGR amount *Qec_h* is zero. When *Qec_h* is zero, i.e. when EGR is not operating, the corrected real EGR amount *Qec_h* is set by the following equation (17) in a step S225, and the routine proceeds to a step S226. When the corrected real EGR amount is not zero in the step S224, the routine bypasses the step S225 and proceeds to the step S226.

$$Qec_h = Qac \cdot MEGRL\# \tag{17}$$

where, *MEGRL#* = constant.

In the step S226, it is determined whether or not the real EGR rate *Megrd* is zero. When the real EGR rate *Megrd* is zero, the real EGR rate *Megrd* is set equal to the constant *MEGRL#* in the step S227, and the routine proceeds to a step S228. When the real EGR rate *Megrd* is not zero, the routine bypasses the step S227 and proceeds to the step S228.

When the EGR valve 6 is fully closed, the EGR valve flow velocity of the EGR valve 6 is zero, and equations (16) and (17) are equations for setting the initial value of parameters used for flow velocity calculations when EGR operation starts, i.e., when the EGR valve 6 begins to open. The constant *MEGRL#* may be set to, for example, 0.5.

The differential pressure upstream and downstream of the EGR valve 6 when EGR operation starts is different according to the running conditions of the diesel engine 1, and as a result, the EGR valve flow velocity when EGR operation starts also differs. The differential pressure upstream and downstream of the EGR valve 6 when the EGR valve 6 begins to open; depends on the cylinder intake fresh air amount *Qac.* Thus, the calculation precision of the EGR valve flow velocity when EGR operation starts, can be improved by making the initial value of *Qec_h* directly proportional to the cylinder intake fresh air amount *Qac* by equation (17).

Now, in the step S228, the controller 41 calculates the EGR valve flow velocity *Cqe* by looking up a map shown in FIG. 36 which is previously stored in the memory of the controller 41, based on the corrected real EGR amount *Qec_h* and real EGR rate *Megrd,* and the routine is terminated.

In the step S231 of FIG. 37, the target EGR amount *Tqec* per cylinder in the position of the EGR valve 6, the EGR amount feedback correction coefficient *Kqac00* and the EGR valve flow velocity *Cqe* which were calculated by the above separate routines, are read.

In a next step S232, the target EGR amount *Tqec* per cylinder in the position of the EGR valve 6 is converted into a target EGR amount *Tqek* per unit time by the following equation (18).

$$Tqek = Tqec \cdot \frac{\left(\dfrac{Ne}{KCON\#}\right)}{Kqac00} \tag{18}$$

where, *Kqac00* = EGR amount feedback correction coefficient.

In a step S233, the target opening area *Aev* of the EGR valve 6 is calculated by the following equation (19), and the routine is terminated.

$$Aev = \frac{Tqek}{Cqe} \tag{19}$$

The target opening area *Aev* of the EGR valve 6 thus obtained is changed into a lift amount of the EGR valve 6 by searching a map having the contents shown in FIG. 5 which is prestored in the controller 41.

The controller 41 outputs a duty control signal to the pressure control valve 56 so that the lift amount of the EGR valve 6 coincides with this value.

On the other hand, control of the supercharging pressure of the turbocharger 50 is performed by varying the opening rate of the variable nozzle 53 by outputting a signal representing a duty value *Dtyvnt* to the pressure control valve 56.

The routine for calculating the duty value *Dtyvnt* used for this control will now be described referring to FIG.

38. This routine is performed every ten milliseconds. This routine comprises various subroutines.

First, in a step S241, the controller 41 performs an overboost determining flag setting subroutine shown in FIG. 39.

Here, overboost means a phenomenon wherein the real supercharging pressure exceeds a supercharging limit when the pressure actuator 54 is moved in the closing direction of the variable nozzle 53, i.e., the direction in which the supercharging pressure increases, relative to a change of running conditions of the diesel engine 1. The supercharging limit is a limit above which the supercharging pressure does not increase the performance of the engine 1.

Referring to FIG. 39, in a step S251, the controller 41 first reads an engine rotation speed *Ne,* target fuel injection amount *Qsol,* cylinder intake fresh air amount *Qac,* these values $Ne_{n-k}$, $Qsol_{n-k}$ and $Qac_{n-k}$ when the subroutine was performed on *k* preceding occasions, and the real EGR rate *Megrd.*

In a step S252, a cylinder intake gas amount *Qcyl* (mg) per one stroke cycle of the diesel engine 1 is calculated by the following equation (20) using the cylinder intake fresh air amount *Qac* and real EGR rate *Megrd.*

$$Qcyl = Qac \cdot \left(1 + \frac{Megrd}{100}\right) \quad (20)$$

The second term $Qac \cdot \frac{Megrd}{100}$ on the right-hand side of equation (20) is the real EGR amount, and the value obtained by adding this real EGR amount to the cylinder intake fresh air amount *Qac* is the gas amount aspirated per stroke cycle by one cylinder of the diesel engine.

The real EGR amount *Qec* calculated by the routine of FIG. 21 may be used as the real EGR amount. In this case, $Qcyl=Qac+Qec$.

In a step S253, the real exhaust gas amount *Qexh* per stroke cycle (mg) is calculated by the following equation (21).

$$Qexh = (Qac + Qsol \cdot GKQFVNT\#) \cdot \frac{Ne}{KCON\#} \quad (21)$$

where, *GKQFVNT#=* scale factor (mg/mm$^3$), and
*KCON#=* constant.

Here, the difference in the temperature of intake air and exhaust gas is disregarded, and the sum total of the exhaust gas due to combustion of the fuel of the target fuel injection amount *Qsol* and the cylinder intake fresh air amount *Qac* is considered to be the exhaust gas amount.

The unit of the target fuel injection amount *Qsol* is (mm$^3$), and this is converted into mass by multiplying by the conversion factor *GKQFVNT#.* Further, the mass per stroke cycle (mg) is converted into a mass per second (g) by multiplying by $\frac{Ne}{KCON\#}$.

In a step S254, the difference of engine rotation speed *Ne,* target fuel injection amount *Qsol,* cylinder intake fresh air amount *Qac* and the values $Ne_{n-k}$, $Qsol_{n-k}$ and $Qac_{n-k}$ when the subroutine was performed *k* occasions ago , is calculated as an engine rotation speed variation *DNE,* fuel injection amount variation amount *DQSOL* and cylinder intake fresh air amount variation *DQAC,* respectively.

In steps 255-S257, based on these values, it is determined whether or not overboost will occur.

In the step S255, it is determined whether or not the engine rotation speed *Ne* is larger than a predetermined value *KNEOB#,* and the engine rotation speed variation *DNE* is larger than a predetermined value *KDNEOB#.*

In the step S256, it is determined whether or not the target fuel injection amount *Qsol* is larger than a predetermined value *KQFOB#,* and whether a fuel injection variation amount *DQSOL* is larger than a predetermined value *KDQFOB#.*

In the step S257, it is determined whether the cylinder intake fresh air amount *DQAC* is larger than a predetermined value *KDQACOB#.*

If any of the conditions of the steps 255-S257 are satisfied, it is considered that overboost occurs. In this case, the subroutine proceeds to a step S261.

On the other hand, when all the determination results of the steps S255-S257 are negative, the subroutine proceeds to a step S258.

Here, the controller 41 calculates a corresponding overboost determining intake gas amount *TQcyl* referring to a map having the contents shown in FIG. 41 which is prestored in the controller 41, based on a real exhaust gas amount *Qexh* calculated in the step S253.

In FIG. 41, the overboost determining intake gas amount *TQcyl* has a substantially convex-shaped pattern relative to the real exhaust gas amount *Qexh.*

This characteristic will be described referring to FIG. 42.

This diagram shows the relation of the real exhaust gas amount *Qexh,* pressure ratio *Pm*/*Pa* and effectiveness η of the turbocharger taking the pressure of the intake manifold 3B as *Pm,* and atmospheric pressure as *Pa.*

The effectiveness η is equivalent to a fresh air amount, and the higher the effectiveness η, the more the fresh air amount aspirated by the diesel engine 1 from the intake passage 3 increases.

When the real exhaust gas amount *Qexh* increases as shown in this figure, the effectiveness increases up to a certain region under the same pressure ratio *Pm*/*Pa,* but if the real exhaust gas amount *Qexh* increases beyond this region, the effectiveness η will fall.

In FIG. 41, the overboost determining intake gas amount *TQcyl* changes to a convex type for reflecting the above-mentioned characteristics of the effectiveness η. Also, in the map of FIG. 41, for the same real exhaust gas amount *Qexh,* the overboost determining intake gas amount *TQcyl* takes a smaller value the lower the atmospheric pressure.

Now, In the step S259, it is determined whether or not the cylinder intake gas amount *Qcyl* (mg) per stroke cycle of the diesel engine 1 calculated in the step S252is higher than the overboost determining intake gas amount *TQcyl.* When this condition is satisfied, the subroutine proceeds to a step S261.

In the step S261, the overboost determining flag *FOVBT* is set to one, an overboost timer *TMROB* is reset to zero in the following step S262, and the subroutine is terminated.

On the other hand, in the step S259, when the cylinder intake gas amount *Qcyl* (mg) per stroke cycle of the diesel engine lis less than the overboost determining intake gas amount Tqcyl, the subroutine resets the overboost determining flag *FOVBT* to zero in a step S260, and the routine is terminated. Here, *FOVBT=1* shows that control of overboost is required, and *FOVBT=0* shows that there is no possibility of overboost.

The overboost determining flag *FOVBT* is used for suppression in a subroutine for setting the target opening rate *Rvnt* of the variable nozzle 53 of the turbocharger 50 described later.

The overboost timer *TMROB* shows the elapsed time after the overboost determining flag *FOVBT* changes to one from zero.

The change of the accelerator opening *CI* and the overboost determining flag *FOVBT* will now be described, referring to FIG. 40A-40E.

When the accelerator pedal is sharply depressed as shown in FIG. 40A, firstly, the target fuel injection amount *Qsol* changes as shown in FIG. 40B, the engine rotation speed *Ne* changes as shown in FIG. 40C, and the cylinder intake fresh air amount *Qac* changes as shown in FIG. 40D.

According to the subroutine of FIG. 39, whenever the target fuel injection amount *Qsol,* engine rotation speed *Ne* or cylinder intake fresh air amount *Qac* vary largely, the overboost determining flag *FOVBT* is set to one.

If determination of overboost is performed depending only on the cylinder intake fresh air amount *Qac,* the suppression operation may be too late for generation of the overboost, hence according to this invention, the delay in the determination is prevented by adding the target fuel injection amount *Qsol* and engine rotation speed *Ne*, which have an earlier reaction, to the basis for determination of overboost.

In FIGs.40A-40E, a smoke limit is introduced in the target fuel injection amount *Qsol.*

That is, as the change in the cylinder intake fresh air amount *Qac* is late for the change of accelerator opening, if the target fuel injection amount *Qsol* is made to increase rapidly according to the change of accelerator opening, smoke will be produced.

Hence, a restriction is applied to the amount of increase of the target fuel injection amount *Qsol.* This restriction is the smoke limit, and the increase in the target fuel injection amount *Qsol* is separated into two phases in FIG. 40B due to the smoke limit.

Now, referring again to FIG. 38, the controller 41 sets a suppression release flag *FCLROB* by a subroutine shown in FIG. 43 in a step S242.

The suppression release flag *FCLROB* is introduced due to the following reasons.

Overboost suppression is performed over a predetermined time.

After the predetermined time passes, when the variable nozzle 53 is immediately driven in the closing direction and the supercharging pressure is increased, it may give rise to overboost.

Hence, the suppression release flag *FCLROB* is introduced, and as shown in FIGs.44A and 44B, when the overboost determining flag *FOVBST* changes from one through zero, the suppression release flag *FCLROB* is changed over from zero to one.

The opening of the variable nozzle 53 is slowly returned to the opening before the suppression of overboost took place in the period when the suppression release flag *FCLROB* is one.

The above control will be described referring to FIG. 43.

In a step S271, the controller 41 determines whether or not the overboost timer *TMROB* is below a predetermined suppression period *TTMROB,* or whether or not the overboost determining flag *FOVBST* is one

When either of the above conditions is satisfied, it is considered that overboost suppression control is underway.

In this case, in a step S274, the subroutine continues the state wherein the overboost determining flag *FOVBST*=1*,* and the subroutine is terminated.

When neither of the conditions of step S271 is satisfied, it is considered that overboost suppression control is not being performed. In this case, the subroutine proceeds to a step S272.

In the step S272, the overboost determining flag *FOVBST* is reset to zero, and an overboost clear timer *TMRCLROB* is reset to zero in a following step S273.

The overboost clear timer *TMRCLROB* shows the elapsed time after the overboost determining flag *FOVBST* changes to zero from one.

In a following step S275, it is determined whether or not the overboost clear timer *TMRCLROB* is less than a predetermined suppression release period *TTMRCLROB.*

When the determination result of the step S275 is affirmative, the subroutine proceeds to a step S277, and when it is negative, the subroutine proceeds to a step S276.

In the step S277, the suppression release flag *FCLROB* is set to one, and the subroutine is terminated.

In the step S276, the suppression release flag *FCLROB* is reset to zero, and the subroutine is terminated.

When the suppression release flag *FCLROB* is reset to zero, overboost suppression control is terminated and normal operation of the diesel engine 1 is performed thereafter.

On the other hand, immediately after resetting the overboost determining flag *FOVBST* to zero in the step S272, the determination result of the step S275 must be affirmative, and the suppression release flag *FCLROB* changes from zero to one due to operation in the step S277 at this time.

The suppression period *TTMROB* used in the step S271 is calculated by the separate routine shown in FIG. 45. Also, the suppression release period *TTMRCLROB* used in step S275 is calculated by the separate routine shown in FIG. 48. Each of these separate routines is performed every ten milliseconds.

First, referring to FIG. 45, the controller 41 calculates a suppression period basic value *TTMROBO* by looking up a map shown in FIG. 46 from the engine rotation speed variation *DNE* and fuel injection variation amount *DQSOL* in a step S281.

In a following step S282, a correction coefficient *KTMROB* of the suppression period is calculated referring to a prestored map in the controller 41 whereof the contents are shown in FIG. 47.

The correction coefficient *KTMROB* of suppression period is set based on the difference of the cylinder intake fresh air amount variation *DQAC,* cylinder intake gas amount *Qcyl,* and overboost determining intake gas amount *TQcyl.*

In a step S283, the suppression period *TTMROB* is calculated by multiplying the suppression period basic value *TTMROBO* by the correction coefficient *KTMROB.*

The engine rotation speed variation *DNE,* the fuel injection variation amount *DQSOL* and the cylinder intake fresh air amount variation *DQA* are calculated by the same method as that of the step S254 of FIG. 39.

The cylinder intake gas amount *Qcyl* is calculated by the same method as that of the step S252 of FIG. 39.

The overboost determining intake gas amount *TQcyl* is calculated by the same method as that of the step S258 of FIG. 39.

In FIG. 46, the reason why the suppression period basic value *TTMROB0* is increased the larger the engine rotation speed variation *DNE* or the cylinder intake fresh air amount variation *DQAC,* is because overboost occurs more easily the larger the variation of the engine rotation speed *Ne* or the target fuel injection amount *Qsol* which represent the engine load.

In FIG. 47, the reason why the correction coefficient *KTMROB* is increased the larger the cylinder intake fresh air amount variation *DQAC* or the difference between the cylinder intake gas amount *Qcyl* and the overboost determining intake gas amount Tqcyl, is because overboost occurs more easily the larger the cylinder intake fresh air amount variation *DQAC* or the difference between the cylinder intake gas amount Ocyl and the overboost determining intake gas amount *TQcyl.*

Next, referring to FIG. 48, the suppression release period basic value TTMRCLR is calculated in a step S291 from the atmospheric pressure *Pa* detected by the atmospheric pressure sensor 38 and a prestored map in the controller 41 whereof the contents are shown in FIG. 49.

In FIG. 49, the reason why the suppression release period basic value *TTMRCLROB0* is increased the lower the atmospheric pressure *Pa,* is as follows.

The exhaust gas amount of the diesel engine 1 is larger, the larger the difference of the exhaust pressure and atmospheric pressure.

If the exhaust pressure is fixed, the exhaust gas amount is larger the lower the atmospheric pressure *Pa*. The work which the turbocharger 50 performs also becomes large, and it becomes easy to produce an overboost.

Hence, the suppression release period basic value *TTMRCLROB0* is increased the lower the atmospheric pressure *Pa.* A typical condition under which the atmospheric pressure *Pa* is low, is running on high ground.

In a following step S292, the suppression release period correction coefficient *KTMRCLROB* is calculated from the real exhaust gas amount *Qexh,* referring to a prestored map in the controller 41 whereof the contents are shown in FIG. 50.

In FIG. 50, when the real exhaust gas amount *Qexh* increases beyond a certain level, the correction coefficient *KTMRCLROB* increases because it becomes easy to generate an overboost from this level.

In a following step S293, the suppression release period *TTMRCLROB* is calculated by multiplying the suppression release period basic value *TTMRCLROBO* by the suppression release period correction coefficient *KTMRCLROB.*

Referring again to FIG. 38, after setting the suppression release flag *FCLROB* in the step S242, the controller 41 determines the target opening rate *Rvnt* of the variable nozzle 53 using a subroutine shown in FIG. 51 in the step S243.

The opening rate of the variable nozzle 53 is a numerical value which expresses, as a percentage, the ratio of the opening cross-sectional area to the opening cross-sectional area when the variable nozzle 53 is fully open.

In the fully open state, the opening rate is 100%, and in the closed state, the proportion is 0%. Although the opening rate is used as a general value to represent the opening of the variable nozzle 53 regardless of the relation with the capacity of the turbocharger 50, it is of course also possible to replace the opening rate by the opening area.

The turbocharger 50 used with this device is so constructed that the supercharging pressure is higher the smaller the opening rate of the variable nozzle 53. When the variable nozzle 53 is fully open, the supercharging pressure is a minimum, and when the variable nozzle 53 is fully closed, the supercharging pressure is a maximum, for a given exhaust gas amount.

Now, referring to FIG. 51, firstly in a step S301, the controller reads the target intake fresh air amount *tQac,* real EGR amount *Qec,* engine rotation speed *Ne,* target fuel injection amount *Qsol* and target EGR rate *Megr.*

In a following step S302, an intake fresh air amount equivalent value *tQas0* for calculating the target opening rate *Rvnt* of the variable nozzle 53 is calculated by the following equation (22).

$$tQas0 = (tQac + Qsol \cdot QFGAN\#) \cdot \frac{Ne}{KCON\#} \qquad (22)$$

where, *QFGAN#=* gain, and
*KCON#=* constant.

In a following step S303, an EGR amount equivalent value *Qes0* for calculating the target opening rate *Rvnt* of the variable nozzle 53 is calculated by the following equation (23).

$$Qes0 = (Qec + Qsol \cdot QFGAN\#) \cdot \frac{Ne}{KCON\#} \qquad (23)$$

In equations (22) and (23), *Ne*/*KCON#* is a multiplier for changing the fresh air amount or the EGR amount per cylinder into a value per unit time.

Also, in equations (22) and (23), *Qsol x QFGAN#* is added to the target intake fresh air amount *tQac* or the real EGR amount *Qec* for changing the target opening rate *Rvnt* according to the load of the diesel engine 1.

Herein, the target fuel injection amount *Qsol* is considered to represent the engine load, and the effect of the engine load is adjusted by the gain *QFGAN#.*

In the following description, *tQasO* calculated in this way is referred to as a set intake fresh air amount equivalent value, and *Qes0* is referred to as a set EGR amount equivalent value.

In a following step S304, it is determined whether or not the target EGR rate *Megr* is greater than a predetermined value *KEMRAVV#.*

The predetermined value *KEMRAV#* is a value for determining from the target EGR rate *Megr* whether or not exhaust gas recirculation is actually performed.

When the target EGR rate *Megr* is larger than the predetermined value *KEMRAV#,* it is determined whether or not the overboost determining flag *FOVBST* is one in a step S305.

When the target EGR rate *Megr* is less than the predetermined value *KEMRAV#,* it is determined whether or not the overboost determining flag *FOVBST* is one in a step S306.

When the target EGR rate *Megr* is larger than the predetermined value *KEMRAV#* and the overboost determining flag *FOVBST* is one, it indicates that exhaust gas recirculation is performed and overboost suppression is required. In this case, the subroutine proceeds to a step S307.

In the step S307, based on the set intake fresh air amount equivalent value *tQas0* and the set EGR amount equivalent value *Qes0,* the target opening rate basic value *Rvnt0* of the variable nozzle 53 is calculated by looking up a map prestored in the controller 41 whereof the contents are shown in FIG. 52.

When the target EGR rate *Megr* is larger than the predetermined value *KEMRAV#* and the overboost determining flag *FOVBST* is not one, it indicates that exhaust gas recirculation is performed but overboost suppression is not required. In this case, the subroutine proceeds to a step S308.

In the step S308, based on the set intake fresh air amount equivalent value *tQas0* and the set EGR amount equivalent value *Qes0,* the target opening rate basic value *Rvnt0* of the variable nozzle 53 is calculated by looking up a map prestored in the controller 41 whereof the contents are shown in FIG. 53.

In the maps of FIG. 52 and 53, the target opening rate basic value *Rvnt0* is set to decrease as the set EGR amount equivalent value *Qes0* increases, due to the following reason.

If the EGR amount increases, the fresh air amount will become less relatively. The air-fuel ratio inclines to the rich side due to reduction in the fresh air amount, and the diesel engine 1 easily generates smoke. To prevent smoke, it is necessary to increase the supercharging pressure of the turbocharger 50 and to ensure the fresh air amount. Thus, the target opening rate basic value *Rvnt0* is decreased as the EGR amount increases.

The characteristics of the maps of FIG. 52 and 53 differ depending on whether fuel cost-performance, exhaust composition or acceleration performance is stressed. These characteristics will be described referring to FIGs.59A-59C.

The diagrams of FIGs.59A-59C, show how fuel consumption, nitrogen oxides (NOx), particulates (PM) and intake fresh air amount vary relative to the opening area of the variable nozzle 53 in the case where the EGR rate is large and the case where it is small, when the engine rotation speed and engine torque are kept constant. The intake fresh air amount corresponds to the fuel injection amount, and the fuel injection amount represents the acceleration performance of the vehicle.

From these diagrams, it is seen that the opening area for minimizing fuel consumption, the opening area for optimizing exhaust composition and the opening area for maximizing acceleration performance, are different.

If fuel consumption is stressed, for example, the opening area of the variable nozzle 53 which minimizes fuel consumption is calculated for various engine speeds and engine torques, and the maps of FIG. 52, 53 are generated based on this data.

When the target EGR rate *Megr* is smaller than the determined value *KEMRAV#* in the step S304 and the overboost determining flag *FOVBST* is one in the step S306, it indicates that exhaust gas recirculation is effectively not performed but overboost suppression is required. In this case , the subroutine proceeds to a step S310. In the step S310, based on the set intake fresh air amount equivalent value *tQas0* and the target fuel injection amount *Qsol,* the target opening rate basic value *Rvnt0* of the variable nozzle 53 is calculated referring to a map prestored in the controller 41 whereof the contents are shown in FIG. 54.

When the target EGR rate *Megr* is smaller than the predetermined value *KEMRAV#* in the step S304 and the overboost determining flag *FOVBST* is not one in the step S306, it indicates that exhaust gas recirculation is effectively not performed and overboost suppression is unnecessary. In this case, the subroutine proceeds to a step S309.

In the step S309, based on the set intake fresh air amount equivalent value *tQas0* and the target fuel injection amount *Qsol,* the target opening rate basic value *Rvnt0* of the variable nozzle 53 is calculated referring to a map prestored in the controller 41 whereof the contents are shown in FIG. 55.

The maps of FIG. 52 and FIG. 54 applied during overboost suppression give a larger target opening rate basic value *Rvnt0* than the maps of FIG. 53 and FIG. 55 applied during normal running.

In order to suppress the overboost, the supercharging pressure has to be weakened, so *Rvnt0* is increased to increase the opening of the variable nozzle 53.

In the maps of FIGs. 52, 53, the target opening rate basic value *Rvnt0* is set based on the intake fresh air amount equivalent value *tQas0* and the set EGR amount equivalent value *Qes0,* but it is also possible to set the target opening rate basic value *Rvnt0* based on the target intake fresh air amount *tQac* and the real EGR amount *Qec.*

Further, it is also possible to set the target opening rate basic value *Rvnt0* based on the target intake fresh air amount *tQac* and the EGR amount *Qec0* per cylinder at the inlet of the collector 3A.

In the transient running state of the diesel engine 1, the EGR amount *Qec0* per cylinder at the inlet of the collector 3A varies in a stepwise manner, and there is a delay until the real EGR amount *Qec* catches up with the target value. Due to a deviation in the EGR amount equivalent to this delay, an error arises in the target opening rate basic value *Rvnt0.*

When the target opening rate basic value *Rvnt0* is set, by using the real EGR amount *Qec* that was obtained by performing delay processing on the EGR amount *Qec0* per cylinder at the inlet of the collector 3A, a target intake fresh air amount optimized for one of the preselected fuel consumption, discharge composition and acceleration characteristics is obtained, even when the diesel engine 1 is in a transient running state.

Thus, after calculating the target opening rate basic value *Rvnt0,* in a step S311, it is determined whether or not the suppression release flag *FCLROB* is one.

When the suppression release flag *FCLROB* is not one (i.e., when the flag *FCLROB* is zero), it shows that the current running state is not in the overboost suppression release period.

In this case, the target opening rate *Rvnt* is set equal to the target opening rate basic value *Rvnt0,* and the subroutine is terminated.

When the suppression release flag *FCLROB* is one, it shows that the current running state is in the suppression release period.

In this case, the target opening rate *Rvnt* is set by equation (24), and the subroutine is terminated.

$$Rvnt = \frac{1}{TMRCLROB\#} \cdot Rvnt0 + \left(1 - \frac{1}{TMRCLROB\#}\right) \cdot Rvnt_{n-1} \tag{24}$$

where, *TMRCLROB#* = time constant, and

$Rvnt_{n-1}$ = *Rvnt* calculated on immediately preceding occasion when the subroutine was executed.

Thus, generation of overboost is prevented by restricting the closing rate of the variable nozzle 53 by equation (24) during the suppression release period.

Referring again to FIG. 38, after determining the target opening rate *Rvnt* of the variable nozzle 53 in the step S243, in a following step S244, the controller 41 performs advance processing on the target opening rate *Rvnt* taking account of the dynamics of the intake air system using a routine shown in FIG. 60. This routine is performed at an interval of ten milliseconds.

The response delay after outputting a duty signal to the pressure control valve 56 until the intake fresh air amount changes, includes a gas flow lag depending on the turbo lag and the flowrate of intake air and exhaust gas, and the response delay of the pressure actuator 54. The time constant of the gas flow lag varies depending on the exhaust gas amount of the diesel engine 1, but the time constant of the response delay of the pressure actuator 54 is fixed.

In this control device, high control precision is obtained by calculating these delays individually and compensating each response delay individually in the control of the opening rate of the variable nozzle 53. Advance processing of the target opening rate *Rvnt* of step S244 is performed in order to compensate the gas flow lag.

The correction of the response delay of the actuator 54 is performed separately and is described later.

Referring to FIG. 60, the controller 41, in a step S321, first reads the target opening rate *Rvnt,* the delay processing value *tQacd* of the target intake fresh air amount which was calculated by the routine of FIG. 22, the target fuel injection amount *Qsol* and the engine rotation speed *Ne.* In a following step S322, the cylinder exhaust gas amount *Tqexhd* (mg) per stroke cycle of the diesel engine lis calculated by the following equation (25).

$$Tqexh = (tQacd + Qsol \cdot QFGAN\#) \cdot \frac{Ne}{KCON\#} \tag{25}$$

where, *QFGAN#=* gain, and

*KCON#=* constant.

Equation (25) is equivalent to an equation wherein the target intake fresh air amount *tQac* on the right-hand side of equation (22) is replaced by the delay processing value *tQacd* of the target intake fresh air amount.

Consequently, the cylinder exhaust gas amount *Tqexhd* per stroke cycle of the diesel engine 1 obtained instead of the set intake fresh air amount equivalent value *tQas0,* varies under a time constant set assuming variation of the actual exhaust gas amount.

Hence, the cylinder exhaust gas amount *Tqexhd* per stroke cycle of the diesel engine 1 is referred to as a real exhaust gas amount equivalent value.

FIGs.61A-61D show the variation of the set intake fresh air amount equivalent value *tQasO* and the real exhaust gas amount equivalent value *Tqexhd* when the target fuel injection amount *Qsol* is increased in steps.

It was confirmed by experiments performed by the Inventors that the variation of the real exhaust gas amount equivalent value *Tqexhd* of FIG. 61D relative to the target fuel injection amount *Qsol* of FIG. 61B closely follows the variation of the actual exhaust gas amount shown by the broken line in this figure.

In a following step S323, the target opening rate *Rvnt* is compared with an opening prediction value $Cavnt_{n-1}$ calculated on the immediately preceding occasion the routine was performed. An opening prediction value *Cavnt* is a weighted average value of the target opening rate *Rvnt.*

Here, the target opening rate *Rvnt* is a value which varies in stepwise fashion, and the opening prediction value *Cavnt* is a value which varies smoothly.

Therefore, when the target opening rate *Rvnt* is larger than $Cavnt_{n-1}$, it shows that the variable nozzle 53 is operating in the opening direction.. When the target opening rate *Rvnt* is smaller than $Cavnt_{n-1}$, it shows that the variable nozzle 53 is operating in the closing direction.

Hence, when the target opening rate *Rvnt* is larger than $Cavnt_{n-1}$, in a step S324, the routine calculates an advance correction gain *TGKVNTO* when the variable nozzle 53 operates in the opening direction from the real exhaust gas amount equivalent value *Tqexhd* referring to a map having the contents shown in FIG. 62 which is prestored in the controller 41, and sets *TGKVNTO* to an advance correction gain *Gkvnt.*

In the following step S325, the time constant equivalent value TTCVNTO of the advance correction when the variable nozzle 53 operates in the opening direction is calculated from the real exhaust gas amount equivalent value Tqexhd referring to a map having the contents shown in FIG. 64 which is prestored in the controller 41, and TTCVNTO is set as an advance correction constant equivalent value *Tcvnt.* After this processing, the routine proceeds to a step S331.

On the other hand, in the step S323, when the target opening rate *Rvnt* is not larger than $Cavnt_{n-1}$ on the immediately preceding occasion when the routine was performed, it is determined whether or not the target opening rate *Rvnt* is smaller than the opening prediction value $Cavnt_{n-1}$ in the step S326.

When the target opening rate *Rvnt* is smaller thanCavntn-1, in a step S327, the advance correction gain *TGKVNTC* when the variable nozzle 53 operates in the closing direction, is calculated from the real exhaust gas amount equivalent value *Tqexhd,* referring to a map having the contents shown in FIG. 63 which is prestored in the controller 41, and *TGKVNTC* is set as the advance correction gain *Gkvnt.*

In a next step S328, the advance correction time constant equivalent value *TTCVNTC* when the variable nozzle 53 operates in the closing direction is calculated from the real exhaust gas amount equivalent value *Tqexhd* referring to a map whereof the contents are shown in FIG. 65 which is prestored in the controller 41, and *TTCVNTC* is set to the advance correction constant equivalent value *Tcvnt.* After this processing, the routine proceeds to the step S331.

In the step S326, the case when the target opening rate *Rvnt* is not less than the estimated opening rate $Cavnt_{n-1}$, is the case when the target opening proportion *Rvnt* is equal to the estimated opening rate $Cavnt_{n-1}$. In this case, the advance correction gain *Gkvnt* is set equal to the value $Gkvnt_{n-1}$ on the immediately preceding occasion the routine was executed, in a step S329. Likewise, the advance correction time constant equivalent value *Tcvnt* is set equal to the value $Tcvnt_{n-1}$ on the immediately preceding occasion the routine was executed, in a step S330. After this processing, the routine proceeds to the step S331.

The maps of FIG. 62, FIG. 63 which determine the advance correction gains *TGKVNTO, TGKVNTC* give a smaller value the larger the real exhaust gas amount equivalent value *Tqexhd.* This is because the advance correction gain *Gkvnt* is increased the smaller the exhaust gas amount so as to compensate the fact that the gas flow lag increases the smaller the exhaust gas amount of the diesel engine 1. Further, the reason why *TGKVNTC* takes a larger value than *TGKVNTO* for the same real exhaust gas amount equivalent value Tqexhd is because the gas flow lag is larger when the variable nozzle 53 operates in the closing direction than when it operates in the opening direction, and *TGKVNTC* is set larger than *TGKVNTO* to compensate this difference.

The maps of FIG. 64, FIG. 65 which determine the time constant equivalent values TTCVNTO, *TTCVNTC,* give a larger value the larger the real exhaust gas amount equivalent value *Tqexhd.* Here, the time constant equivalent value is inversely proportional to the time constant. Specifically, the larger the real exhaust gas amount equivalent value *Tqexhd,* the more the time constant decreases. Therefore, likewise, TTCVNTO takes a larger value than *TTCVNTC* for the same real exhaust.gas amount equivalent value *Tqexhd,* i.e., the time constant when the variable nozzle 53 operates in the opening direction is less than the time constant when it operates in the closing direction.

In the step S331, the opening prediction value *Cavnt* is calculated by the following equation (26) using the target opening rate *Rvnt* and advance correction time constant equivalent value *Tcvnt.*

$$Cavnt = Rvnt \cdot Tcvnt + Cavnt_{n-1} \cdot (1 - Tcvnt) \qquad (26)$$

where, $Cavnt_{n-1}$ = *Cavnt* calculated on the immediately preceding occasion the routine was executed.

In a step S332, an open loop control amount *Avnt_f of* the opening rate of the variable nozzle 53 is calculated by the following equation (27) from the opening prediction value *Cavnt* and the target opening rate *Rvnt.*

$$Avnt_f = Gkvnt \cdot Rvnt - (Gkvnt - 1) \cdot Cavnt_{n-1} \quad (27)$$

The calculation of the steps S331, S332 is similar to the calculation of the steps S24, S25 in the routine of FIG. 6.

In a last step S333, a delay processing value *Rvnte* of the target opening rate *Rvnt* is calculated from the following equation (28).

$$Rvnte = Rvnt \cdot TCVNT\# - (TCVNT\# - 1) \cdot Rvnte_{n-1} \quad (28)$$

where, *TCVNT#* = time constant equivalent value representing the response delay of the pressure actuator 54, and $Rvnte_{n-1}$ = *Rvnte* calculated on the immediately preceding occasion the routine was executed.

The delay processing value *Rvnte* is a value taking account of the response delay of the pressure actuator 54; and corresponds to the real opening rate. In this regard, the delay processing value *Rvnte* of the opening rate *Rvnt* will be referred to as the real opening rate.

The response delay of the pressure actuator 54 is identical whether the variable nozzle 53 is closing or whether it is opening. Therefore, the time constant equivalent value *TCVNT#* is a constant. The real opening rate *Rvnte* is used for calculating a PI gain opening rate correction coefficient *Gkvavnt* and an opening rate reflection coefficient *Gkvntlav* described later.

After the controller 41 calculates the opening prediction value *Cavnt,* open loop control amount *Avnt* and the real opening rate *Rvnte* by the routine of FIG. 60 in this way, a feedback correction amount *Avnt_fb* of the opening rate and a learning value *Ravlr* related to the feedback correction amount *Avnt_fb* are calculated in a step S245 of FIG. 38. This calculation is performed by a subroutine shown in FIG. 66.

Referring to FIG. 66, in a step S601, the controller 41 first sets a feedback control permission flag *FVNFB* of the opening rate of the variable nozzle 53 by a subroutine shown in FIG. 67.

Referring to FIG. 67, in a step S341, it is determined whether or not the running condition of the diesel engine 1 corresponds to a feedback control region of the opening rate of the variable nozzle 53 referring to a map prestored in the controller 41 whereof the contents are shown in FIG. 68.

In this map, the feedback control region is all running regions excluding low load and low rotation speed regions of the diesel engine 1. The reason why feedback control of the opening rate of the variable nozzle 53 is not performed under low load and at low rotation speed is because the intake fresh air amount hardly varies relative to variation of the opening rate of the variable nozzle 53 in this region, i. e., the sensitivity of the intake fresh air amount relative to variation of the opening rate is small. Therefore, in this region, not performing feedback control of the opening rate leads to stable control of the intake fresh air amount of the diesel engine 1 and the supercharging pressure of the turbocharger 50. A hysteresis region is provided as shown in the figure between the feedback control region and non-feedback control region.

In the step S341, when the running condition of the diesel engine 1 is in the feedback control region, the subroutine determines whether or not feedback control permission conditions are satisfied for the opening rate of the variable nozzle 53, from a step S342 to a step S344.

First, in the step S342 it is determined whether or not the target EGR rate *Megr* is less than a predetermined value *KVNFBMEGR#.*

In the step S343 it is determined whether or not an immediately preceding value $FCLPVNDTY_{n-1}$ of a command opening rate clamp flag *FCLPVNDTY,* described later, is zero showing a clamp state.

In the step S344, it is determined whether or not an air flow meter fault determining flag *FDGMAF* is zero, showing the normal state. The air flow meter determining flag *FDGMAF* is set to be one by a routine not described here when the air flow meter 39 does not operate correctly.

When the determination results of all of the steps S342-S244 are affirmative , the subroutine sets the feedback control permission flag *FVNFB* of the opening rate of the variable nozzle 53 to one in a step S345 and the subroutine is terminated. When the determination result of any of the steps S342-S344 is negative, the subroutine resets the feedback control permission flag *FVNFB* of the opening rate of the variable nozzle 53 to zero in a step S356, and the subroutine is terminated.

According to the step S342, in the EGR recirculation region, the feedback control permission flag *FVNB* is reset to zero, and opening rate feedback control of the variable nozzle 53 is not performed. This is due to the following reason. In the EGR recirculation region, the opening of the EGR valve 6 is feedback controlled. Therefore, feedback control of the opening rate of the variable nozzle 53 in this region causes interference between the two feedback controls, and the value of the opening rate tends to fluctuate.

According to the step S343, when the command opening rate is clamped, feedback control of the opening rate of the variable nozzle 53 is not performed. Clamping of the command opening rate is performed when the opening rate has converged, as described hereafter. In this case, there is no need to perform feedback control of the opening rate of the variable nozzle 53.

According to the step S344 feedback control of the opening rate of the variable nozzle 53 is not performed when the air flow meter 39 has a fault. This is in order to provide a fail-safe mechanism.

After setting the feedback control permission flag *FVNFB,* the controller 41 sets a feedback gain in the step S602 of FIG. 66. This processing is performed by a subroutine shown in FIG. 69.

First, in a step S351, the delay processing value *tQacd* of the target intake fresh air amount, cylinder intake fresh air amount *Qac,* real exhaust gas amount equivalent value *Tqexhd* and real opening rate *Rvnte* are read.

In a next step S352, it is determined whether or not the feedback control permission flag *FVNFB* is one.

When the feedback control permission flag *FVNFB* is not one i.e., when feedback control of the variable nozzle 53 is not performed, a control error *Eqac* is set to zero in a step S353. When the feedback control permission flag *FVNFB* is one, i.e., when feedback control of the variable nozzle 53 is performed, a value obtained by subtracting the delay processing value *tQacd* from the cylinder intake fresh air amount *Qac* is set to the control error *Eqac* in a step S354.

In normal feedback control, the target intake fresh air amount *tQac* is a target value set according to the running conditions, but in this invention, as a response time and a response time constant are the main objects of control, the target intake air amount delay processing value *tQacd* is taken as the target value of feedback control. The difference between the cylinder intake fresh air amount *Oac* and target value *tQacd* is considered as the control error *Eqac.*

After the step S353 or the step S354, the subroutine calculates a proportional gain basic value *Gkvntp0* and integral gain basic value *Gkvnti0* by looking up maps whereof the contents are shown in FIG. 70 and FIG. 71 which are prestored in the controller 41, from the control error *Eqac.* In these maps, an insensitive region is provided around the value zero of *Eqac* so that the feedback control does not fluctuate in the vicinity of the target value.

In a following step S356, an exhaust gas amount correction coefficient *Gkvqexh* of the proportional gain and integral gain is calculated by looking up a map whereof the contents are shown in FIG. 72 which is prestored in the controller 41 from the real exhaust gas amount equivalent value *Tqexhd.*

In a next step S357, an opening rate correction coefficient *Gkvavnt* is calculated referring to a map whereof the contents are shown in FIG. 73 which is prestored in the controller 41 from the real opening rate *Rvnte.*

In a next step S358, the proportional gain *Gkvntp* and integral gain *Gkvnti* are calculated by the following equations from these basic values and correction coefficients .

$$\begin{aligned} Gkvntp &= Gkvntp0 \cdot Gkvqexh \cdot Gkvavnt \\ Gkvnti &= Gkvnti0 \cdot Gkvqexh \cdot Gkvavnt \end{aligned} \quad (29)$$

The exhaust gas amount correction coefficient *Gkvqexh* shown in the map of FIG. 72 takes a smaller value the larger the real exhaust gas amount equivalent value *Tqexhd.* For an identical opening rate of the variable nozzle 53, the variation of supercharging pressure increases the larger the exhaust gas amount, therefore it is easier to make the supercharging pressure approach the target value. Specifically, at a low exhaust gas amount, the variation of supercharging pressure relative to the variation of opening rate is sluggish. Hence, to make the supercharging pressure at a low exhaust gas amount converge to the target value earlier, the exhaust gas amount correction coefficient *Gkvqexh* is set to be larger as the real exhaust gas amount equivalent value *Tqexhd* decreases

The opening rate correction coefficient *Gkvavnt* shown in the map of FIG. 73 takes a smaller value the smaller the real opening rate *Rvnte.* When the opening of the variable nozzle 53 is small, the supercharging pressure reacts more sensitively to a variation in the opening rate than when the opening is large. To average out the response, the opening rate correction coefficient *Gkvavnt* is set to take a smaller value the smaller the real opening rate *Rvnte.*

In this way, after the feedback correction coefficients are set by the subroutine of FIG. 69, the controller 41 calculates the feedback correction amount *Avnt_fb* using a subroutine shown in FIG. 74 in a step S603 of FIG. 66.

Referring to FIG. 74, the controller 41 first reads the intake fresh air amount *Qac* and delay processing value *tQacd* of the target intake fresh air amount in a step S361.

In a step S362, it is determined whether or not a feedback control permission flag *FVNFB* is one.

When the feedback control permission flag *FVNFB* is not one, i.e., when feedback control of the variable nozzle 53 is not performed, the control error *Eqac* is set to zero in a step S363. When the feedback control permission flag *FVNFB* is one, i.e. when feedback control of the variable nozzle 53 is performed, a value obtained by subtracting the delay processing value *tQacd* from the cylinder intake fresh air amount *Qac* is set to the control error *Eqac* in a step S354. The processing of the steps S362 to S364 is identical to the processing of the steps S352 to S354 of FIG. 69.

In a step S365, a proportional correction value *Ravfbp* is calculated from the following equation (30).

$$Ravfbp = Gkvntp \cdot Eqac \quad (30)$$

In a next step S366 an integral correction value *Ravfbi* is calculated by the following equation (31).

$$Ravfbi = Gkvnti \cdot Eqac + Ravfbi_{n-1} - dTravlr \quad (31)$$

where, $Ravfbi_{n-1}$ = *Ravfbi* calculated on immediately preceding occasion the subroutine was executed, and *dTravlr* = variation amount of the learning value *Ravlr* calculated by a subroutine of FIG. 77 described hereafter.

In a next step S367, the feedback amount *Avnt_fb* of the opening rate of the variable nozzle 53 is calculated by summing the proportional correction amount *Ravfbp* and integral correction amount *Ravfbi.*

Apart from the third term on the right-hand side of equation (31) used in the step S366, this equation corresponds to the calculation equation in ordinary learning control. According to this invention, the variation amount *dTravlr* of the learning value *Ravlr* is subtracted from the integral correction value *Ravfbi* obtained in the calculation equation of the prior art learning control. The calculation of the learning value *Ravlr* and its variation amount *dTravlr* will be described later, but the interval of the calculation of both the integral correction amount *Ravfbi* and learning value *Ravlr* is ten milliseconds.

After the controller 41 calculates the feedback correction amount *Avnt_fb* by the subroutine of FIG. 74 in this way, a learning permission flag *FVLNR* is calculated in a step S604 of FIG. 66. The learning permission flag *FVLNR* is a flag which determines whether or not learning of the integral correction amount *Ravfbi* is permitted. This calculation is performed by a subroutine shown in FIG. 75.

Referring to FIG. 75, the controller 41 first reads the target EGR rate *Megr,* atmospheric pressure *Pa,* cooling water temperature *Tw,* control error *Eqac* and delay processing value *tQacd* of the target intake fresh air amount in a step S371.

In following steps S372-S379, it is determined whether or not the engine running conditions are suitable for learning of the integral correction amount *Ravfbi* from the parameters which were read.

In the step S372, it is determined whether or not the running condition of the diesel engine 1 corresponds to a learning region specified in a map whereof the contents are shown in FIG. 76 which is prestored in the controller 41, from the rotation speed *Ne* of the diesel engine 1 and the target fuel injection amount *Qsol* which represents the load of the diesel engine 1. The map of FIG. 76 is simplified, but in practice, the region which is the supercharging pressure feedback control region and where the learning sensitivity is good, i.e., the region where the variation of the intake fresh air amount is large relative to the variation of opening rate of the variable nozzle 53 is set as the learning region.

In a step S373, it is determined whether or not the current value of the learning permission flag *FVLNR* is one.

In a step S374, it is determined whether or not the target EGR rate *Megr* is less than a predetermined rate *KVNLRMEGR#.* The predetermined rate *KVNLRMEGR#* is a value for determining whether or not exhaust gas recirculation is to be performed, and when the target EGR rate *Megr* is less than the predetermined value *KVNLRMEGR#,* exhaust gas recirculation is effectively not performed.

In a step S375, it is determined whether or not the atmospheric pressure *Pa* is higher than a predetermined pressure *KVNLRPA#.* The predetermined pressure *KVNLRPA#* is a pressure corresponding to running on high ground, and when the condition of the step S375 is satisfied, it shows that the vehicle is not running on high ground.

In a step S376, it is determined whether or not the cooling water temperature *Tw* is higher than a predetermined temperature *KVNLRTW#.* The predetermined temperature *KVNLRTW#* is a value which determines whether or not warm-up of the diesel engine 1 is complete , and when the cooling water temperature *Tw* is higher than the predetermined temperature *KVNLRTW#,* it is considered that warm-up is complete.

In a step S377, it is determined whether or not the absolute value of the ratio of the control error *Eqac* and the delay processing value *tQacd* of the target fresh air amount is less than a predetermined value *KVNLREQA#.* When the absolute value of this ratio is large, it signifies that the control of supercharging pressure is subject to the effect of external disturbance. The predetermined value *KVNLREQA#* is a reference value for performing this determination, and when the absolute value of this ratio is less than the predetermined value *KVNLREQA#,* it is considered that there is no effect due to external disturbance. The reason why the ratio of the delay processing value *tQacd* of the target intake fresh air amount and the control error *Eqac* is taken as the determining parameter, is in order to maintain the ratio of the control error relative to the target value constant even if the target value varies. However, to simplify the calculation, it is also possible to determine the presence or absence of external disturbance by comparing the absolute value of the control error *Eqac* with a predetermined value.

In a step S378, it is determined whether or not the overboost determining flag *FOVBST* and suppression release flag *FCLROB* are both zero. If these flags are zero, it signifies that the overboost suppression control is not performed.

In a step S379, it is determined whether or not an air flow meter fault determining flag *FDGMAF* is zero, showing the normal state. When all the conditions of the steps S372-S379 are satisfied, the learning permission flag *FVLNR* is set to one in a step S380 so as to permit learning of the integral correction amount *Ravfbi.* When any of the conditions of the steps S372-S379 is not satisfied, the learning permission flag *FVLNR* is reset to zero in a step S381 so as to prohibit learning of the integral correction amount *Ravfbi.*

In this way, after setting the learning permission flag *FVLNR,* the controller 41 calculates the learning value *Ravlr* in a step S605 of FIG. 66. This calculation is performed by the subroutine of FIG. 77.

Referring to FIG. 77, first in a step S391, the controller 41 sets the immediately preceding value $Ravlr_{n-1}$ equal to the learning value *Ravlr* stored in a non-volatile memory in the controller 41.

In a next step S392, it is determined whether or not the learning permission flag *FVLNR* is one. When the learning permission flag *FVLNR* is one, learning of the integral correction amount *Ravfbi* is performed in steps S393-S396. On the other hand, when the learning permission flag *FVLNR* is not one, a processing outside the learning region is performed in steps S397-S400.

Here, learning means that the integral correction amount *Ravfbi* is learned, the learning value *Ravlr* for opening rate control is calculated based on a learning initial value *Ravlr0* and immediately preceding value $Ravlr_{n-1}$ of the learning value *Ravlr,* and the immediately preceding value $Ravlr_{n-1}$ stored in the non-volatile memory is newly updated to the calculated value.

Processing outside the learning region means that the learning value *Ravlr* for opening rate control is calculated by multiplying the immediately preceding value $Ravlr_{n-1}$ by a predetermined coefficient. In this case, the value stored in the non-volatile memory is not updated.

The specific details of learning will now be described referring to the steps S393-S396.

In the step S393, the learning initial value *Ravlr0* is set to equal to the integral correction amount *Ravfbi* of the opening rate of the variable nozzle 53.

In the next step S394, a learning rate Kfntlrn is calculated by looking up a map whereof the contents are shown in FIG. 78 which is prestored in the controller 41, based on the engine rotation speed *Ne* and the target fuel injection amount *Qsol* which represents the engine load. In this map, the learning rate *Kvntlrn* is increased, the larger the engine rotation speed *Ne* and the target fuel injection amount *Qsol.* However, when it increases, the variation of the intake fresh air amount relative to variation of opening rate of the variable nozzle 53 becomes more sensitive. Specifically, when the engine rotation speed *Ne* and target fuel injection amount *Qsol* are large, convergence to the target value of the supercharging pressure or intake fresh air amount is advanced by increasing the learning proportion of the feedback correction amount. For this purpose, the learning rate *Kvntlrn* is set large, the larger the engine rotation speed *Ne* and target fuel injection amount *Qsol.* However, the maximum value of the learning rate *Kvntlrn* is one.

In the next step S395, the learning initial value *Ravlr0* and immediately preceding value $Ravlr_{n-1}$ of the learning value *Ravlr* are weighted by the following equation (32) to calculate the learning value *Ravlr.*

$$Ravlr = Kvntlrn \cdot Ravlr0 + (1 - Kvntlrn) \cdot Ravlr_{n-1} \tag{32}$$

According to equation (32), when the learning rate *Kvntlrn* is the maximum value of one, on the next occasion the control of the opening rate is performed, the total amount of the integral correction amount *Ravfbi* is used as the learning value *Ravlr.* When the learning rate Kvtnlrn is less than 1, part of the integral correction amount *Ravfbi* is used as the learning value *Ravlr* on the next occasion control of the opening rate is performed.

In the next step S396, the calculated learning value *Ravlr* is stored in the non-volatile memory. This value is used as the immediately preceding value $Ravlr_{n-1}$ on the next occasion when the routine is performed.

Next, specific details of processing outside the learning region will be described referring to the steps S397 to S400.

In the step S397, the initial learning value *Ravlr0* is set equal to the immediately preceding value $Ravlr_{n-1}$.

In the next step S398, the running region reflection coefficient *Gkvntlnq* of the learning value is calculated, referring to a map whereof the contents are shown in FIG. 79 which is prestored in the controller 41, based on the engine rotation speed *Ne* and target fuel injection amount *Qsol.*

In the next step S399, the opening rate reflection coefficient *Gkvntlav* is calculated, referring to a map whereof the contents are shown in FIG. 80 which is prestored in the controller 41, based on the real opening rate *Rvnte.*

In the next step S400, the learning value *Ravlr* for the opening rate control is calculated by the following equation (33).

$$Ravlr = Ravlr0 \cdot Gikvnt\ln q \cdot Gkvntlav \quad (33)$$

The equation (33) is applied to have the learning value reflected in supercharging pressure control outside the learning region. The learning value *Ravlr* obtained is applied to learning control of the opening rate described hereafter, but the value stored in the non-volatile memory is not updated.

Referring to the map of FIG. 79, the running region reflection coefficient *Gkvntlnq* is one when the engine rotation speed *Ne* and target fuel injection amount *Qsol* are in the learning region, and become smaller, the further away from the learning region. In a region which is largely removed from the running region where the learning value *Ravlr* is learned, if opening rate control is performed applying the same learning value *Ravlr* as in the learning region, the error becomes too large, and the possibility of causing overboost increases. To prevent this overboost, the map characteristics are set so that the running region reflection coefficient *Gkvntlnq* become smaller the further away from the learning region.

In the map of FIG. 80, an opening rate reflection coefficient *Gkvntlav* is set to be small in a region where the real opening rate *Rvnte* is small. The variation of intake fresh air amount relative to the variation of opening rate, is larger the smaller the opening rate. As a result, in a region where the opening rate is small, when the learning value is largely reflected in supercharging pressure control, there is a high possibility of causing overboost. To prevent this overboost, in the region where the opening rate is small, the map characteristics are set so that the opening rate reflection coefficient *Gkvntlav* becomes smaller in the region where the opening rate is small.

After performing the processing of the steps S392-S396 or the steps S397 to S400 in this way, the controller 41 calculates the difference between the learning value *Ravlr* and immediately preceding value $Ravlr_{n-1}$ stored in the non-volatile memory in a step S401, as the variation amount *dTravlr* of the learning value. This variation amount dTRavlr is a value used in the calculation of the step S365 of FIG. 74 described earlier. As can be seen from FIG. 66, the subroutine of FIG. 74 is performed before the subroutine of FIG. 77 which calculates the variation amount *dTravlr.* Therefore, the variation amount *dTravlr* calculated in the subroutine of FIG. 77 is used on the next occasion when the subroutine of FIG. 74 is performed.

When the subroutine of FIG. 77 terminates, the subroutine of FIG. 66 also terminates.

Here, referring again to the main routine of FIG. 38, after calculating the feedback correction amount *Avnt_* fband the variation amount *dTravlr* of the learning value by the subroutine of FIG. 66 in the step S245, the controller 41 calculates a final command opening rate *Trvnt* sand a command opening rate linearization processing value *Ratdty* in a following step S246. This calculation is performed by subroutines of FIG. 81 and FIG. 82

Referring to FIG. 81, firstly in a step S411, the controller 41 reads the open loop control amount *Avnt_f* of the command opening rate, the feedback correction amount *Avnt_fb* of the command opening rate and the learning value *Ravlr*

In a next step S412, the command opening rate *Avnt* is calculated by summing these values.

In a next step S413, to compensate the response delay of the pressure actuator 54, advance processing is performed on the command opening rate *Avnt* using a subroutine of FIG. 82. The pressure actuator 54 comprises the diaphragm actuator 59 which is operated by the supply pressure of the pressure control valve 56, so some time is required from when a duty signal is input to the pressure control valve 56 to when the diaphragm actuator 59 actually operates corresponding to the duty signal. The processing of the step S413 is processing to compensate this response delay. If the variable nozzle 53 is operated by a step motor instead of the pressure actuator 54, this step is unnecessary.

Referring to FIG. 82, the controller 41 first reads the command opening rate *Avnt* in a step S421.

In a next step S422, it is determined whether or not the absolute value of the difference between the immediately preceding value $Avnt_{n-1}$ of the command opening rate read on the immediately preceding occasion the subroutine was executed and the command opening rate *Avnt* read on the present occasion, is smaller than a predetermined value *EPSDTY#.*

When the determination result of the step S422 is negative, it shows that the command opening rate *Avnt* is varying. In this case, after resetting a clamp flag *FCLPVNDTY* of the command opening rate to zero in a step S423, the routine proceeds to a step S424 and subsequent steps.

On the other hand, when the determination result of the step S422 is affirmative, it shows that the command opening rate *Avnt* is not varying. In this case, after setting the clamp flag *FCLPVNDTY* of the command opening rate to one in a step S429, the routine proceeds to a step S430 and subsequent steps.

In the step S345 of FIG. 67 described above, the clamp flag *FCLPVNDTY* is used to determine whether or not feedback control of the opening rate is permitted. The clamp flag *FCLPVNDTY* varies from zero to one when the variation of the command opening rate *Avnt* is complete. In this case , as it is determined that feedback control of the opening rate is no longer necessary, the clamp flag FCLPVDNTY is set to one.

In the step S424, the controller 41 compares the command opening rate *Avnt* and the immediately preceding value $Avnt_{n-1}$ of the command opening rate. When *Avnt* is larger than $Avnt_{n-1}$, it shows that the actuator 54 is opening the variable nozzle 53. In this case, the subroutine sets an actuator advance correction gain Gkact equal to a constant value *GKVACTP#* for opening in a step S425, sets a time constant equivalent value *Tcact* for actuator advance correction equal to a constant value *TCVACTP#* for opening in a step S426, and proceeds to a step S432.

On the other hand, when *Avnt* is not larger than $Avnt_{n-1}$, the actuator 54 is closing the variable nozzle 53. In this case, the subroutine sets the actuator advance correction gain *Gkact* equal to a constant value *GKVACTN#* for closing in a step S427, sets the time constant equivalent value *Tcact* for actuator advance correction equal to a constant value *TCVACTN#* for closing in a step S428, and then proceeds to the step S432.

Here, *GKVACTP#* < *GKVACTN#* and *TCVACTP#* < *TCVACTN#.* The operation whereby the pressure actuator 54 closes the variable nozzle 53 is performed in opposition to the exhaust gas pressure. Therefore, the actuator advance correction gain Gkact in this case must be set larger than when the variable nozzle 53 is opened. Conversely, the time constant of the actuator advance correction when the pressure actuator 54 closes the variable nozzle 53 must be set smaller than when the variable nozzle 53 is opened. As the time constant equivalent value *Tcact* is the inverse of the time constant, the value when the pressure actuator 54 closes the variable nozzle 53 must be set larger than the value when the variable nozzle 53 is opened.

When the clamp flag *FCLPVNDTY* of the command opening rate is set to one in the step S429, in the subsequent step S430, the controller 41 sets the actuator advance correction gain *Gkact* equal to a value $Gkact_{n-1}$ set on the immediately preceding occasion the subroutine was executed.

In a subsequent step S431, the time constant equivalent value *Tcact* is set equal to a value $Tcact_{n-1}$ set on the immediately preceding occasion the subroutine was executed, and the routine proceeds to the step S432.

In the step S432, the opening prediction value *Cvact* is calculated by the following equation (34) using the time constant equivalent value *Tcact* and command opening rate *Avnt.*

$$Cvact = Avnt \cdot Tcact + Cvact_{n-1} \cdot (1 - Tcact) \qquad (34)$$

where, $Cvact_{n-1}$ = opening prediction value *Cvact* calculated on the immediately preceding occasion the subroutine was executed.

Further, in a next step S433, the final command opening rate *Trvnt* is calculated by the following equation (35) using the opening prediction value *Cvact* and command opening rate *Avnt.*

$$Trvnt = Gkact \cdot Avnt - (Gkact - 1) \cdot Cvact_{n-1} \qquad (35)$$

The significance of the processing of the steps S432 and S433 is identical to that of the calculation of the intermediate value *Rqec* and target EGR amount *Tqec* in the steps S24 and S25 of FIG. 6.

Hence, in the subroutine of FIG. 82, advance processing is performed taking account only of the response delay of the pressure actuator 54. The advance correction related to the gas flow lag dependent on the intake air, exhaust gas flowrate and turbo lag is performed by the subroutine of FIG. 60 described above.

After calculating the final command opening rate *Trvnt* in this way, the controller 41 calculates a command opening rate linearization processing value *Ratdty in* a step S414 of FIG. 81. The command opening rate linearization processing value *Ratdty* is calculated by looking up a map whereof the contents are shown in FIG. 83 which is prestored in the controller 41, based on the final command opening rate *Trvnt.*

This linearization processing is required when the opening rate or opening surface area of the variable nozzle 53, and the duty signal output by the controller 41 through the pressure control valve 56, have a nonlinear correspondence.

Returning- now to the main routine of FIG. 38, after the controller 41 calculates the command opening rate linearization processing value *Ratdty,* a duty value *Dtyvnt* of the duty signal output to the pressure control valve 56 is calculated in a step S247. This calculation is performed using the subroutine of FIG. 84.

Referring to FiG. 84, in a step S441, the controller 41 reads the engine rotation speed *Ne*, target fuel injection amount *Qsol*, linearization processing value *Ratdty* of the command opening rate, advance correction time constant inverse value *Tcvnt* and cooling water temperature *Tw* of the diesel engine 1.

In a step S442, duty signal variation flags are set using the subroutine shown in FIG. 85.

Referring to FIG. 85, the controller 41 first reads the command opening rate *Avnt* and the advance correction time constant inverse value *Tcvnt* in a step S461.

In a next step S462, a command opening rate prediction value *Adlyvnt* is calculated by the following equation (36).

$$Adlyvnt = Avnt \cdot Tcvnt + Adlyvnt_{n-1} \cdot (1 - Tcvnt) \quad (36)$$

where, $Adlyvnt_{n-1}$ = value of *Adlyvnt* calculated on the immediately preceding occasion the subroutine was executed.

Here, the relation between the command opening rate *Avnt* and the command opening rate prediction value *Adlyvnt* corresponds to the relation between the target opening rate *Rvnt* and the opening prediction value *Cavnt.*

In a following step S463, the command opening rate prediction value *Adlyvnt* is compared with a command opening rate prediction value $Adlyvnt_{n-M}$ calculated by the subroutine executed M times ago.

When $Adlyvnt \geq Adlyvnt_{n-M}$, the command opening rate is increasing or constant. In this case, the subroutine sets an operation direction flag *fvnt* to one in a step S464, and proceeds to a step S466.

In the step S466, it is determined whether or not $Adlyvnt = Adlyvnt_{n-M}$. When $Adlyvnt = Adlyvnt_{n-M}$, in a step S467, a duty hold flag *fvnt2* is set to one, and the subroutine is terminated.

When $Adlyvnt = Adlyvnt_{n-M}$ is not satisfied, the routine proceeds to a step S468.

When $Adlyvnt < Adlyvnt_{n-M}$ in the step S463, it shows that the command opening rate is decreasing. In this case, the subroutine resets the operation direction flag *fnvt* to zero in a step S465, and the routine proceeds to the step S468.

In the step S468, the duty hold flag *fvnt2* is reset to zero, and the subroutine is terminated.

Thus, after setting the two flags *fvnt* and *fvnt2,* the controller 41 reads a duty value temperature correction amount *Dty_t* in a step S443 of FIG. 84. The duty value temperature correction amount *Dty_t* is calculated by a subroutine of FIG. 86 performed independently in synchronism with the REF signal.

Referring to FIG. 86, in a step S471, the controller 41 first reads the engine rotation speed *Ne*, target fuel injection amount *Qsol* and cooling water temperature *Tw.*

In a step S472, a basic exhaust gas temperature *Texhb* is calculated from the engine rotation speed *Ne* and target fuel injection amount *Qsol* by looking up a map shown in FIG. 87 previously stored in the memory of the controller 41. The basic exhaust gas temperature *Texhb* is the exhaust gas temperature after the diesel engine 1 has completed warming up.

In a next step S473, a water temperature correction coefficient *Ktexh_tw* is calculated by looking up a map shown in FIG. 88 stored in the controller 41, based on the cooling water temperature *Tw.*

In a step S474, an exhaust gas temperature *Texhi* is calculated by multiplying the basic exhaust gas temperature *Texhb* by the water temperature correction coefficient *Ktexh_tw.*

In a next step S475, a real exhaust gas temperature *Texhdly* is calculated by adding a first order processing delay to the exhaust gas temperature *Texhi* by the following equation (37). This value is a value which takes account of the delay due to the heat inertia in the variation of exhaust gas temperature.

$$Texhdly = Texhi \cdot KEXH\# + Texhdly_{n-1} \cdot (1 - KEXH\#) \quad (37)$$

where, *KEXH#* = constant, and

$Texhdl_{Yn-1}$ = *Texhdly* calculated on the immediately preceding occasion when the subroutine was executed.

In a following step S476, a difference *dTexh* of the basic exhaust gas temperature *Texhb* and this real exhaust gas temperature *Texhdly* is calculated.

In a last step S477, the duty value temperature correction amount *Dty_t* is calculated by looking up a map shown in FIG. 89 previously stored in the memory of the controller 41, based on the difference *dTexh.* The meaning of the processing of the steps S476 and S477 will be described in detail later.

After the end of the subroutine, the controller 41 returns to the subroutine of FIG. 84 and performs processing after the step S444. Steps S444-S449 are steps which add hysteresis processing to the duty value.

Describing this hysteresis processing with reference to FIG. 95, when the linearization processing value *Ratdty* of the command opening rate *Avnt* is increasing, the duty value is made to vary according to a straight line which joins a command signal *Duty_l_p* when the variable nozzle 53 is fully open, and a command signal *Duty_h_p* when the variable nozzle 53 is fully closed. On the other hand, when the linearization processing value *Ratdty* is decreasing, the duty value is made to vary according to a straight line which connects a command signal *Duty_l_ n* when the variable nozzle 53 is fully open, and a command signal *Duty_h_n* when the variable nozzle 53 is fully closed. In the drawing, two lines intersect in the region where the variable nozzle 53 is nearly closed, but this region is a region which is not used in actual control of the pressure control valve 56. These characteristics are set assuming that the diesel engine 1 has completely warmed up. When the real exhaust gas temperature *Texhdly* is low, the pressure actuator 54 has the characteristic of opening the variable nozzle 53 larger for the same duty value, as shown in FIG. 90. Hence, it is necessary to apply the temperature correction amount Dty_tcalculated in the steps S476, S477 of FIG. 86, to compensate the difference in the characteristic of the pressure actuator 54 due to the exhaust gas temperature.

Now, the controller 41 determines the operation direction flag *fvnt* in the step S444. When the operation direction flag *fvnt* is one, i.e., when the command opening rate *Avnt* is increasing or constant, the processing of steps S445, S446 is performed. In the step S445, a duty value *Duty_h* when the variable nozzle 53 is fully closed, is calculated based on the target fuel injection amount *Qsol* by looking up a *Duty_h_p* map shown in FIG. 91. In the following step S446, a duty value *Duty_l* when the variable nozzle 53 is fully open, is calculated by looking up a *Duty_l_p* map shown in FIG. 92. After this processing, the subroutine proceeds to a step S449.

When the operation direction flag *fvnt* is zero in the step S444, i.e., when the command opening rate *Avnt* is decreasing, the processing of steps S447, S448 is performed. In the step S447, the duty value *Duty_h* when the variable nozzle 53 is fully closed, is calculated based on the target fuel injection amount *Qsol* by looking up a *Duty_h_n map* shown in FIG. 93. In the following step S448, the duty value *Duty_l* when the variable nozzle 53 is fully open, is calculated based on the target fuel injection amount *Qsol* by looking up a *Duty_l_*n map shown in FIG. 94.

After this processing, the subroutine proceeds to a step S449.

In the step S449, a command duty basic value *Dty_h* is calculated by performing linear interpolation processing by the following equation (38) using the duty values *Duty_h, Duty_l* found by the above processing, the linearization processing value *Ratdty* of the command opening rate *Avnt,* and the temperature correction amount *Dty_t.*

$$Dty_h = (Duty_h - Duty_l) \cdot Ratdty + Duty_l + Dty_t \qquad (38)$$

By changing the straight line used for linear interpolation processing in the case where the command opening rate *Avnt,* is decreasing, and the case where it is not, the command duty basic value *Dty_h* is made smaller, for the same linearization processing value *Ratdty,* in the case where the command opening rate *Avnt* is decreasing than in other cases.

In a next step S450, the duty hold flag *fvnt2* is determined. When the duty hold flag *fvnt2* is one, i.e., the command opening rate prediction value *Adlyvnt* is not changing, a command duty value *Dtyv* is set equal to the duty value $Dtyvnt_{n-1}$ calculated on the immediately preceding occasion the subroutine was executed, in a step S451. The duty value $Dtyvnt_{n-1}$ will be described in detail later.

When the duty hold flag *fvnt2* is zero, i.e., when the command opening rate prediction value *Adlyvnt* is changing, in a step S452, the command duty value *Dtyv* is set equal to the command duty basic value *Dty_h* calculated in the step S449.

Thus, after determining the command duty value *Dtyv* in the step S451 or step S452, in a final step S453, the controller 41 performs an operation check on the variable nozzle 53 using the subroutine of FIG. 96 based on the command duty value *Dtyv.*

Referring to FIG. 96, in a step S481, the controller 41 first reads the command duty value *Dtyv,* engine rotation speed *Ne*, target fuel injection amount *Qsol* and the cooling water temperature *Tw.*

In subsequent steps S482-S485, it is determined whether or not operation check conditions are satisfied. An operation check is performed only when all these conditions are satisfied.

In the step S482, it is determined whether or not the target fuel injection amount *Qsol* is less than a predetermined value *QSOLDIZ#.* When this condition is satisfied, it means that the diesel engine 1 is performing fuel cut.

In the step S483, it is determined whether or not the engine rotation speed *Ne* is less than a predetermined value *NEDIZ#.* When this condition is satisfied, it means that the rotation speed *Ne* of the diesel engine 1 is in an intermediate or low speed region.

In the step S484, it is determined whether or not the cooling water temperature *Tw* is less than a predetermined value *TwDIZ#.* When this condition is satisfied, it means that warming up of the diesel engine 1 is not complete.

In the step S485, it is determined whether or not an operation check flag *Fdiz* is zero. When this condition is satisfied, it means that an operation check has not yet been performed.

When all the conditions are satisfied, an operation check counter value *CtFdiz* is incremented in a step S486, and the routine proceeds to a step S487.

If any of the determination results of the steps S482-S484 is not satisfied, the subroutine resets the operation check flag *Fdiz* to zero in a step S493, and proceeds to a step S494. However, when the operation check flag *fdiz* is one in the step S485, it proceeds to the step S494 immediately.

In a step S487, the operation check counter value *CtFdiz* is compared with a predetermined upper limiting value *CTRDIZH#.*

When the operation check counter value *CtFdiz* is smaller than the upper limiting value *CTRDIZH#,* in a step S488, the operation check counter value *CtFdiz* is compared with a predetermined lower limiting value *CTRDIZL#.* When the operation check counter value *CtFdiz* is not less than the lower limiting value *CTRDIZL#,* in a step S489, a duty value *Dtyvnt* is set for checking operation using a subroutine shown in FIG. 97.

The upper limiting value *CTRDIZH#* is set to, for example, seven seconds, and the lower limiting value *CTRDIZL#* is set to, for example, two seconds. In this case, the duty value for checking operation is set only in a five second interval of the difference between the upper limiting value and lower limiting value.

Here, referring to FIG. 97, a subroutine for setting the duty value for operation check will be described.

The controller 41, in a step S501, first reads the operation check counter value *CtFdiz* and engine rotation speed *Ne.*

In a following step S502, a control pattern value *Duty_pu* is set by clooking up a map shown in FIG. 98 based on the difference of the operation check counter value *CtFdiz* and lower limiting value *CTRDIZL#.* This map is previously stored in the memory of the controller 41 The control pattern value *Duty_pu* is set so that it repeatedly varies between zero and one with a short period according to the elapsed time after the operation check counter value *CtFdiz* exceeds the lower limiting value *CTRDIZL#.*

In a next step S503, a duty value *Duty_p_ne* commanded to the pressure control valve 56 is calculated by looking up a map shown in FIG. 99 previously stored in the memory of the controller 41, based on the engine rotation speed *Ne.* The duty value *Duty_p_ne* is set supposing that the duty for checking the opening and closing operation of the variable nozzle 53 differs according to the engine rotation speed *Ne.* For example , when the variable nozzle 53 is to be closed, it must close against the exhaust gas pressure. The exhaust gas pressure increases in accordance with the increase in engine rotation speed *Ne.*

Further, when the engine rotation speed *Ne* is in the high-speed region, the closing of the variable nozzle 53 to check operation has a major impact on the engine running environment. Therefore, in the high speed region, the duty value *Duty_p_ne* is decreased as the engine rotation speed *Ne* increases so as to reduce the impact on the engine running environment.

In a following step S504, the duty value *Dtyvnt* is calculated by multiplying the duty value *Duty_p_ne* by the control pattern value *Duty_pu,* and the subroutine is terminated.

In this way, by terminating the subroutine of FIG. 97, the processing of the step S489 of FIG. 96 is terminated and the subroutine of FIG. 96 is also terminated.

On the other hand, in the step S487 of FIG. 96, when the operation check counter value *CtFdiz* is not less than the upper limiting value *CTRDIZH#,* the processing of the step S490 is performed. Here, an immediately preceding value $CtFdiz_{n-1}$ of the operation check counter value *CtFdiz* operation is compared with the upper limiting value *CTRDIZH#.* If the immediately preceding value $CtFdiz_{n-1}$ is less than the upper limiting value *CTRDIZH#,* it means that *CTRDIZH#* reached the upper limiting value *CTRDIZH#* for the first time in the repeat execution of this subroutine, the duty value *Dtyvnt* is set to zero in a step S491, the operation check flag *fdiz* is set to one in a step S492, and the subroutine is terminated.

By once setting the duty value *Dtyvnt* to zero in the step S491 when the operation check is completed, the variable nozzle 53 fully opens. This operation aims to maintain control precision during ordinary control performed thereafter. By setting the operation check flag *fdiz* to one, the determination result of the step S485 will always be affirmative in the execution of the subroutine thereafter. It means the operation check of the variable nozzle 53 is performed only once after starting the diesel engine 1.

On the other hand, when the immediately preceding value $Ctfdiz_{n-1}$ of the operation check counter value *Ctfdiz* is not less than the upper limiting value *CTRDIZH#* in the step S490, the subroutine proceeds to the step S494. In the step S494, the operation check counter value *Ctfdiz* is reset to zero, and the routine proceeds to a step S495.

When the operation check counter value *Ctfdiz* is less than the predetermined lower limiting value *CTRDIZL#* in the step S488, the subroutine also proceeds to the step S495.

In the step S495, the duty value *Dtyvnt* for operation check is set equal to the command duty value *Dtyv* determined in the step S451 or step S452 of FIG. 84, and the subroutine is terminated. In this case therefore, the ordinary control of the variable nozzle 53 is performed.

In particular, when operation of the pressure actuator 54 is unstable such as at low temperatures etc., this operation check of the variable nozzle 53 makes the operation of the variable nozzle 53 smooth and increases reliability in control of supercharging pressure.

In this way, by ending the subroutine of FIG. 96, the processing of the subroutine of FIG. 84 is terminated and the routine of FIG. 38 is also terminated.

Next, referring to FIG. 100A-100D, the difference between the learning control of the supercharging pressure of the turbocharger 50 according to this embodiment and the conventional learning control will be described.

As shown in FIG. 100A, when the target intake fresh air amount *tQac* is increased in stepwise fashion at a time *t1,* the integral correction amount *Ravfbi* also begins to increase from the time *t1* as shown in FIG. 100B due to feedback control of the opening rate of the variable nozzle 53.

As a result, as shown in FIG. 100A, the cylinder intake fresh air amount *Qac* approaches the target intake fresh air amount *tQac.* At a time *t2*, the cylinder intake fresh air amount *Qac* coincides with the target intake fresh air amount *tQac.* Subsequently, correction of the opening rate is not necessary, so the integral correction amount *Ravfbi* is maintained at a fixed value.

At a time *t3* when the integral correction amount *Ravfbi* has been determined to have converged, learning of the integral correction amount *Ravfbi* starts. As a result of this learning, the learning value *Ravlr* starts to increase as shown in FIG. 100C from the time *t3.*

In the conventional learning control, the integral correction amount *Ravfbi* is held at a fixed value. Therefore, a total correction amount which is the sum of the learning value *Ravlr* and the integral correction amount *Ravfbi* starts to increase from the time *t3,* as shown by a solid line in FIG. 100D.

On the other hand, although the total correction amount increases, the cylinder intake fresh air amount *Qac* does not immediately increase due to gas flow lag, but at a time *t4* it increases sharply and causes overboost. Due to the overboost of the cylinder intake fresh air amount *Qac,* the integral correction amount *Ravfbi* starts to decrease from the time *t4,* as shown by a solid line in FIG. 100B. However, when the cylinder intake fresh air amount *Qac* sharply increases, the difference between the cylinder intake fresh air amount *Qac* and the delay processing value *tQacd* of the target intake fresh air amount, i.e., the control error *Eqac* calculated in the step S354 of FIG. 69, sharply increases. As a result, in the step S377 of FIG. 75, the absolute value of the ratio of the control device error *Eqac* and the delay processing value *tQacd* of the target intake fresh air amount increases larger than the predetermined value *KVNLREQA#,* the controller 41 determines that supercharging pressure control is subject to an external disturbance, and resets the learning permission flag *FVLNR* of the opening rate to zero in the step S381. Hence , learning of the opening rate stops at a time *t5* as shown by a solid line in FIG. 100C.

Subsequently, feedback control of the opening rate is continued, but the cylinder intake fresh air amount *Qac* fluctuates for a certain time as shown by the solid line in FIG. 100A.

The control according to this embodiment is identical to the conventional learning control up to the time *t3.*

After learning starts at the time *t3,* the learning value *Ravlr* increases as in the conventional learning control, but by subtracting the variation amount *dTravlr* of the learning value *Ravlr* from the integral correction value *Ravfbi* in the step S366 of FIG. 74, the total correction amount is maintained at a fixed value even after the time *t3,* as shown by the dotted line in FIG. 100D. Specifically, as the learning value *Ravlr* increases as shown by the dotted line in FIG. 100C, the integral correction value *Ravfbi* decreases as shown by the dotted line in FIG. 100B. As a result, the cylinder intake fresh air amount *Qac* does not fluctuate, and is rapidly controlled to the target intake fresh air amount *tQac.* Learning of the opening rate terminates at a time *t6* at which the decreasing integral correction value *Ravfbi* reaches zero.

After learning terminates, when the target intake fresh air amount *tQac* again varies, feedback control of the opening rate is again performed, and learning of the opening rate is again performed accordingly.

On the other hand, in the running region of the diesel engine 1 outside the learning region, the learning value *Ravlr* is not updated. In this case, as shown by the steps S399 and 400 in FIG. 77, the running region reflection coefficient *Gkvntlnq* is determined according to the distance between the real running region and learning region, and the learning value *Ravlr* is applied to the control of the opening rate of the variable nozzle 53 under the running region reflection coefficient *Gkvntlnq.* In this way, even outside the learning region, by having the learning value *Ravlr* reflected in the control of the opening rate of the variable nozzle 53 according to the distance between the real running region and learning region, a more desirable control precision is obtained than in the case where the opening of the variable nozzle 53 is controlled only by feedback control without using the learning value.

Next, a second embodiment relating to a subroutine for calculating the target opening rate *Rvnt* will be described referring to FIG. 56-58.

According to this embodiment, the target opening rate *Rvnt* is calculated using a subroutine shown in FIG. 56 instead of the subroutine of FIG. 51.

In the subroutine of FIG. 56, the target EGR rate *Megr* is used for calculating the target opening rate basic value *Rvnt0* instead of the EGR amount equivalent value *Qes0* used in the subroutine of FIG. 51. As a result, in this subroutine, the step S303 which calculates the EGR amount equivalent value *Qes0* in the subroutine of FIG. 51 is omitted.

Further, in the step S307, the target opening rate basic value *Rvnt0* is calculated from the set intake fresh air amount equivalent value *tQas0* and target EGR rate *Megr* using the map of FIG. 57 instead of the map of FIG. 52. Likewise, in the step S308, the target opening rate basic value *Rvnt0* is calculated from the set intake fresh air amount equivalent value *tQas0* and target EGR rate *Megr* using the map of FIG. 58 instead of the map of FIG. 53.

The remaining features of the process are identical to those of the subroutine of FIG. 51.

In the maps of FIG. 57 and FIG. 58, the target opening rate basic value *Rvnt0* may be set based on the target intake fresh air amount *tQac* and real EGR rate *Megrd* instead of setting it based on the set intake fresh air amount equivalent value *tQas0* and target EGR rate *Megr.* Further, the target opening rate basic value *Rvnt0* may be set based on the target intake fresh air amount *tQac* and target EGR rate *Megr.*

In the transient running state of the diesel engine 1, a delay occurs until the real EGR rate *Megrd* catches up with the target EGR rate *Megr,* and due to the deviation from the EGR amount corresponding to the delay, an error occurs in the target opening rate basic value *Rvnt0.* When the target opening rate basic value *Rvnt0* is set by using the real EGR amount *Megrd,* which is a value obtained by applying delay processing to the target EGR rate *Megr,* the optimum target intake fresh air amount is obtained for all preselected characteristics including fuel consumption, exhaust gas composition and acceleration performance even in the transient running state of the diesel engine 1. Further, simpler conformity and simplification of control logic can be achieved.

Next, referring to FIG. 101A, 101B and FIG. 102, a third embodiment relating to the subroutine for calculating the learning value *Ravlr* will be described.

According to this embodiment, different learning values *Ravlro, Ravlrc* are applied when the variable nozzle 53 is driven in the opening direction and when it is driven in the closing direction. The variation of the opening rate of the variable nozzle 53 relative to the duty signal supplied by the controller 41 through the pressure control valve 56 contains hysteresis, as shown in FIG. 102. This embodiment takes account of this hysteresis and improves the precision of opening rate control of the variable nozzle 53 by applying the different learning values *Ravlro, Ravlrc.*

For this purpose, the subroutines of FIG. 101A, 101B are used instead of the subroutine of FIG. 77 which was used in the first or second embodiment.

Referring to FIG. 101A, 101B, the controller 41 first reads the command opening rate *Avnt* in a step S511.

In a next step S512, the command opening rate *Avnt* is compared with the command opening rate $Avnt_{n-1}$ read on the immediately preceding occasion the subroutine was executed.

When $Avnt > Avnt_{n-1}$, the variable nozzle 53 is operated in the opening direction. In this case, the processing of the steps S513 to S524 is performed. When *Avnt* is not greater than $Avnt_{n-1}$, the variable nozzle 53 is operated in the closing direction. In this case, the processing of the steps S525 to S536 is performed. For convenience, the processing of the steps S525 to S536 is performed also when the opening rate of the variable nozzle 53 is not varying.

In the step S513, the learning value *Ravlro* that was calculated on the immediately preceding occasion when the subroutine was performed is shifted to a preceding value Ravlron-1.

In the step S525, the learning value *Ravlrc* that was calculated on the immediately preceding occasion when the subroutine was performed is shifted to a preceding value Ravlrcn-1.

In the processing of the steps S514-S523, the learning value *Ravlr* of the steps S392-S401 of FIG. 77 is replaced by *Ravlro,* the learning rate *Kvntlrn* is replaced by a learning rate Kvntlnro, the running region reflection coefficient *Gkvntlnq* is replaced by a running region reflection coefficient *Gkvntinqo,* and the opening rate reflection coefficient *Gkvntlav* is replaced by an opening rate reflection coefficient *Gkvntlavo.*

In the steps S526 to S535, the learning value *Ravlr* of the steps S392-S401 of FIG. 77 is replaced by *Ravlrc,* the learning rate *Kvntlrn* is replaced by a learning rate Kvntlnrc, the running region reflection coefficient *Gkvntlnq* is replaced by a running region reflection coefficient *Gkvntlnqc,* and the opening rate reflection coefficient *Gkvntlav* is replaced by an opening rate reflection coefficient Gkvntlavc.

Different values are respectively set to the learning rates *Kvntlrno, Kvntlrnc,* running region reflection coefficients *Gkvntlnqo, Gkvntlnqc,* and opening rate reflection coefficients *Gkvntlavo, Gkvntlnqc.*

When the variable nozzle 53 is operated in the opening direction, the learning value *Ravlr* is set equal to *Ravlro* in the step S524, and when the variable nozzle 53 is operated in the closing direction, the learning value *Ravlr* is set equal to *Ravlrc* in the step S536 and the subroutine is terminated.

According to this embodiment, when the variable nozzle 53 is driven by the pressure actuator 54, even when hysteresis is produced in the variation of the opening rate relative to the duty signal, a decrease in the precision of the learning value can be prevented.

In all of the above embodiments, the target opening rate *Rvnt* of the variable nozzle 53 is taken as the operating target value of the turbocharger 50, but the target opening surface area may also be used instead of the target opening rate *Rvnt.*

The map of FIG. 80 which specifies the opening rate reflection coefficient *Gkvntlav* used in the subroutine of FIG. 77 sets the coefficient *Gkvntlav* based on the real opening rate *Rvnte* showing the actual operating state, but to simplify processing, it may also be set based on the target opening rate *Rvnt* showing the operating target of the turbocharger 50. With respect to the above embodiments, it is to be noted that the fresh air amount and supercharging pressure correspond with each other, so the target supercharging pressure may also be used instead of the target intake fresh air amount *tQac.*

Further, the turbocharger to which the teaching of the above embodiments are applied is not limited to a turbocharger comprising the variable nozzle 53. The teaching of these embodiments may also be applied to all variable geometric turbochargers which permit variation of the geometry of the exhaust gas turbine, such as a turbocharger comprising a scroll or diffuser which modifies the exhaust gas passage cross-sectional surface area of the exhaust gas turbine of the turbocharger.

The teaching of the above embodiments, may be applied also to a diesel engine which does not perform exhaust gas recirculation. The application of the teaching to the diesel engine 1 is not limited to a "low temperature premixing combustion type" in which the heat generation is produced by a single stage combustion. Thus, the teaching of these embodiments may be applied also to an ordinary diesel engine in which diffusion combustion is performed after premixing combustion.

As described above, the teaching of the above embodiments modified the feedback correction amount of the opening rate of the variable nozzle of the turbocharger such that the sum of the learning value and feedback correction amount is constant. When this teaching is applied to a vehicle diesel engine provided with a turbocharger, control error in the transient running state of the engine is suppressed and the exhaust emission of the engine in the transient running state is improved.

## Claims

1. A control device for a supercharger (50) of an engine (1), the supercharger (50) comprising a mechanism (53,54,55,56) for adjusting an intake air amount of the engine (1) according to a signal, the device comprising:

    a sensor (33,34) which detects a running state of the engine (1);
    a sensor (39) which detects an intake air amount of the engine (1); and
    a controller (41) functioning to:

        set a target intake air amount of the engine (1) based on the running state (S115,S116);
        calculate an operational target value of the intake air amount adjusting mechanism (53,54,56) based on the target intake air amount (S312, S313);
        set an open loop control value of the signal based on the operational target value (S243,S244);
        calculate a feedback correction amount of the signal to cause the operational value to coincide with the operational target value (S367);
        calculate a learning value based on the feedback correction amount when the operational value coincides with the operational target value (S395,S400);
        output a signal determined based on the open loop control value, the feedback correction amount and the learning value to the intake air amount adjusting mechanism (53,54,56) (S412);
        **characterized in that**
        the operational value is the intake air amount of an engine (1); and the controller (41) further functions to:

            calculate the feedback correction amount including an integral correction value of the signal to cause the intake air amount to coincide with the target intake air amount (S367);
            modifying the feedback correction amount to cause the sum of the learning value and the feedback correction amount to be constant (S366); and
            output the signal determined based on the open loop control value, the learning value and a modified feedback correction amount to the intake air amount adjusting mechanism (53,54,56) (S412).

2. The control device as defined in claim 1, **characterized in that** the controller (41) further functions to calculate the feedback correction amount and the learning value every predetermined cycle (S367,S395,S400), and a variation amount of the learning value for each cycle is subtracted from the feedback correction amount in the next cycle to cause the sum of the learning value and the feedback correction amount to be constant (S366).

3. The control device as defined in claim 1 or 2, **characterized in that** the intake air amount adjusting mechanism (53,54,56) comprises a pressure actuator (54,56) which adjusts the intake air amount in response to the signal, and the control device (41) is further functioning to determine whether or not the pressure actuator (54,56) is increasing the intake air amount (S512), and calculate different learning values for the same integral correction value when the pressure actuator (54,56) is increasing the intake air amount and when the pressure actuator (54,56) is not increasing the intake air amount (S524,S536).

4. The control device as defined in any of claims 1 to 3, **characterized in that** the controller (41) further functions to determine whether or not the running state has deviated from a predetermined region (S392), calculate a deviation of the running state from the predetermined region when the running state has deviated from the predetermined region (S398), calculate a running region reflection coefficient based on the deviation (S398), and calculate the learning value by correcting the learning value before the running state deviated from the predetermined region based on the running region reflection coefficient (S400).

5. The control device as defined in claim 4, **characterized in that** the running region reflection coefficient is set to be smaller as the deviation becomes larger, and the controller (41) further functions to calculate the learning value by multiplying the learning value before the running state deviated from the predetermined region, by the running region reflection coefficient (S400).

6. The control device as defined in any of claims 1 to 5, **characterized in that** the controller (41) further functions to calculate an operational target value reflection coefficient based on the open loop control value when the running state deviates from the predetermined region (S399), and calculates the learning value by correcting the learning value before the running state deviated from the predetermined region based on the operational target value reflection coefficient (S400).

7. The control device as defined in any of claims 1 to 6, **characterized in that** the supercharger (50) comprises a turbocharger (50) comprising an exhaust gas turbine (52) driven by exhaust gas of the engine (1) and a compressor which supplies air to the diesel engine (1) according to the rotation of the exhaust gas turbine (52), the intake air amount adjusting mechanism (53,54,55,56) comprises a pressure actuator (54,56) which adjusts a flowpath cross-sectional surface area of exhaust gas which drives the exhaust gas turbine (52) according to the signal, and the controller (41) further functions to perform a first advance processing sin setting the open loop control value for compensating a delay in the variation of the intake air amount dependent on an exhaust gas flowrate of the diesel engine (1) (S324,S325,S326,S327,S328,S329,S330), and perform a second advance processing for compensating a response delay of the pressure actuator (54,56) on the signal output by the controller (41) to the pressure actuator (54,56) (S425,S426,S427,S428, S430,S431).

8. A control method of a supercharger (50) of an engine (1), the supercharger (50) comprising a mechanism (53,54,55,56) for adjusting an intake air amount of an engine (1) according to a signal, the method comprising:

detecting a running state of the engine (1);
detecting an intake air amount of an engine (1);
setting a target intake air amount of the engine (1) based on the running state (S115, S116);
calculating an operational target value of the intake air amount adjusting mechanism (53,54,56) based on the target intake air amount (S312;S313);
setting an open loop control value of the signal based on the operational target value (S243,S244);
calculating a feedback correction amount of the signal to cause the operational value to coincide with the target operational value (S367);
calculating a learning value based on the feedback correction amount when an operational value coincides with the operational target value (S395,S400);
outputting a signal determined based on the open loop control value, the feedback correction amount and the learning value to the intake air amount adjusting mechanism (53,54,56) (S412);
**characterized in that**
the operational value is the intake air amount of the engine (1); and the method further comprises:

calculating the feedback correction amount including an integral correction value of the signal to cause the intake air amount to coincide with the target intake air amount (S367);
modifying the feedback correction amount to cause the sum of the learning value and the feedback correction amount to be constant (S366); and
outputting the signal determined based on the open loop control value, the learning value and a modified feedback correction amount to the intake air amount adjusting mechanism (53,54,56) (S412).

**Patentansprüche**

1. Steuervorrichtung für einen Lader (50) eines Motors (1), wobei der Lader (50) einen Mechanismus (53, 54, 55, 56) zum Regulieren einer Ansaugluftmenge des Motors (1) entsprechend einem Signal umfasst und die Vorrichtung umfasst:

einen Sensor (33, 34), der einen Laufzustand des Motors (1) erfasst;
einen Sensor (39), der eine Ansaugluftmenge des Motors (1) erfasst; und
eine Steuereinheit (41), die so funktioniert, dass sie:

eine Soll-Ansaugluftmenge des Motors (1) auf Basis des Laufzustandes einstellt (S115, S 116);

einen Betriebs-Sollwert des Ansaugluftmengen-Reguliermechanismus (53, 54, 56) auf Basis der Soll-Ansaugluftmenge berechnet (S312, S313);
einen Wert des Signals bei offener Steuerung auf Basis des Betriebs-Sollwertes einstellt (S243, S244);
einen Rückkopplungs-Korrekturbetrag des Signals so berechnet (S367), dass bewirkt wird, dass der Betriebswert mit dem Betriebs-Sollwert übereinstimmt;
einen Lernwert auf Basis des Rückkopplungs-Korrekturbetrags berechnet (S395, S400), wenn der Betriebswert mit dem Betriebs-Sollwert übereinstimmt;
ein Signal, das auf Basis des Wertes bei offener Steuerung, des Rückkopplungs-Korrekturbetrags und des Lernwertes bestimmt wird, an den Ansaugluftmengen-Reguliermechanismus (53, 54, 56) ausgibt (S412);
**dadurch gekennzeichnet, dass**
der Betriebswert die Ansaugluftmenge eines Motors (1) ist; und
die Steuereinheit (41) des Weiteren so funktioniert, dass sie:

den Rückkopplungs-Korrekturbetrag einschließlich eines integralen Korrekturwertes des Signals so berechnet (S367), dass bewirkt wird, dass die Ansaugluftmenge mit der Soll-Ansaugluftmenge übereinstimmt;
den Rückkopplungs-Korrekturbetrag so modifiziert (S366), dass bewirkt wird, dass die Summe des Lernwertes und des Rückkopplungs-Korrekturbetrags konstant ist; und
das Signal, das auf Basis des Wertes bei offener Steuerung, des Lernwertes und des modifizierten Rückkopplungs-Korrekturbetrages bestimmt wird, an den Ansaugluftmengen-Reguliermechanismus (53, 54, 56) ausgibt (S412).

**2.** Steuervorrichtung nach Anspruch 1, **dadurch gekennzeichnet, dass** die Steuereinheit (41) des Weiteren so funktioniert, dass sie den Rückkopplungs-Korrekturbetrag und den Lernwert zu jedem vorgegebenen Zyklus berechnet (S367, S395, S400), und ein Abweichungsbetrag des Lernwertes für jeden Zyklus von dem Rückkopplungs-Korrekturbetrag in dem nächsten Zyklus subtrahiert wird, um zu bewirken, dass die Summe des Lernwertes und des Rückkopplungs-Korrekturbetrages konstant ist (S366).

**3.** Steuervorrichtung nach Anspruch 1 oder 2, **dadurch gekennzeichnet, dass** der Ansaugluftmengen-Reguliermechanismus (53, 54, 56) ein Druck-Stellglied (54, 56) umfasst, das die Ansaugluftmenge in Reaktion auf das Signal reguliert, und die Steuereinheit (41) des Weiteren so funktioniert, dass sie feststellt (S512), ob das Druck-Stellglied (54, 56) die Ansaugluftmenge vergrößert oder nicht, und verschiedene Lernwerte für den gleichen integralen Korrekturwert berechnet (S524, S536), wenn das Druck-Stellglied (54, 56) die Ansaugluftmenge vergrößert und wenn das Druck-Stellglied (54, 56) die Ansaugluftmenge nicht vergrößert.

**4.** Steuervorrichtung nach einem der Ansprüche 1 bis 3, **dadurch gekennzeichnet, dass** die Steuereinheit (41) des Weiteren so funktioniert, dass sie feststellt (S392), ob der Laufzustand von einem vorgegebenen Bereich abgewichen ist, eine Abweichung des Laufzustandes von dem vorgegebenen Bereich berechnet (S398), wenn der Laufzustand von dem vorgegebenen Bereich abgewichen ist (S398), einen Laufbereichs-Reflexionskoeffizienten auf Basis der Abweichung berechnet (S398) und den Lernwert berechnet (S400), indem sie den Lernwert vor der Abweichung des Laufzustandes von dem vorgegebenen Bereich auf Basis des Laufbereichs-Reflexionskoeffizienten korrigiert.

**5.** Steuervorrichtung nach Anspruch 4, **dadurch gekennzeichnet, dass** der Laufbereichs-Reflexionskoeffizient so eingestellt wird, dass er kleiner wird, wenn die Abweichung größer wird, und die Steuereinheit (41) des Weiteren so funktioniert, dass sie den Lernwert berechnet (S400), indem sie den Lernwert vor Abweichung des Laufzustandes von dem vorgegebenen Bereich mit dem Laufbereichs-Reflexionskoeffizienten multipliziert.

**6.** Steuervorrichtung nach einem der Ansprüche 1 bis 5, **dadurch gekennzeichnet, dass** die Steuereinheit (41) des Weiteren so funktioniert, dass sie einen Betriebs-Sollwert-Reflexionskoeffizienten auf Basis des Wertes bei offener Steuerung berechnet, wenn der Laufzustand von dem vorgegebenen Bereich abweicht (S399), und den Lernwert berechnet (S400), indem sie den Lernwert vor der Abweichung des Laufzustandes von dem vorgegebenen Bereich auf Basis des Betriebs-Sollwert-Reflexionskoeffizienten korrigiert.

**7.** Steuervorrichtung nach einem der Ansprüche 1 bis 6, **dadurch gekennzeichnet, dass** der Lader (50) einen Turbolader (50) umfasst, der eine Abgangsturbine (52), die mit Abgas des Motors (1) angetrieben wird, und einen Kompressor umfasst, der dem Dieselmotor (1) entsprechend der Drehung der Abgasturbine (52) Luft zuführt, der Ansaugluftmengen-Reguliermechanismus (53, 54, 55, 56) ein Druck-Stellglied (54, 56) umfasst, das eine Strömungsweg-Querschnittsfläche von Abgas, das die Abgasturbine (52) antreibt, entsprechend dem Signal reguliert, und die Steuereinheit (41) des Weiteren so funktioniert, dass sie eine erste Vorverlegungsverarbeitung durchführt (S324, S325, S326, S327, S328, S329, S330), um den Wert bei offener Steuerung so einzustellen, dass eine Verzögerung der Änderung der Ansaugluftmenge in Abhängigkeit von einer Abgas-Strömungsmenge des Dieselmotors kompensiert wird (1) und eine zweite Vorverlegungsverarbeitung durchführt (S425, S426, S427, S428, S430, S431), um eine Reaktionsverzögerung des Druck Stellgliedes (54, 56) auf das Signal, das von der Steuereinheit (41) an das Druck-Stellglied (54, 56) ausgegeben wird, zu kompensieren.

**8.** Verfahren zum Steuern eines Laders (50) eines Motors (1), wobei der Lader (50) einen Mechanismus (53, 54, 55, 56) zum Regulieren einer Ansaugluftmenge eines Motors (1) entsprechend einem Signal umfasst und das Verfahren umfasst:

Erfassen eines Laufzustandes des Motors (1);
Erfassen einer Ansaugluftmenge eines Motors (1);
Einstellen einer Soll-Ansaugluftmenge des Motors (1) auf Basis des Laufzustandes (S115, S116);
Berechnen (S312; S313) eines Betriebs-Sollwertes des Ansaugluftmengen-Reguliermechanismus (53, 54, 56) auf Basis der Soll-Ansaugluftmenge;
Einstellen (S243, S244) eines Wertes des Signals bei offener Steuerung auf Basis des Betriebs-Sollwertes;
Berechnen (S367) eines Rückkopplungs-Korrekturbetrages des Signals, um zu bewirken, dass der Betriebswert mit dem Soll-Betriebswert übereinstimmt;
Berechnen (S395, S400) eines Lernwertes auf Basis des Rückkopplungs-Korrekturbetrages, wenn ein Betriebswert mit dem Betriebs-Sollwert übereinstimmt;
Ausgeben (S412) eines Signals, das auf Basis des Wertes bei offener Steuerung, des Rückkopplungs-Korrekturwertes und des Lernwertes bestimmt wird, an den Ansaugluftmengen-Reguliermechanismus (53, 54, 56),
**dadurch gekennzeichnet, dass** der Betriebswert die Ansaugluftmenge des Motors (1) ist und das Verfahren des Weiteren umfasst:

Berechnen (S367) des Rückkopplungs-Korrekturbetrages einschließlich eines integralen Korrekturwertes des Signals, um zu bewirken, dass die Ansaugluftmenge mit der Soll-Ansaugluftmenge übereinstimmt;
Modifizieren (S366) des Rückkopplungs-Korrekturbetrages, um zu bewirken, dass die Summe des Lernwertes und des Rückkopplungs-Korrekturbetrages konstant ist; und
Ausgeben (S412) des Signals, das auf Basis des Wertes für offene Steuerung, des Lernwertes und eines modifizierten Rückkopplungs-Korrekturbetrages bestimmt wird, an den Ansaugluftmengen-Reguliermechanismus (53, 54, 56).

## Revendications

**1.** Dispositif de régulation d'un compresseur de suralimentation (50) d'un moteur (1), le compresseur de suralimentation (50) comprenant un mécanisme (53, 54, 55, 56) servant à réguler une quantité d'air aspirée du moteur (1) sur la base d'un signal, le dispositif comprenant :

un détecteur (33, 34) qui détecte un état de fonctionnement du moteur (1) ;
un détecteur (39) qui détecte une quantité d'air aspirée du moteur (1) ; et
un dispositif de contrôle (41) ayant pour fonctions de :

définir une quantité cible d'air aspirée du moteur (1) sur la base de l'état de fonctionnement (S115, S116) ;
calculer une valeur cible de fonctionnement du mécanisme de régulation de quantité d'air aspirée (53, 54, 56) sur la base de la quantité cible d'air aspirée (S312, S313) ;
définir une valeur de commande en boucle ouverte du signal sur la base de la valeur cible de fonctionnement (S243, S244) ;
calculer une quantité de correction en rétroaction du signal de façon à amener la valeur de fonctionnement à coïncider avec la valeur cible de fonctionnement (S367) ;
calculer une valeur d'apprentissage sur la base de la quantité de correction en rétroaction quand la valeur de fonctionnement coïncide avec la valeur cible de fonctionnement (S395, S400) ;
délivrer en sortie un signal déterminé sur la base de la valeur de commande en boucle ouverte, la quantité de correction en rétroaction et la valeur d'apprentissage, vers le mécanisme de régulation de quantité d'air aspirée (53, 54, 56) (S412) ;
**caractérisé en ce que** :

la valeur de fonctionnement est la quantité d'air aspirée d'un moteur (1) ; et
le dispositif de contrôle (41) a par ailleurs pour fonctions de :

calculer la quantité de correction en rétroaction incluant une valeur de correction intégrale du signal de façon à amener la quantité d'air aspirée à coïncider avec la quantité cible d'air aspirée (S367);
modifier la quantité de correction en rétroaction de façon à amener la somme de la valeur d'apprentissage et de la quantité de correction en rétroaction à être constante (S366) ; et
délivrer en sortie le signal déterminé sur la base de la valeur de commande en boucle ouverte, la valeur d'apprentissage et une quantité de correction en rétroaction modifiée, vers le mécanisme de régulation de quantité d'air aspirée (53, 54, 56) (S412).

**2.** Dispositif de régulation selon la revendication 1, **caractérisé en ce que** le dispositif de contrôle (41) a par ailleurs pour fonctions de calculer la quantité de correction en rétroaction et la valeur d'apprentissage au cours de chaque cycle prédéterminé (S367, S395, S400), et une quantité de variation de la valeur d'apprentissage pour chaque cycle est soustraite de la quantité de correction en rétroaction au cours du cycle suivant de façon à amener la somme de la valeur d'apprentissage et de la quantité de correction en rétroaction à être constante (S366).

**3.** Dispositif de régulation selon la revendication 1 ou 2, **caractérisé en ce que** le mécanisme de régulation de quantité d'air aspirée (53, 54, 56) comprend un actuateur de pression (54, 56) qui régule la quantité d'air aspirée en réponse au signal, et le dispositif de contrôle (41) a par ailleurs pour fonctions de déterminer si l'actuateur de pression (54, 56) fait augmenter, ou non, la quantité d'air aspirée (S512), et de calculer différentes valeurs d'apprentissage pour la même valeur de correction intégrale quand l'actuateur de pression (54, 56) fait augmenter la quantité d'air aspirée et quand l'actuateur de pression (54, 56) ne fait pas augmenter la quantité d'air aspirée (S524, S536).

**4.** Dispositif de régulation selon l'une quelconque des revendications 1 à 3, **caractérisé en ce que** le dispositif de contrôle (41) a par ailleurs pour fonctions de déterminer si l'état de fonctionnement a dévié, ou non, par rapport à une région prédéterminée (S392), de calculer un écart de l'état de fonctionnement par rapport à la région prédéterminée quand l'état de fonctionnement a dévié par rapport à la région prédéterminée (S398), de calculer un coefficient de réflexion de région de fonctionnement sur la base de l'écart (S398), et de calculer la valeur d'apprentissage en corrigeant la valeur d'apprentissage avant que l'état de fonctionnement ait dévié par rapport à la région prédéterminée sur la base du coefficient de réflexion de région de fonctionnement (S400) .

**5.** Dispositif de régulation selon la revendication 4, **caractérisé en ce que** le coefficient de réflexion de région de fonctionnement est défini de façon à être plus petit à mesure que l'écart augmente, et le dispositif de contrôle (41) a par ailleurs pour fonctions de calculer la valeur d'apprentissage en multipliant la valeur d'apprentissage avant que l'état de fonctionnement ait dévié par rapport à la région prédéterminée, par le coefficient de réflexion de région de fonctionnement (S400).

**6.** Dispositif de régulation selon l'une quelconque des revendications 1 à 5, **caractérisé en ce que** le dispositif de contrôle (41) a par ailleurs pour fonctions de calculer un coefficient de réflexion de valeur cible de fonctionnement sur la base de la valeur de commande en boucle ouverte quand l'état de fonctionnement dévie par rapport à la région prédéterminée (S399), et de calculer la valeur d'apprentissage en corrigeant la valeur d'apprentissage avant que l'état de fonctionnement ait dévié par rapport à la région prédéterminée sur la base du coefficient de réflexion de valeur cible de fonctionnement (S400).

**7.** Dispositif de régulation selon l'une quelconque des revendications 1 à 6, **caractérisé en ce que** le compresseur de suralimentation (50) comprend un turbocompresseur (50) comprenant une turbine à gaz d'échappement (52) entraînée par des gaz d'échappement du moteur (1), et un compresseur qui fournit de l'air au moteur diesel (1) en accord avec la rotation de la turbine à gaz d'échappement (52), le mécanisme de régulation de quantité d'air aspirée (53, 54, 55, 56) comprend un actuateur de pression (54, 56) qui règle une zone de surface de section transversale de chemin d'écoulement des gaz d'échappement qui entraîne la turbine à gaz d'échappement (52) en accord avec le signal, et le dispositif de contrôle (41) a par ailleurs pour fonctions d'exécuter un premier processus d'avance consistant à définir la valeur de commande en boucle ouverte dans le but de compenser un délai dans la variation de la quantité d'air aspirée en fonction d'un débit d'écoulement de gaz d'échappement du moteur diesel (1) (S324, S325, S326, S327, S328, S329, S330), et d'exécuter un second processus d'avance dans le but de compenser un délai de réponse de l'actuateur de pression (54, 56) sur le signal délivré en sortie par le dispositif de contrôle (41) vers l'actuateur de pression (54, 56) (S425, S426, S427, S428, S430, S431).

**8.** Procédé de régulation d'un compresseur de suralimentation (50) d'un moteur (1), le compresseur de suralimentation (50) comprenant un mécanisme (53, 54, 55, 56) servant à réguler une quantité d'air aspirée du moteur (1) sur la base d'un signal, le procédé comprenant les étapes consistant à :

détecter un état de fonctionnement du moteur (1) ;
détecter une quantité d'air aspirée d'un moteur (1) ;
définir une quantité d'air aspirée cible du moteur (1) sur la base de l'état de fonctionnement (S115, S116) ;
calculer une valeur cible de fonctionnement du mécanisme de régulation de quantité d'air aspirée (53, 54, 56) sur la base de la quantité d'air aspirée cible (S312, S313) ; définir une valeur de commande en boucle ouverte du signal sur la base de la valeur cible de fonctionnement (S243, S244) ;
calculer une quantité de correction en rétroaction du signal de façon à amener la valeur de fonctionnement à coïncider avec la valeur cible de fonctionnement (S367) ;
calculer une valeur d'apprentissage sur la base de la quantité de correction en rétroaction quand une valeur de fonctionnement coïncide avec la valeur cible de fonctionnement (S395, S400) ;
délivrer en sortie un signal déterminé sur la base de la valeur de commande en boucle ouverte, la quantité de correction en rétroaction et la valeur d'apprentissage, vers le mécanisme de régulation de quantité d'air aspirée (53, 54, 56) (S412) ;
**caractérisé en ce que** :

la valeur de fonctionnement est la quantité d'air aspirée du moteur (1) ; et le procédé comprend en outre les étapes consistant à :

calculer la quantité de correction en rétroaction incluant une valeur de correction intégrale du signal de façon à amener la quantité d'air aspirée à coïncider avec la quantité cible d'air aspirée (S367) ;
modifier la quantité de correction en rétroaction de façon à amener la somme de la valeur d'apprentissage et de la quantité de correction en rétroaction à être constante (S366) ; et
délivrer en sortie le signal déterminé sur la base de la valeur de commande en boucle ouverte, la valeur d'apprentissage et une quantité de correction en rétroaction modifiée, vers le mécanisme de régulation de quantité d'air aspirée (53, 54, 56) (S412).

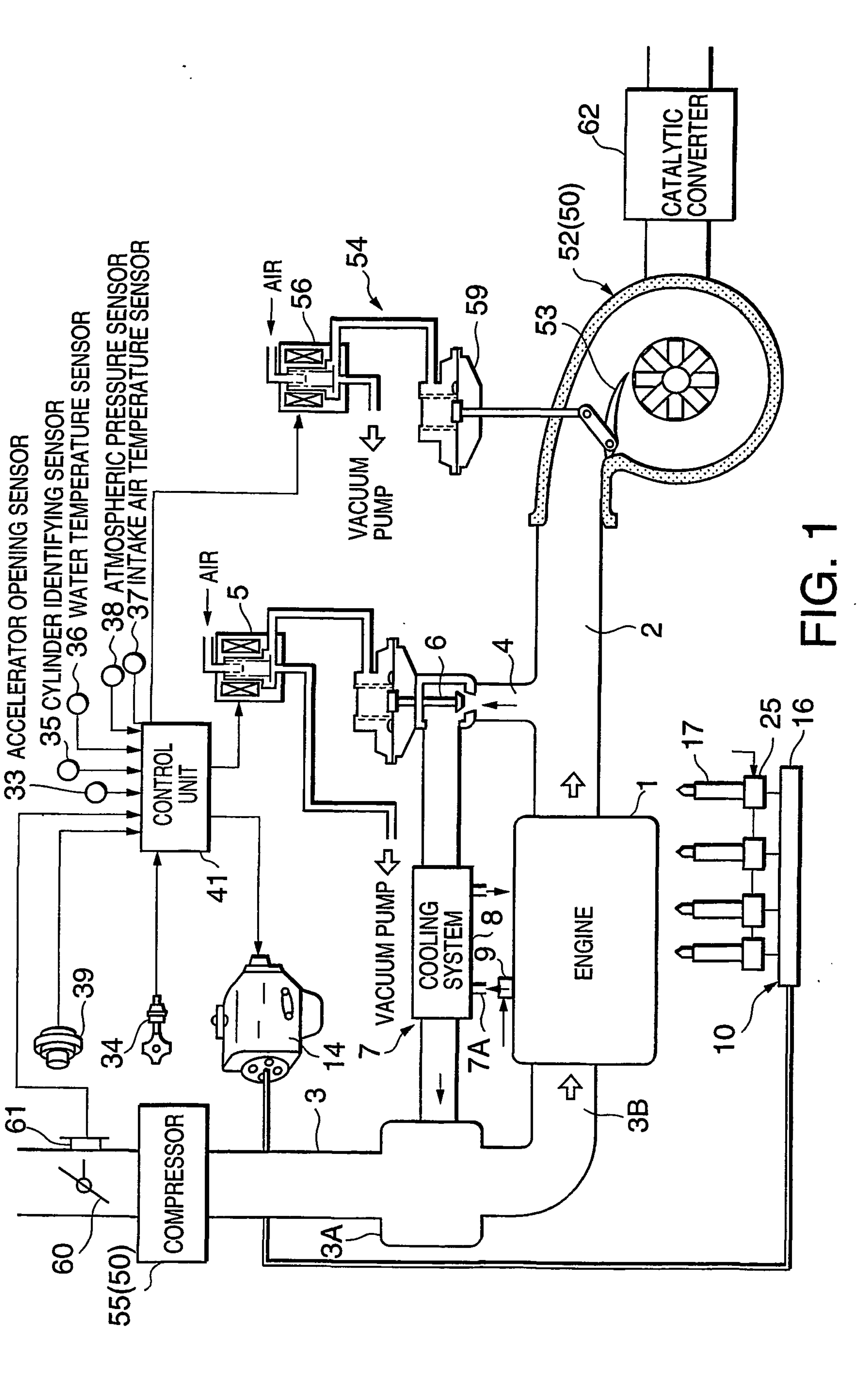
33 ACCELERATOR OPENING SENSOR
35 CYLINDER IDENTIFYING SENSOR
36 WATER TEMPERATURE SENSOR
38 ATMOSPHERIC PRESSURE SENSOR
37 INTAKE AIR TEMPERATURE SENSOR
CONTROL UNIT
41
39
34
14
COMPRESSOR
55(50)
60
61
3
3A
3B
VACUUM PUMP
COOLING SYSTEM
7
7A
8
9
ENGINE
1
2
4
5
6
AIR
VACUUM PUMP
56
54
59
53
52(50)
62
CATALYTIC CONVERTER
10
16
17
25

FIG. 1

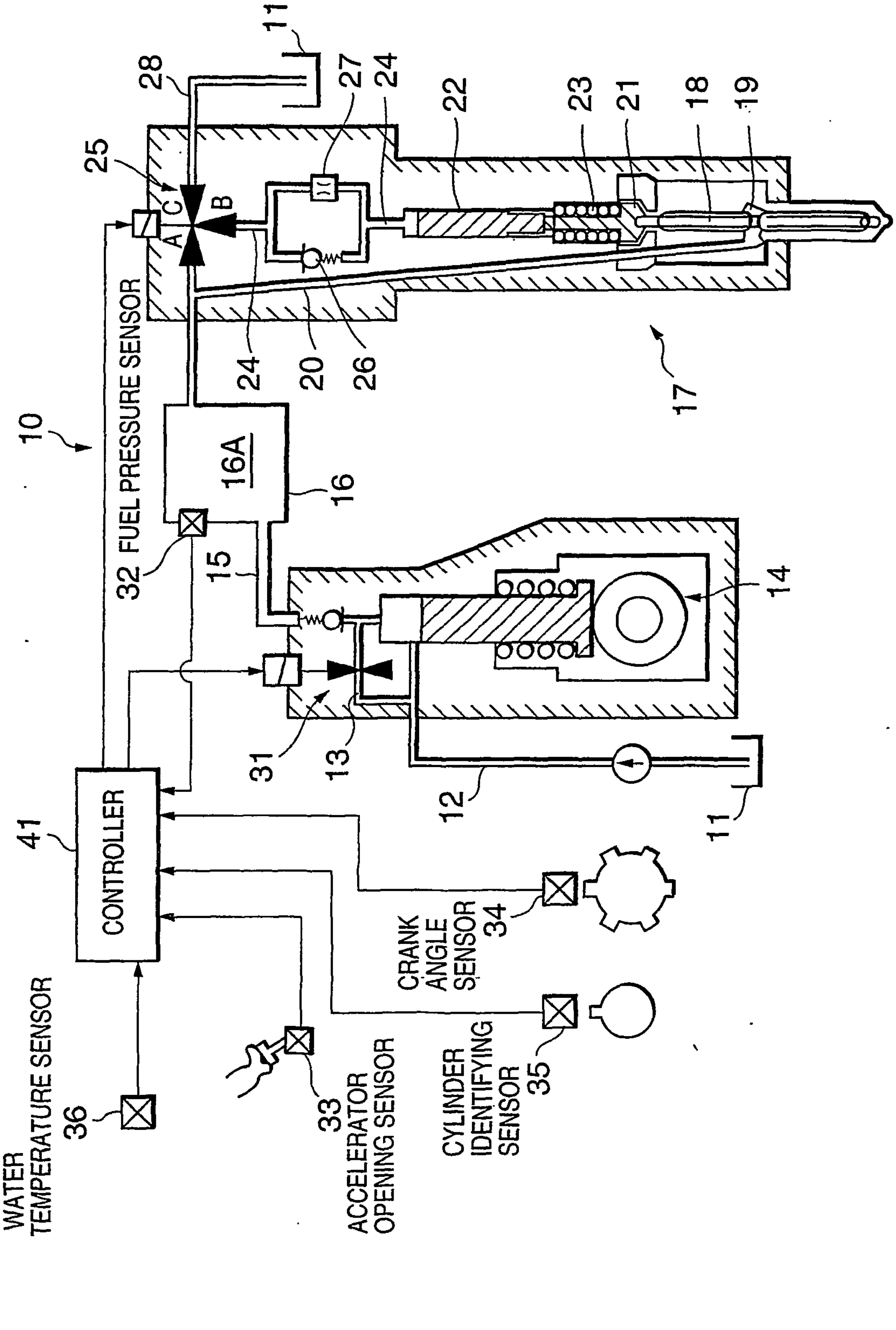
10
11
12
13
14
15
16
16A
17
18
19
20
21
22
23
24
25
26
27
28
A
B
C
32 FUEL PRESSURE SENSOR
31
41 CONTROLLER
CRANK ANGLE SENSOR 34
CYLINDER IDENTIFYING SENSOR 35
ACCELERATOR OPENING SENSOR 33
WATER TEMPERATURE SENSOR 36

FIG. 2

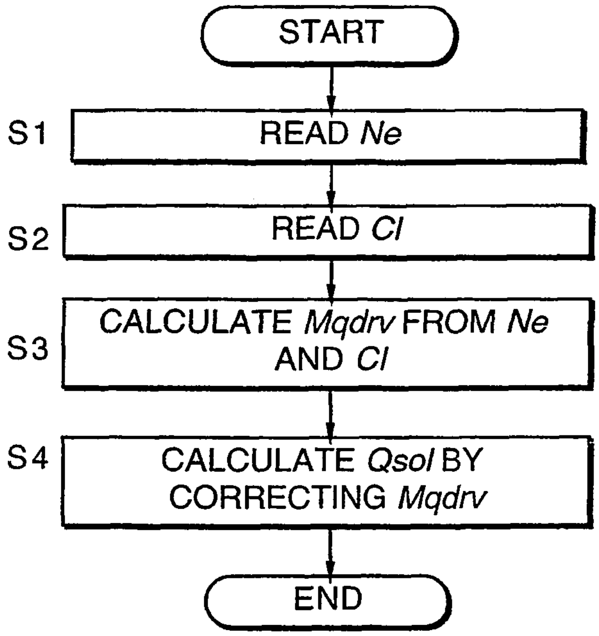


FIG. 3
PRIOR ART

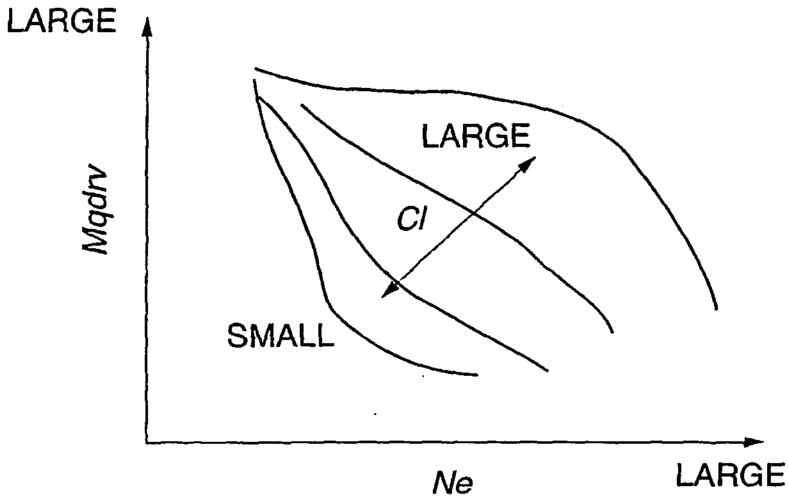


FIG. 4
PRIOR ART

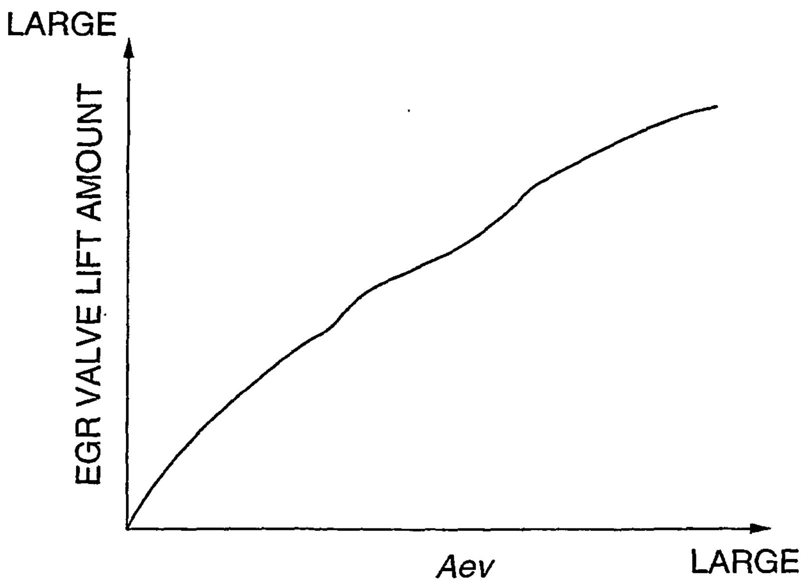


FIG. 5

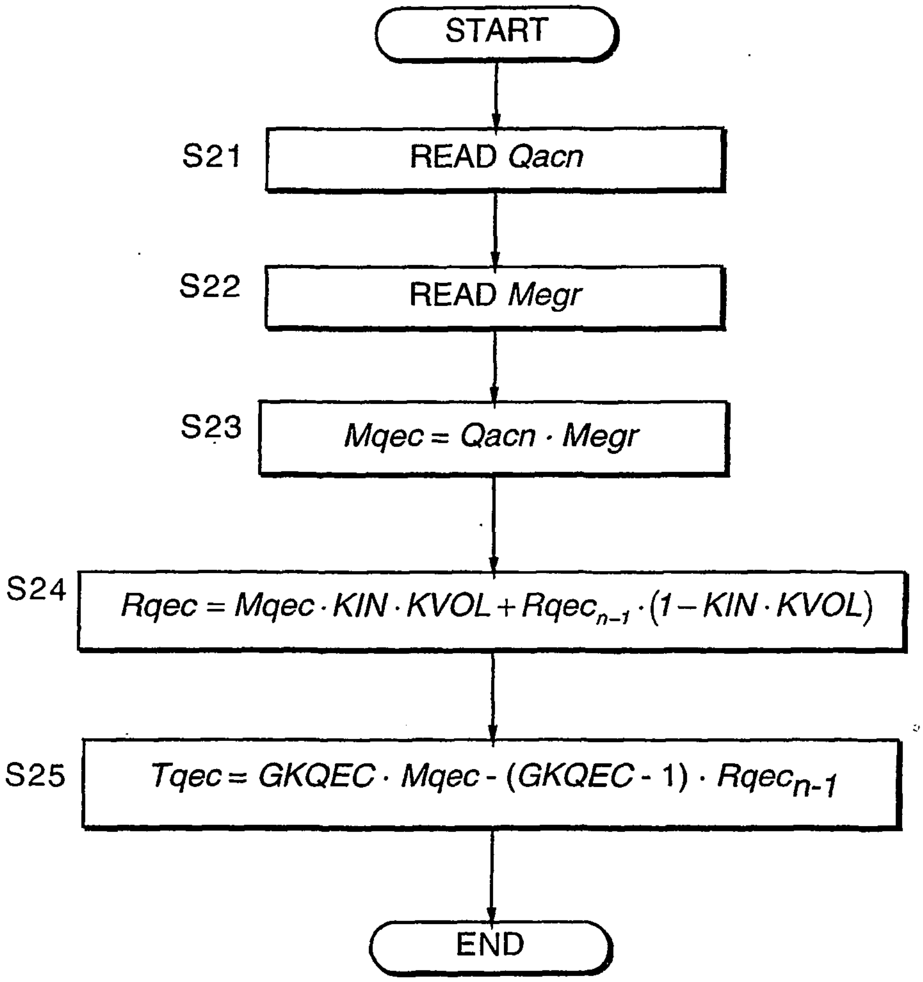
START
S21
READ Qacn
S22
READ Megr
S23
Mqec = Qacn · Megr
S24
Rqec = Mqec · KIN · KVOL + Rqec_{n-1} · (1 − KIN · KVOL)
S25
Tqec = GKQEC · Mqec - (GKQEC - 1) · Rqec_{n-1}
END

FIG. 6

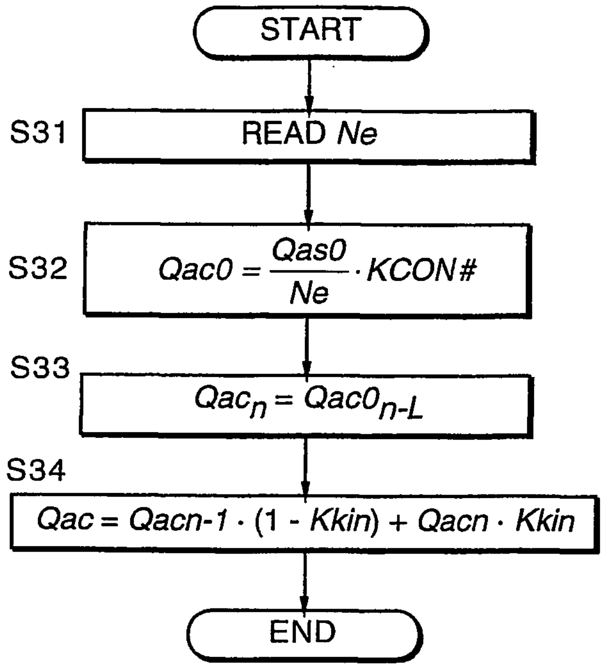


FIG. 7
PRIOR ART

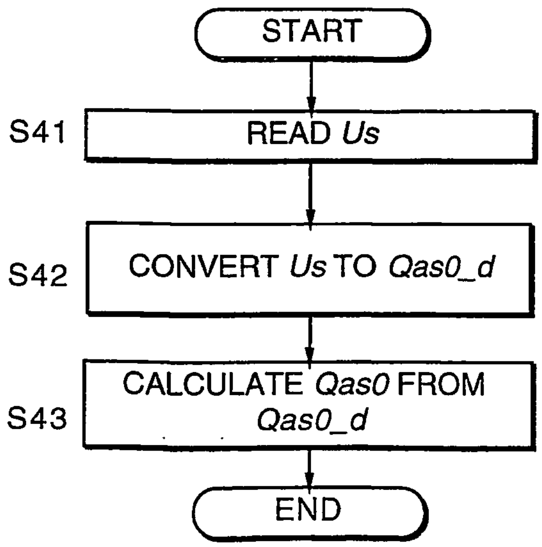


FIG. 8
PRIOR ART

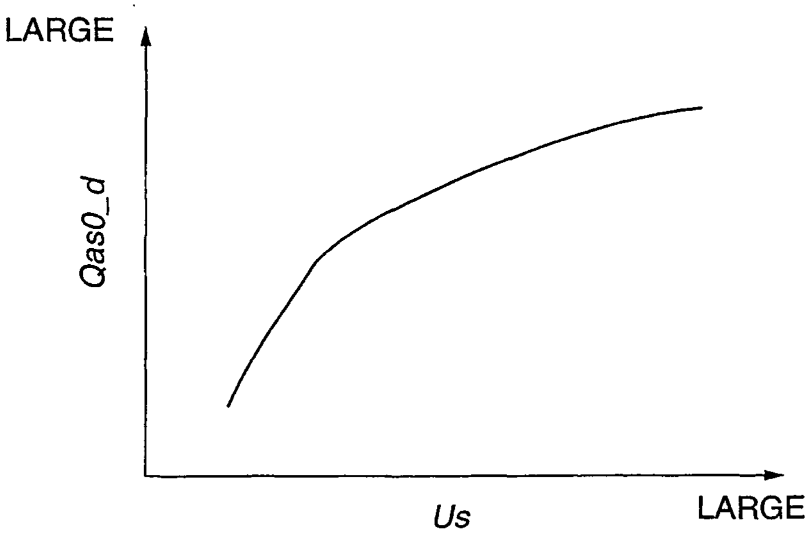


FIG. 9
PRIOR ART

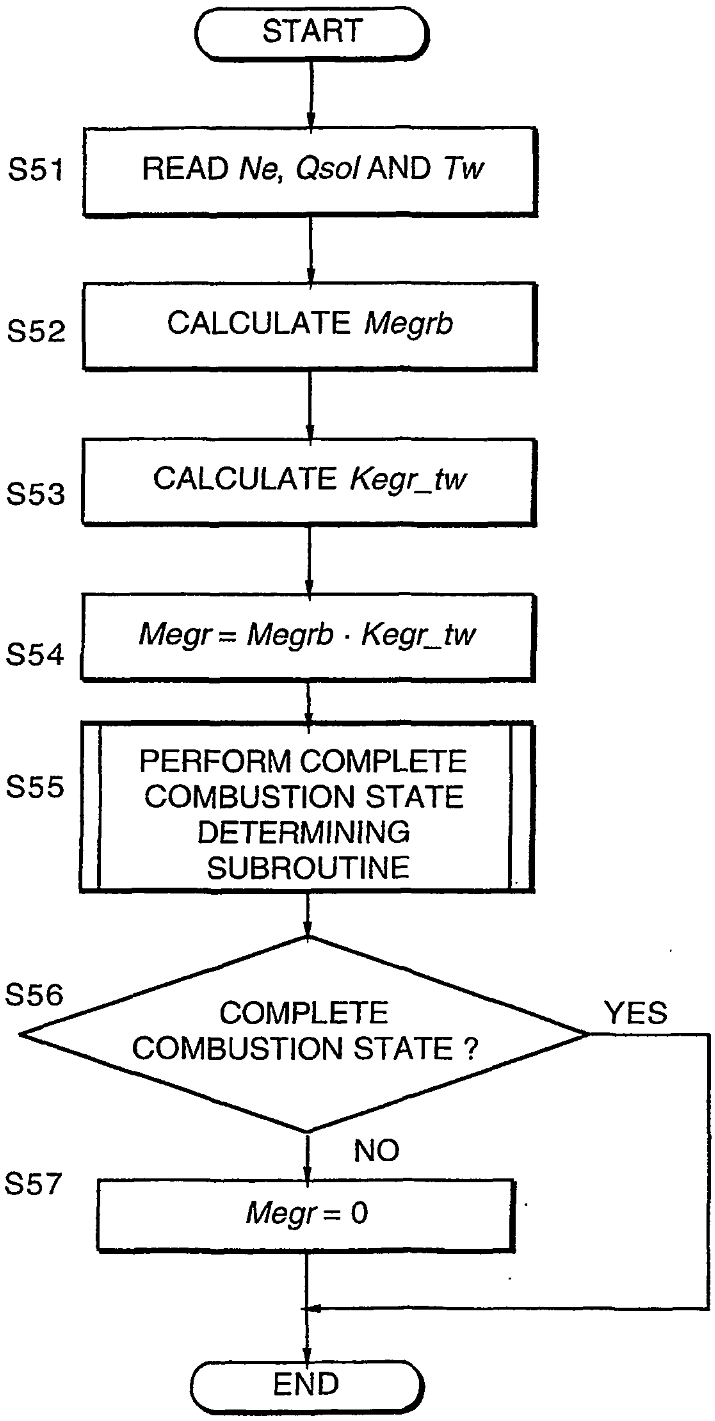


FIG. 10
PRIOR ART

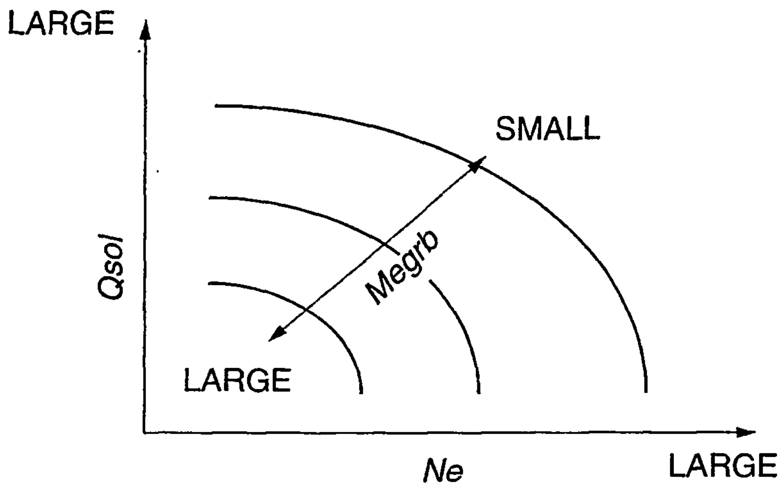


FIG. 11
PRIOR ART

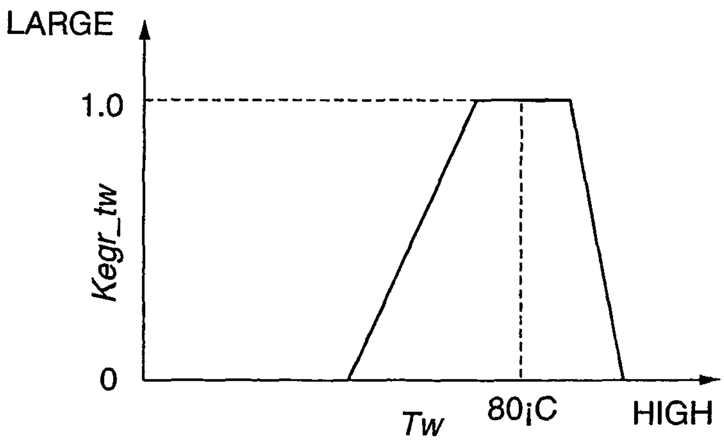


FIG. 12
PRIOR ART

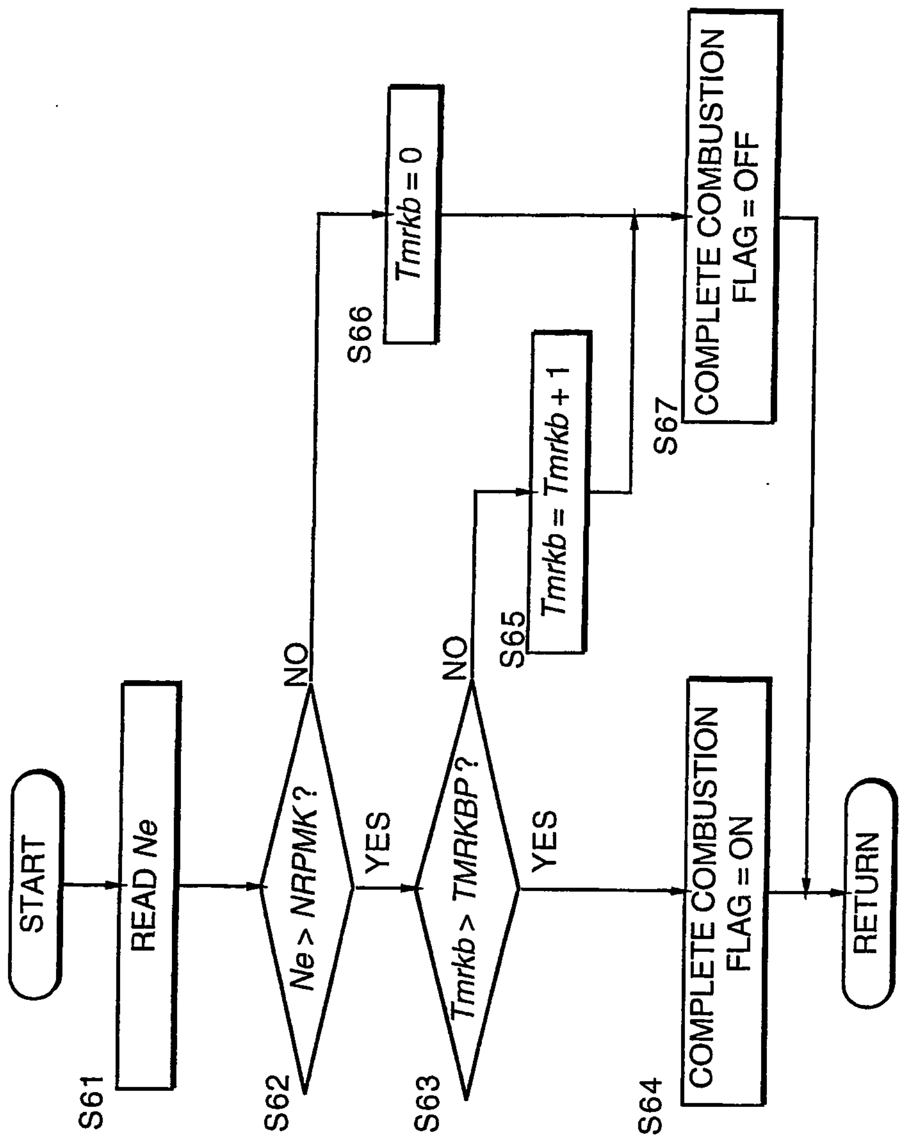


FIG. 13
PRIOR ART

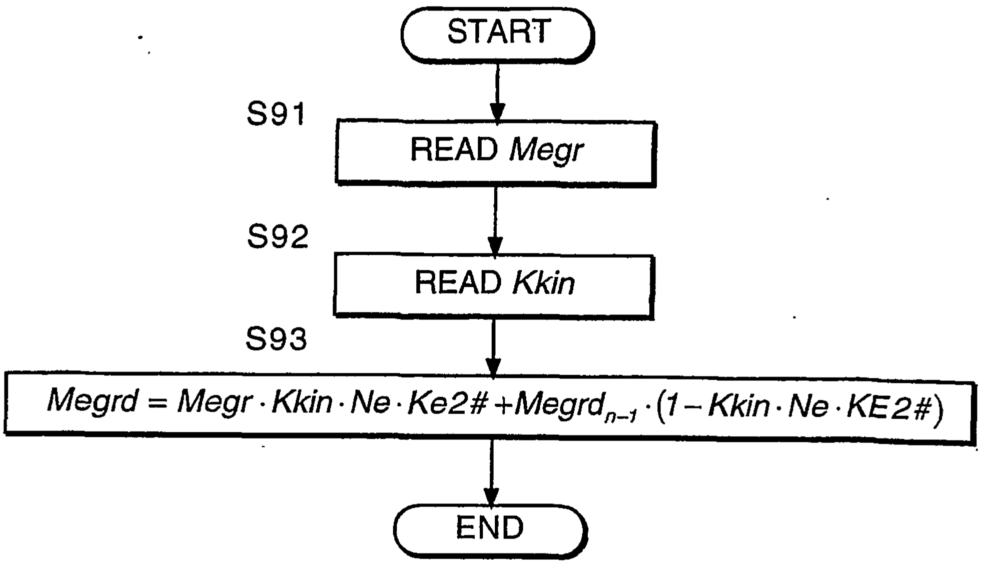
START
S91
READ Megr
S92
READ Kkin
S93
Megrd = Megr · Kkin · Ne · Ke2# + Megrd_{n-1} · (1 − Kkin · Ne · KE2#)
END

FIG. 14

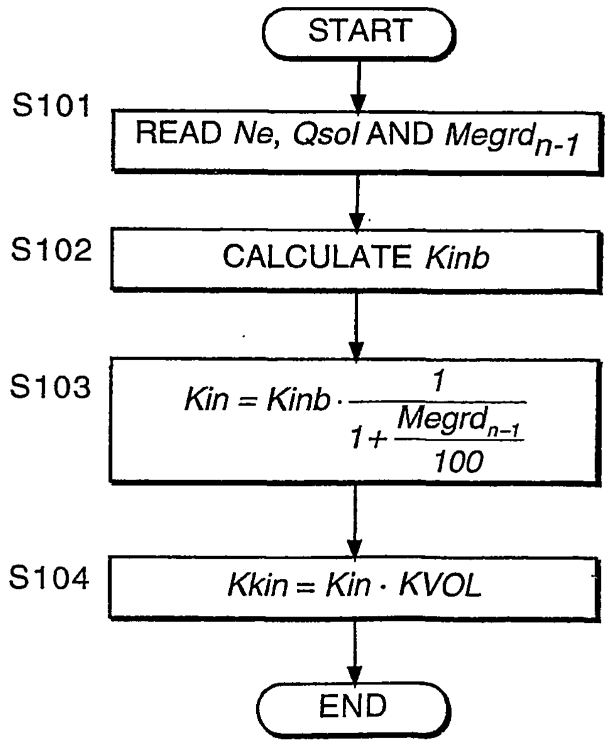
START
S101
READ Ne, Qsol AND Megrd_{n-1}
S102
CALCULATE Kinb
S103
Kin = Kinb · 1 / (1 + Megrd_{n-1} / 100)
S104
Kkin = Kin · KVOL
END

FIG. 15

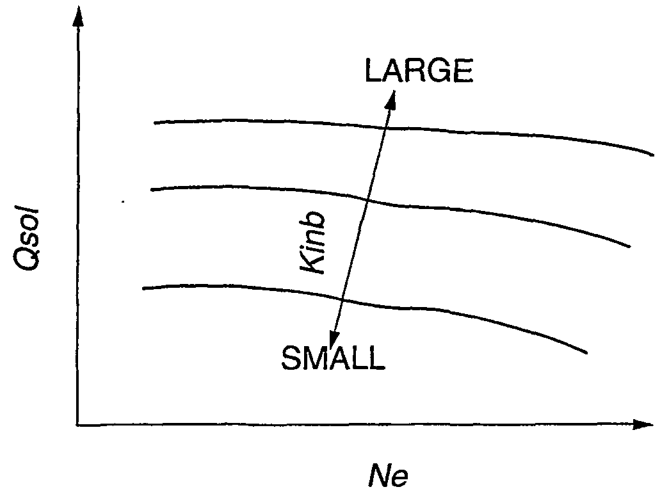


FIG. 16

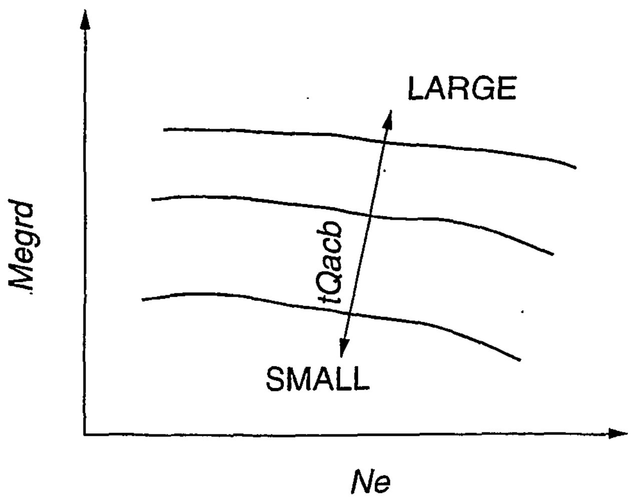


FIG. 18

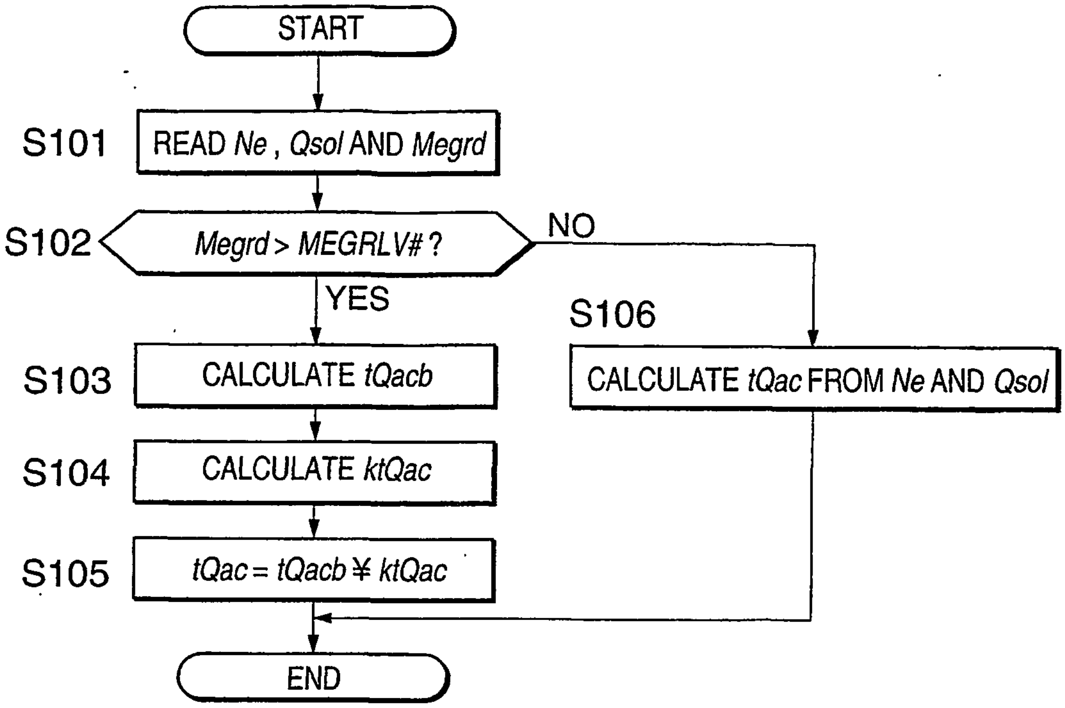
START
S101
READ Ne , Qsol AND Megrd
S102
Megrd > MEGRLV# ?
NO
YES
S106
CALCULATE tQac FROM Ne AND Qsol
S103
CALCULATE tQacb
S104
CALCULATE ktQac
S105
tQac = tQacb ¥ ktQac
END

FIG. 17

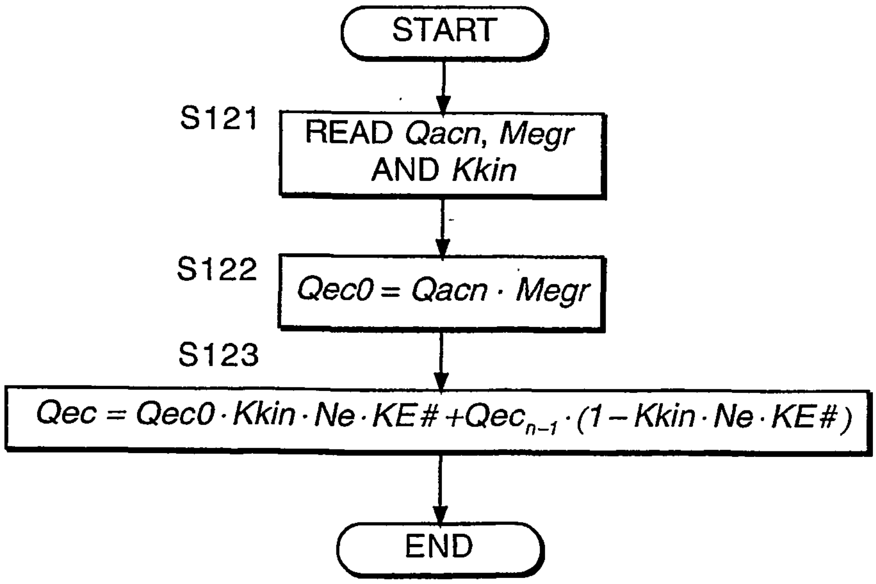
START
S121
READ Qacn, Megr AND Kkin
S122
Qec0 = Qacn · Megr
S123
Qec = Qec0 · Kkin · Ne · KE# +Qec_{n-1} · (1 − Kkin · Ne · KE#)
END

FIG. 21

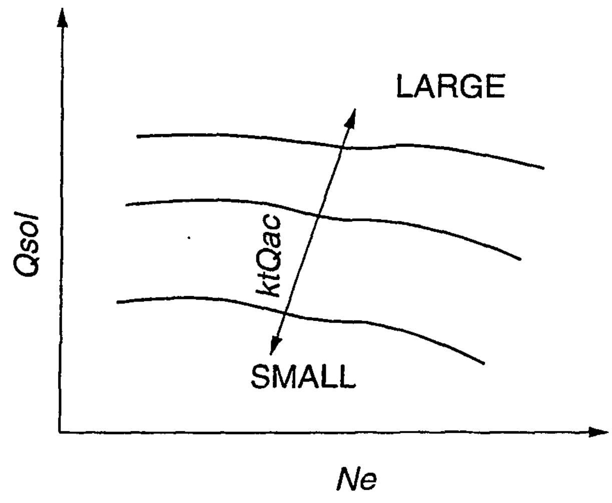


FIG. 19

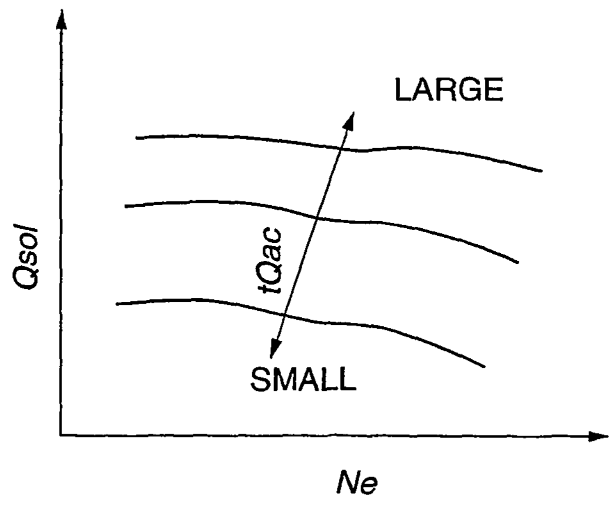


FIG. 20

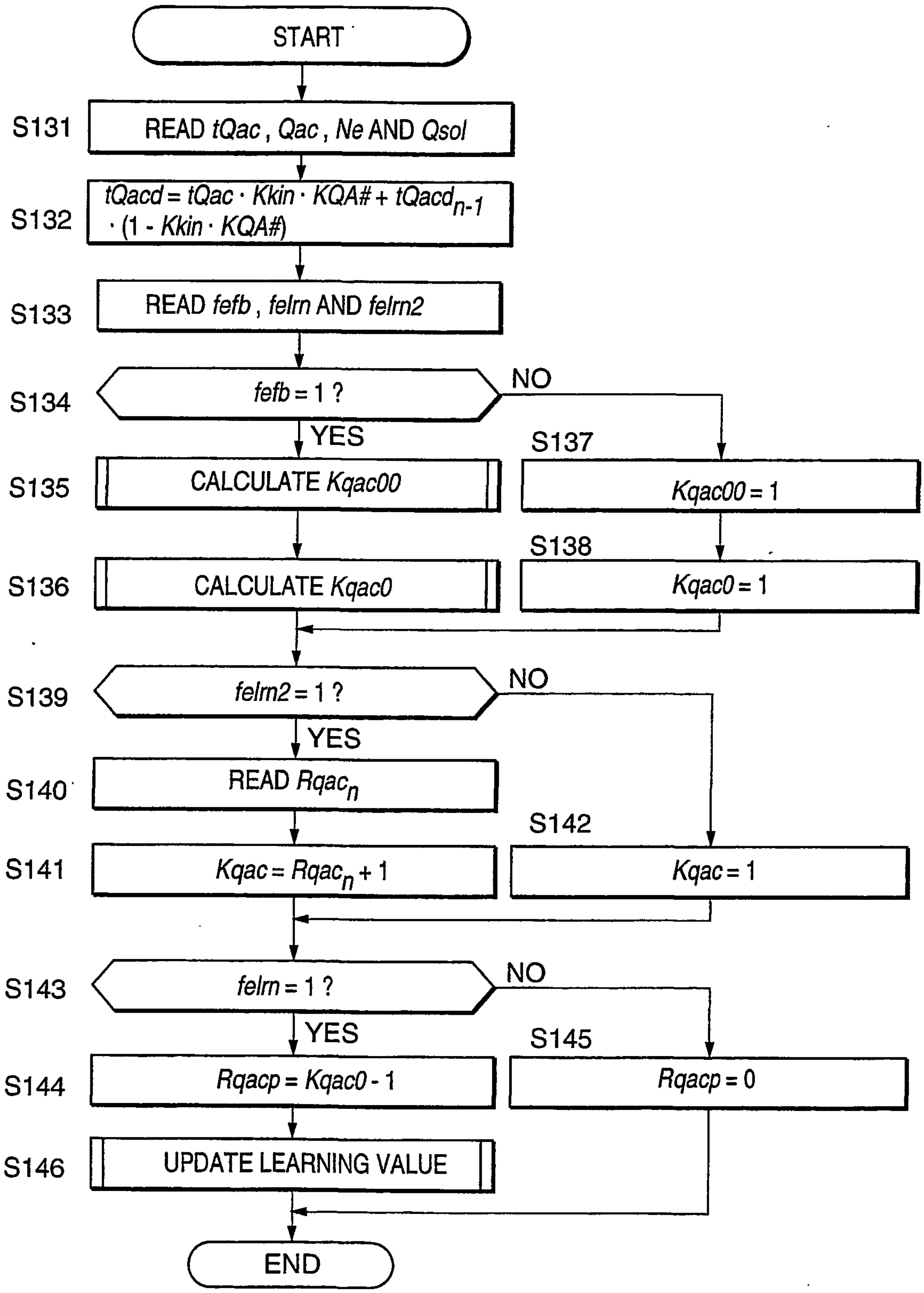
START
S131
READ tQac, Qac, Ne AND Qsol
S132
tQacd = tQac · Kkin · KQA# + tQacd$_{n-1}$ · (1 - Kkin · KQA#)
S133
READ fefb, felrn AND felrn2
S134
fefb = 1 ?
NO
YES
S135
CALCULATE Kqac00
S137
Kqac00 = 1
S136
CALCULATE Kqac0
S138
Kqac0 = 1
S139
felrn2 = 1 ?
NO
YES
S140
READ Rqac$_n$
S141
Kqac = Rqac$_n$ + 1
S142
Kqac = 1
S143
felrn = 1 ?
NO
YES
S144
Rqacp = Kqac0 - 1
S145
Rqacp = 0
S146
UPDATE LEARNING VALUE
END

FIG. 22

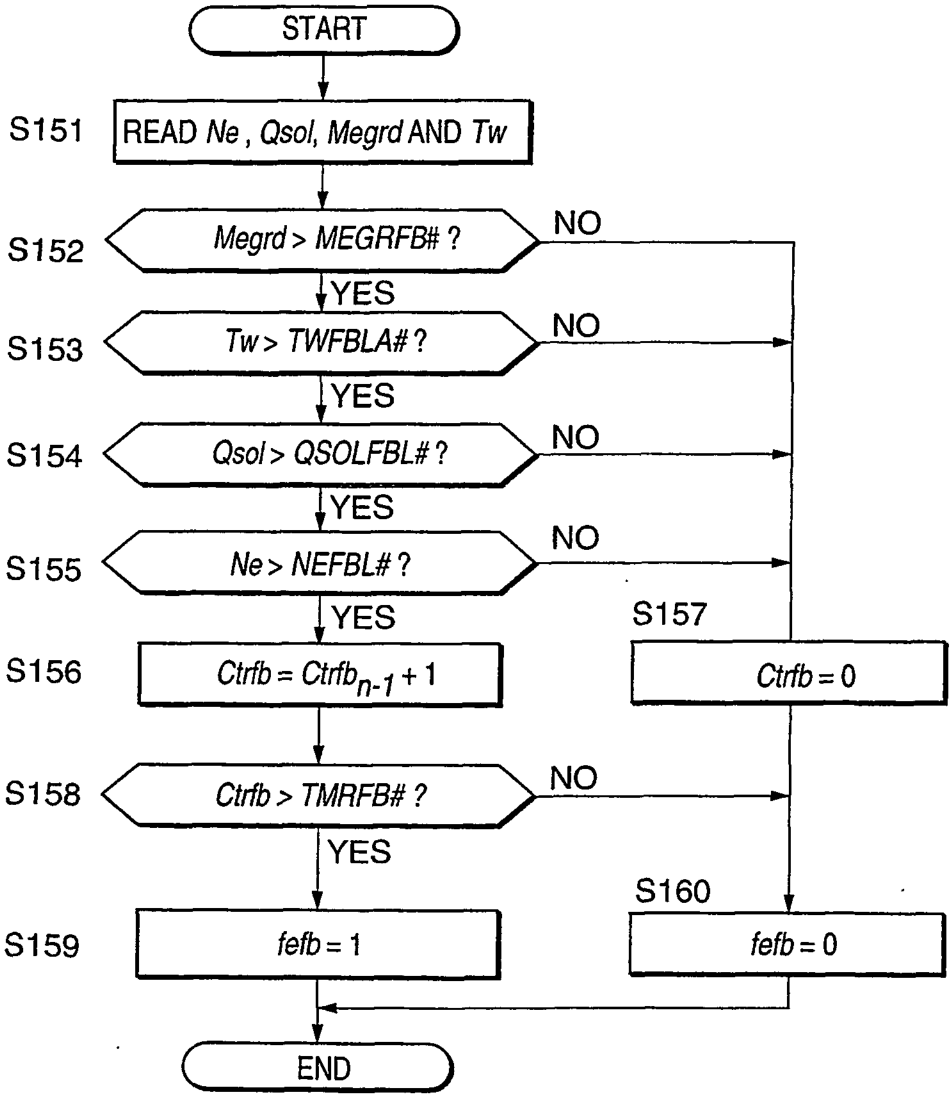
START
S151
READ Ne, Qsol, Megrd AND Tw
S152
Megrd > MEGRFB# ?
NO
YES
S153
Tw > TWFBLA# ?
NO
YES
S154
Qsol > QSOLFBL# ?
NO
YES
S155
Ne > NEFBL# ?
NO
YES
S156
Ctrfb = Ctrfbn-1 + 1
S157
Ctrfb = 0
S158
Ctrfb > TMRFB# ?
NO
YES
S159
fefb = 1
S160
fefb = 0
END

FIG. 23

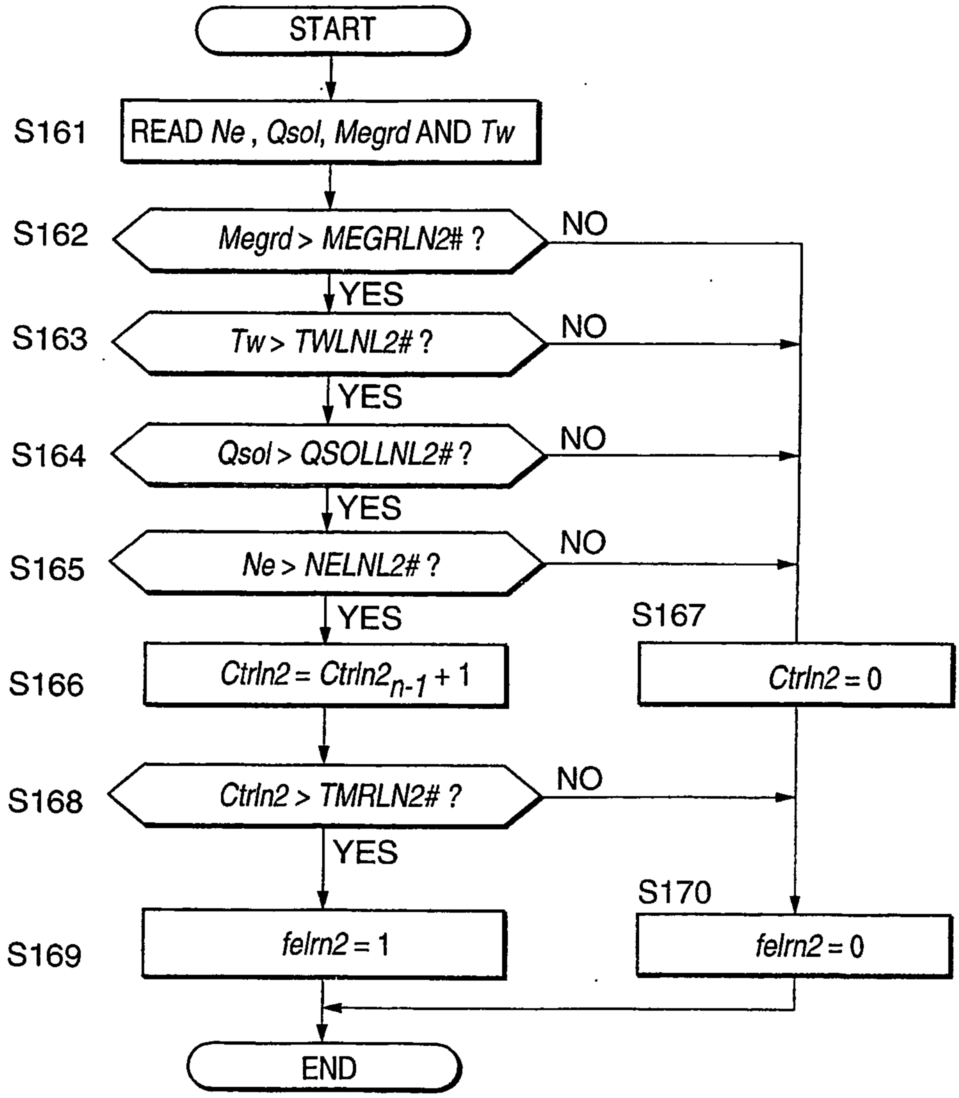
START
S161
READ Ne , Qsol, Megrd AND Tw
S162
Megrd > MEGRLN2# ?
NO
YES
S163
Tw > TWLNL2# ?
NO
YES
S164
Qsol > QSOLLNL2# ?
NO
YES
S165
Ne > NELNL2# ?
NO
YES
S166
Ctrln2 = Ctrln2n-1 + 1
S167
Ctrln2 = 0
S168
Ctrln2 > TMRLN2# ?
NO
YES
S169
felrn2 = 1
S170
felrn2 = 0
END

FIG. 24

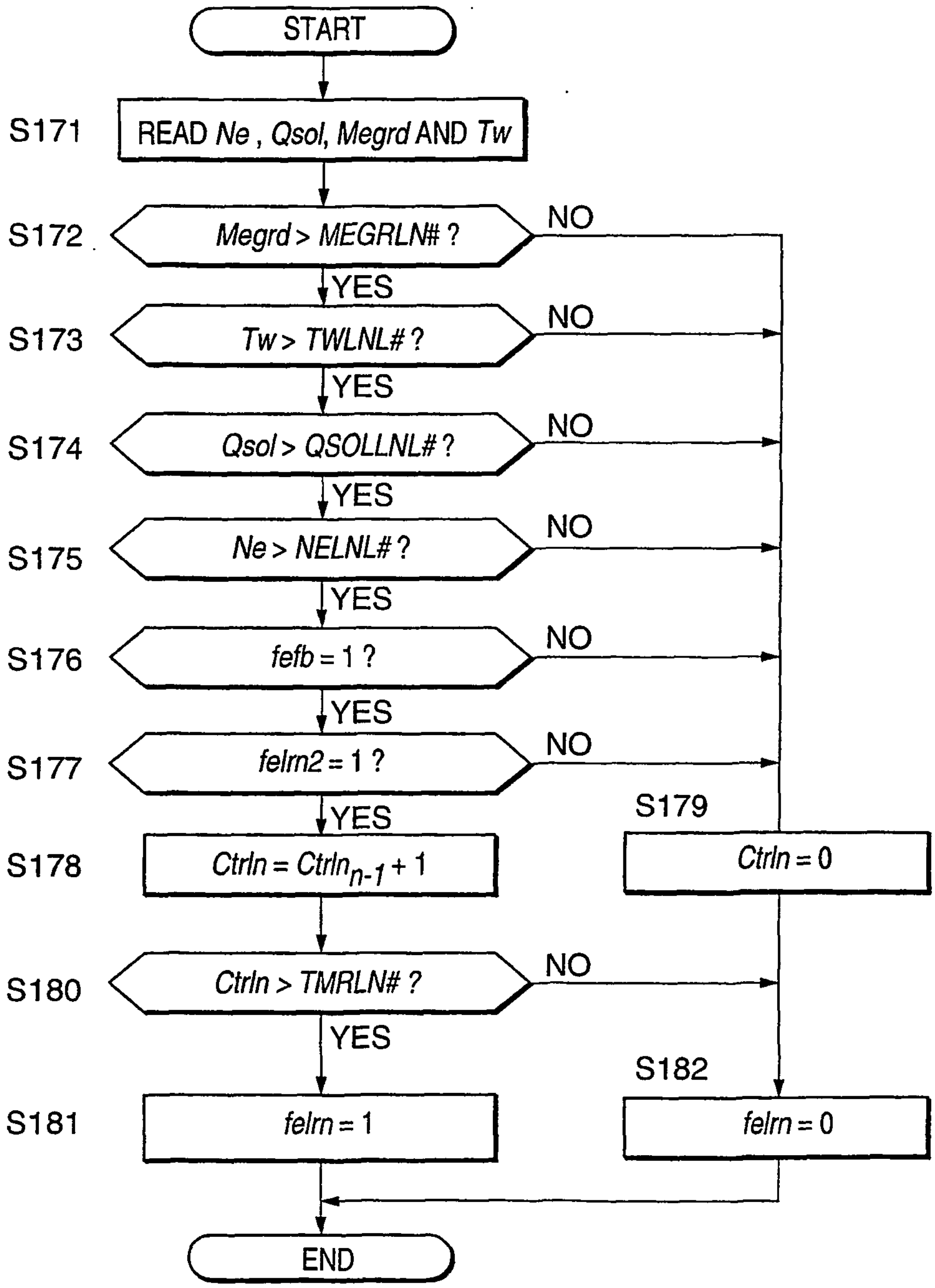
START
S171
READ Ne, Qsol, Megrd AND Tw
S172
Megrd > MEGRLN# ?
NO
YES
S173
Tw > TWLNL# ?
NO
YES
S174
Qsol > QSOLLNL# ?
NO
YES
S175
Ne > NELNL# ?
NO
YES
S176
fefb = 1 ?
NO
YES
S177
felrn2 = 1 ?
NO
YES
S178
Ctrln = Ctrln_n-1 + 1
S179
Ctrln = 0
S180
Ctrln > TMRLN# ?
NO
YES
S181
felrn = 1
S182
felrn = 0
END

FIG. 25

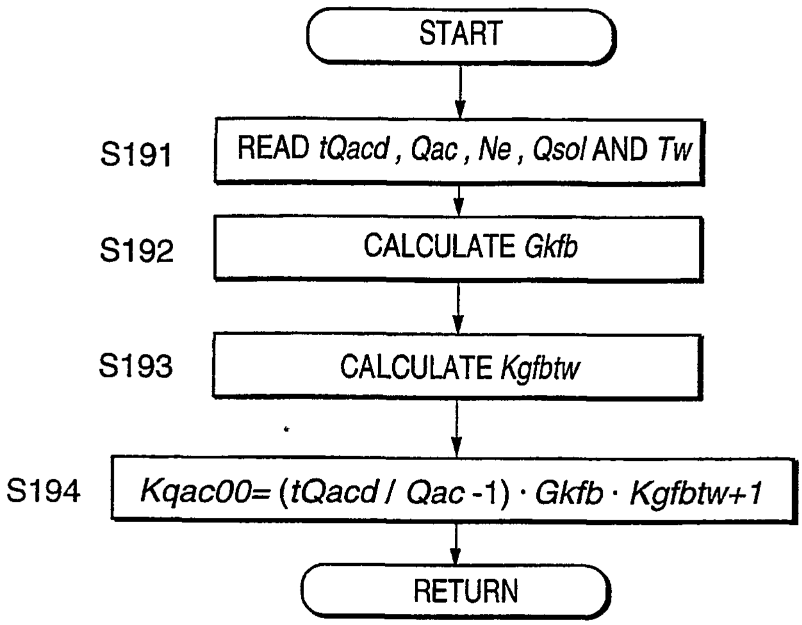
START
S191
READ tQacd, Qac, Ne, Qsol AND Tw
S192
CALCULATE Gkfb
S193
CALCULATE Kgfbtw
S194
Kqac00= (tQacd / Qac -1) · Gkfb · Kgfbtw+1
RETURN

FIG. 26

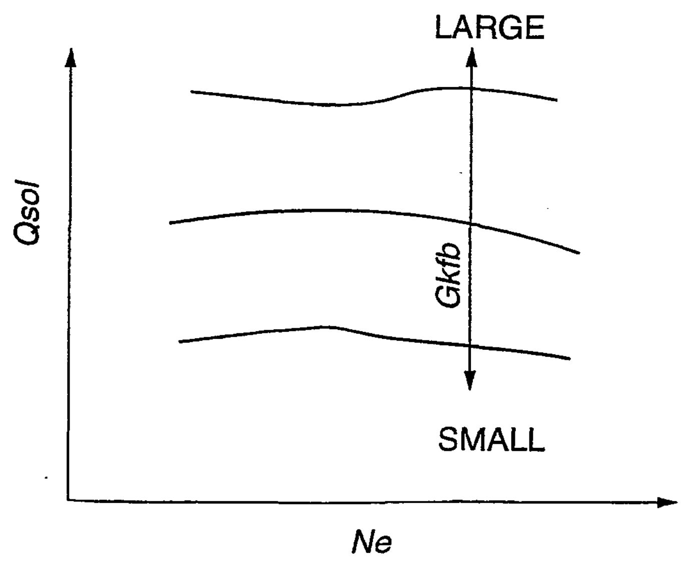
LARGE
Qsol
Gkfb
SMALL
Ne

FIG. 27

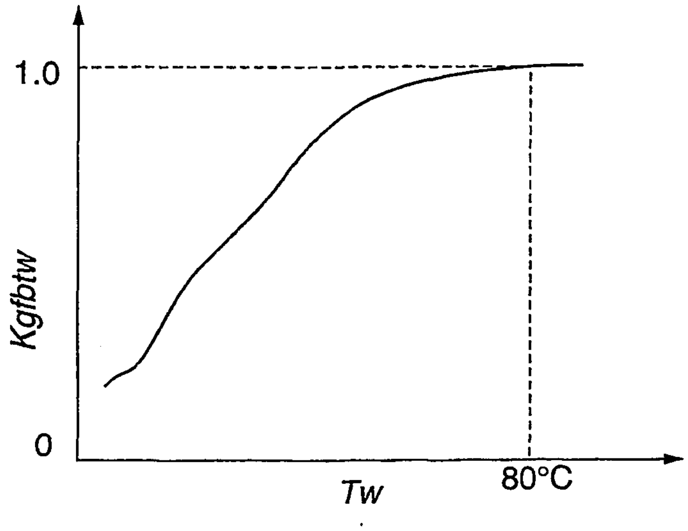
1.0
Kgfbtw
0
Tw
80°C

FIG. 28

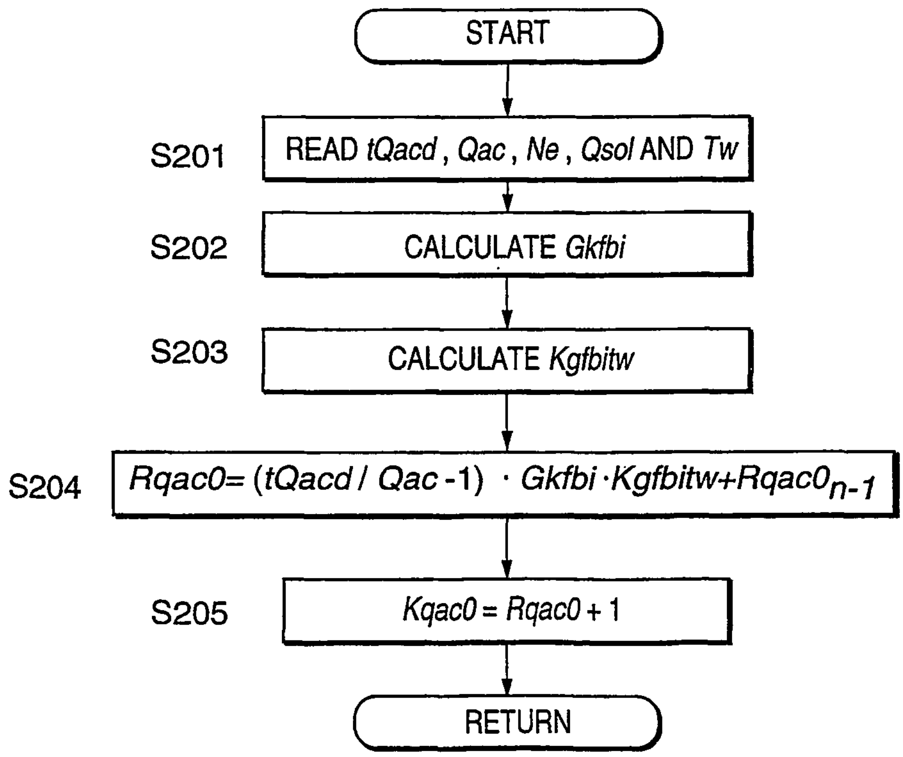
START
S201
READ tQacd, Qac, Ne, Qsol AND Tw
S202
CALCULATE Gkfbi
S203
CALCULATE Kgfbitw
S204
Rqac0= (tQacd / Qac -1) · Gkfbi ·Kgfbitw+Rqac0n-1
S205
Kqac0 = Rqac0 + 1
RETURN

FIG. 29

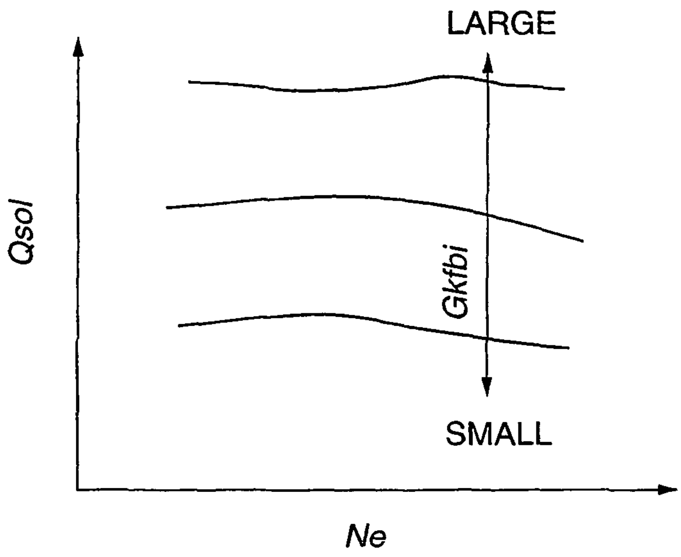


FIG. 30

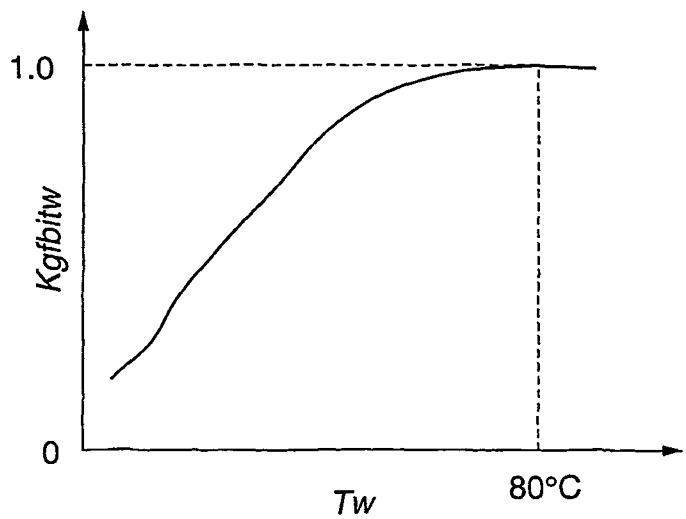


FIG. 31

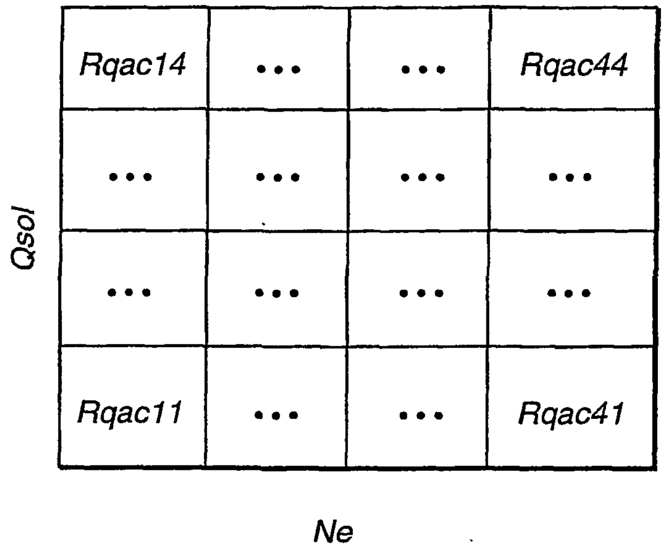
Rqac14
Rqac44
Rqac11
Rqac41
Qsol
Ne

FIG. 32

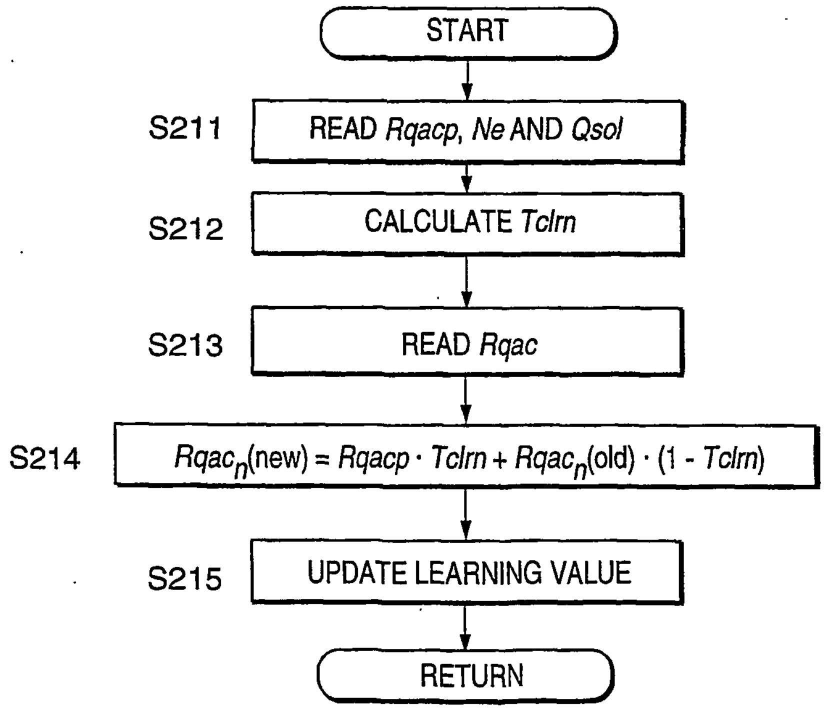
START
S211
READ Rqacp, Ne AND Qsol
S212
CALCULATE Tclrn
S213
READ Rqac
S214
$Rqac_n(new) = Rqacp \cdot Tclrn + Rqac_n(old) \cdot (1 - Tclrn)$
S215
UPDATE LEARNING VALUE
RETURN

FIG. 33

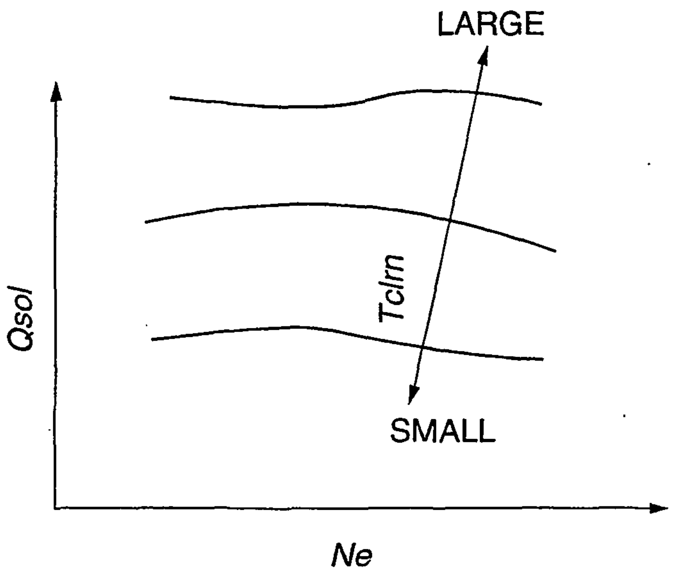


FIG. 34

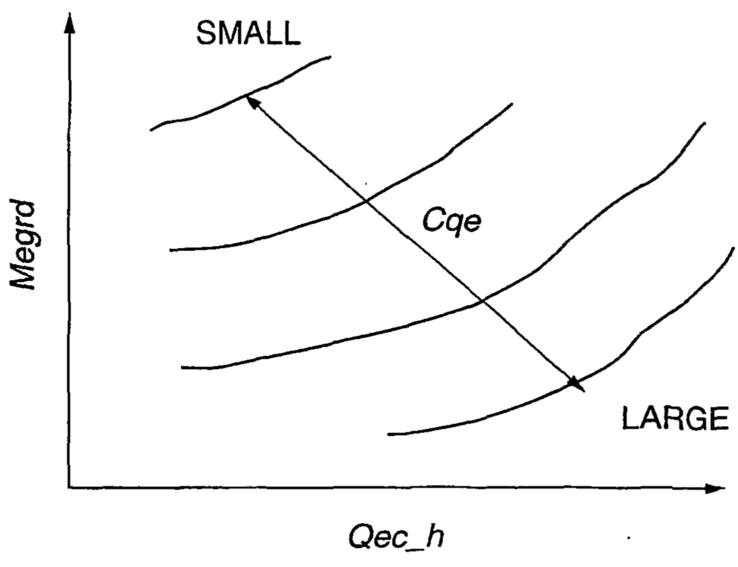


FIG. 36

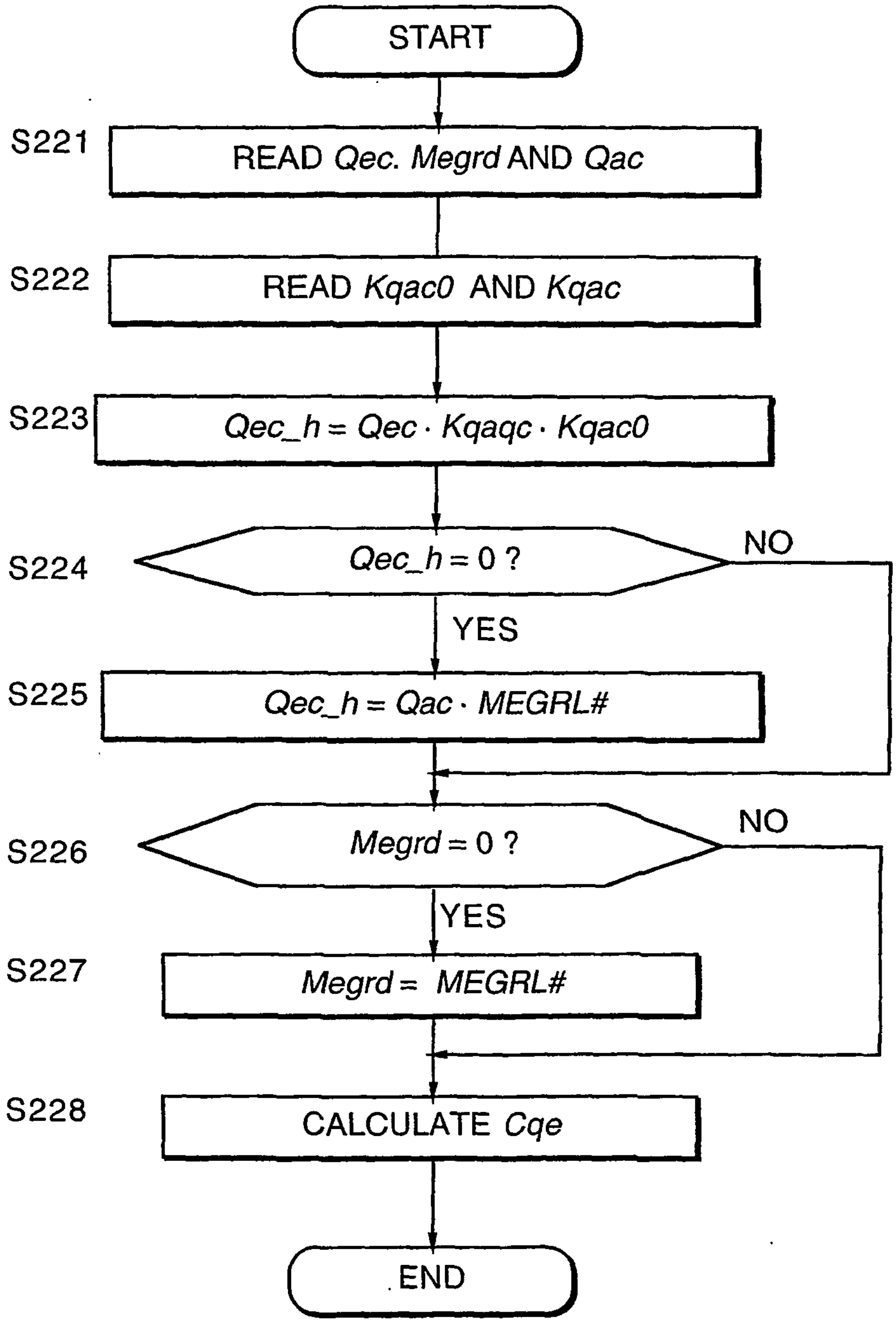
START
S221
READ Qec. Megrd AND Qac
S222
READ Kqac0 AND Kqac
S223
Qec_h = Qec · Kqaqc · Kqac0
S224
Qec_h = 0 ?
NO
YES
S225
Qec_h = Qac · MEGRL#
S226
Megrd = 0 ?
NO
YES
S227
Megrd = MEGRL#
S228
CALCULATE Cqe
END

FIG. 35

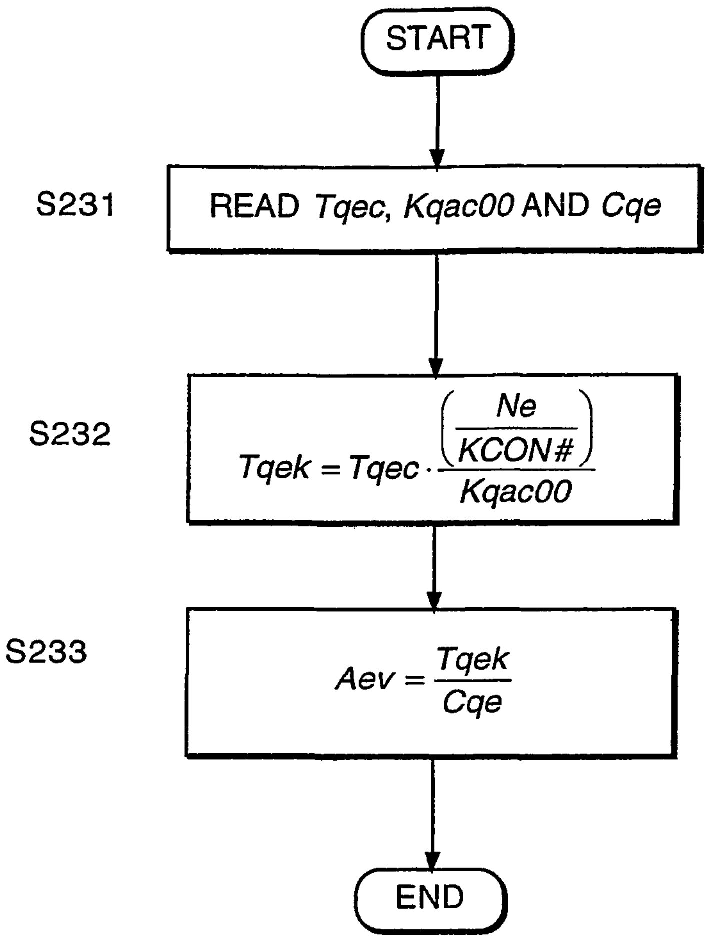
START
S231
READ Tqec, Kqac00 AND Cqe
S232
$Tqek = Tqec \cdot \frac{\left(\frac{Ne}{KCON\#}\right)}{Kqac00}$
S233
$Aev = \frac{Tqek}{Cqe}$
END

FIG.37

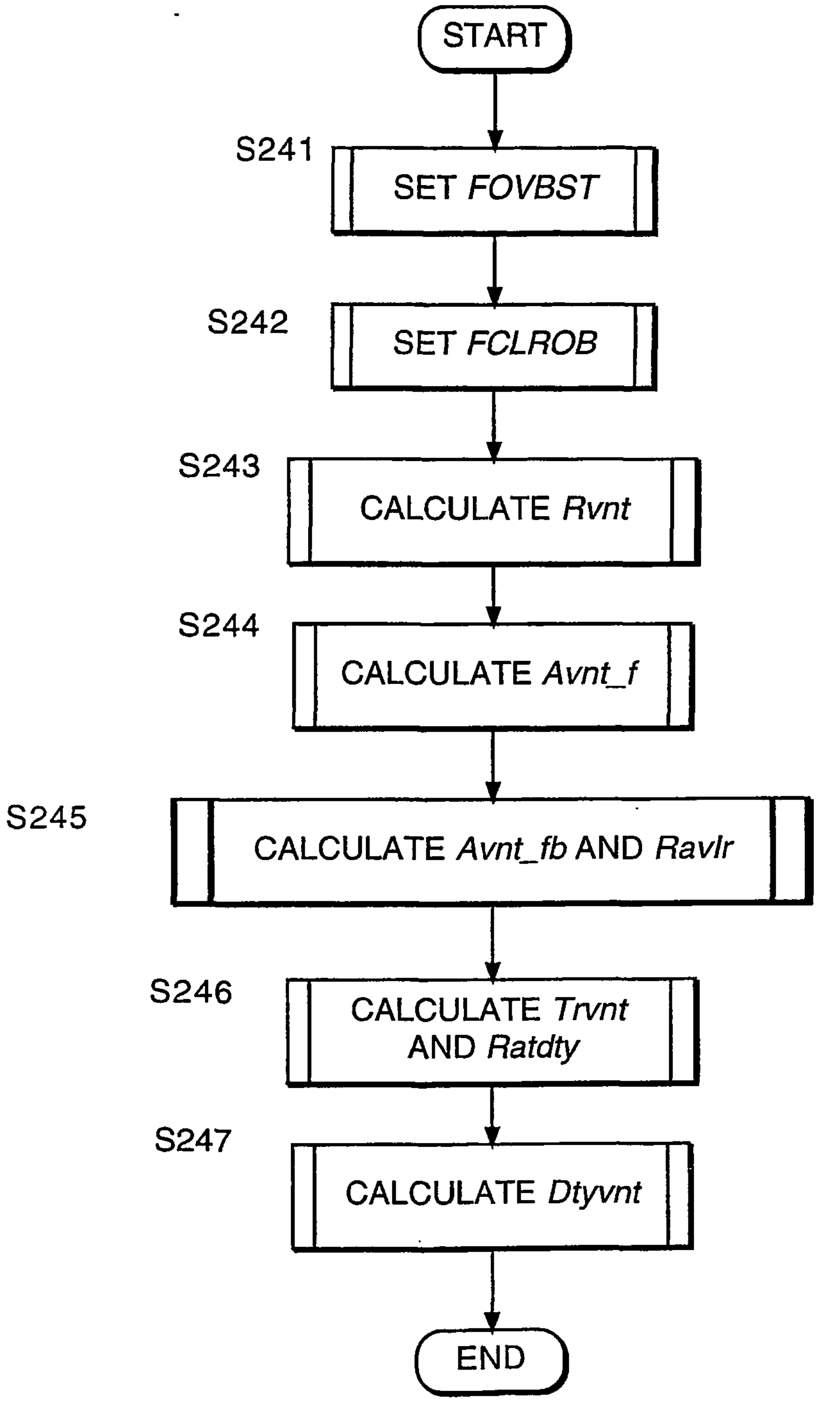
START
S241
SET FOVBST
S242
SET FCLROB
S243
CALCULATE Rvnt
S244
CALCULATE Avnt_f
S245
CALCULATE Avnt_fb AND Ravlr
S246
CALCULATE Trvnt AND Ratdty
S247
CALCULATE Dtyvnt
END

FIG. 38

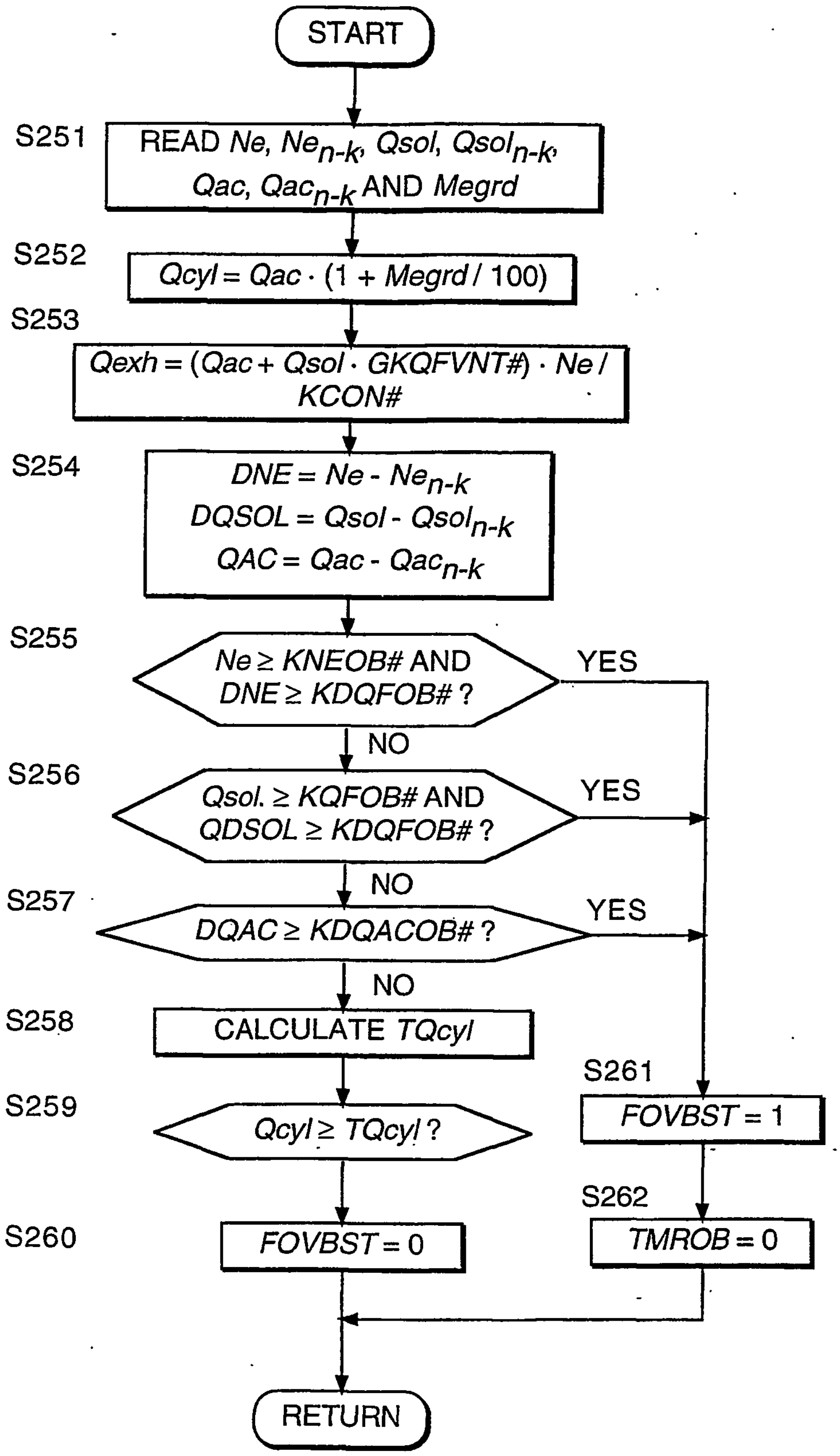
START
S251
READ Ne, Nen-k, Qsol, Qsoln-k, Qac, Qacn-k AND Megrd
S252
Qcyl = Qac · (1 + Megrd / 100)
S253
Qexh = (Qac + Qsol · GKQFVNT#) · Ne / KCON#
S254
DNE = Ne - Nen-k
DQSOL = Qsol - Qsoln-k
QAC = Qac - Qacn-k
S255
Ne ≥ KNEOB# AND DNE ≥ KDQFOB# ?
YES
NO
S256
Qsol. ≥ KQFOB# AND QDSOL ≥ KDQFOB# ?
YES
NO
S257
DQAC ≥ KDQACOB# ?
YES
NO
S258
CALCULATE TQcyl
S259
Qcyl ≥ TQcyl ?
S260
FOVBST = 0
S261
FOVBST = 1
S262
TMROB = 0
RETURN

FIG. 39

FIG. 40A

FIG. 40B

FIG. 40C

FIG. 40D

FIG. 40E

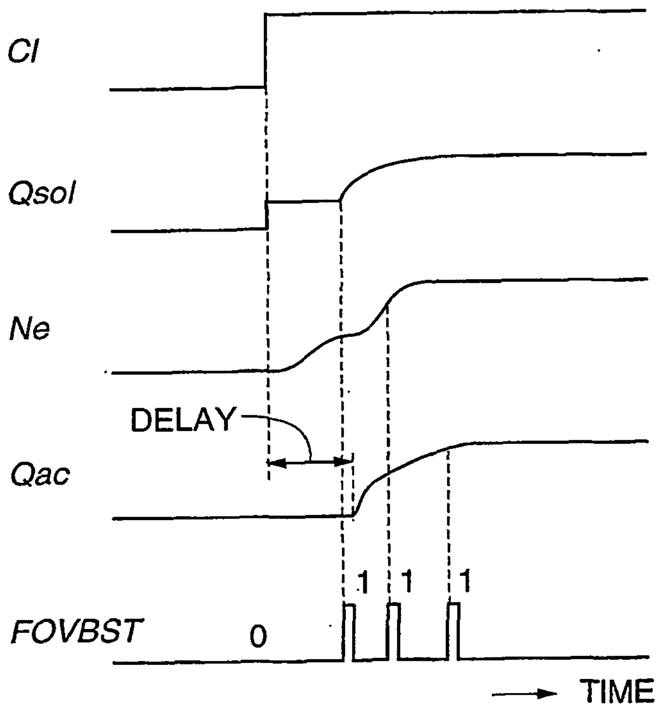

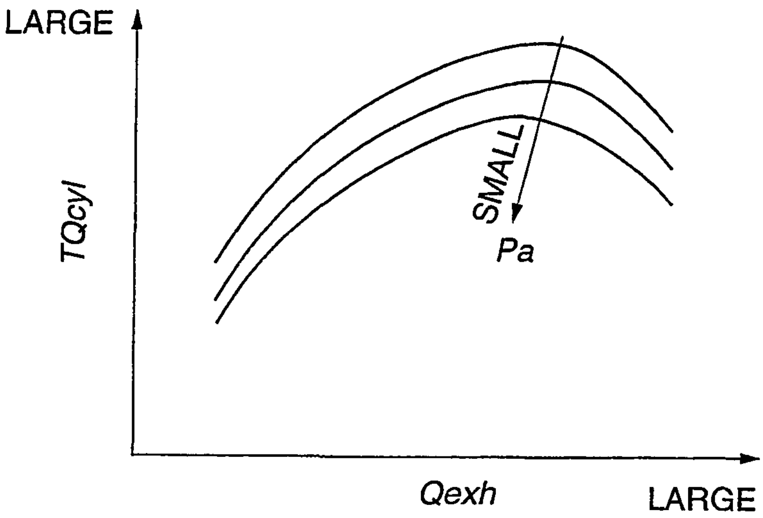
LARGE
TQcyl
SMALL
Pa
Qexh
LARGE

FIG. 41

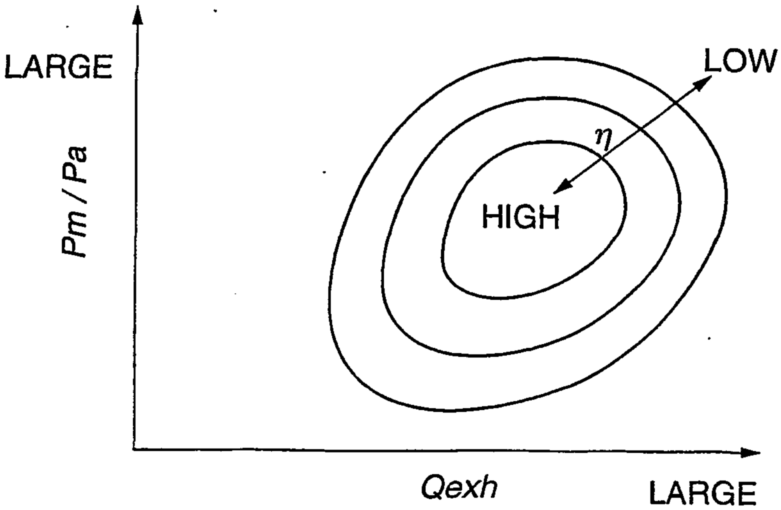
LARGE
Pm / Pa
LOW
η
HIGH
Qexh
LARGE

FIG. 42

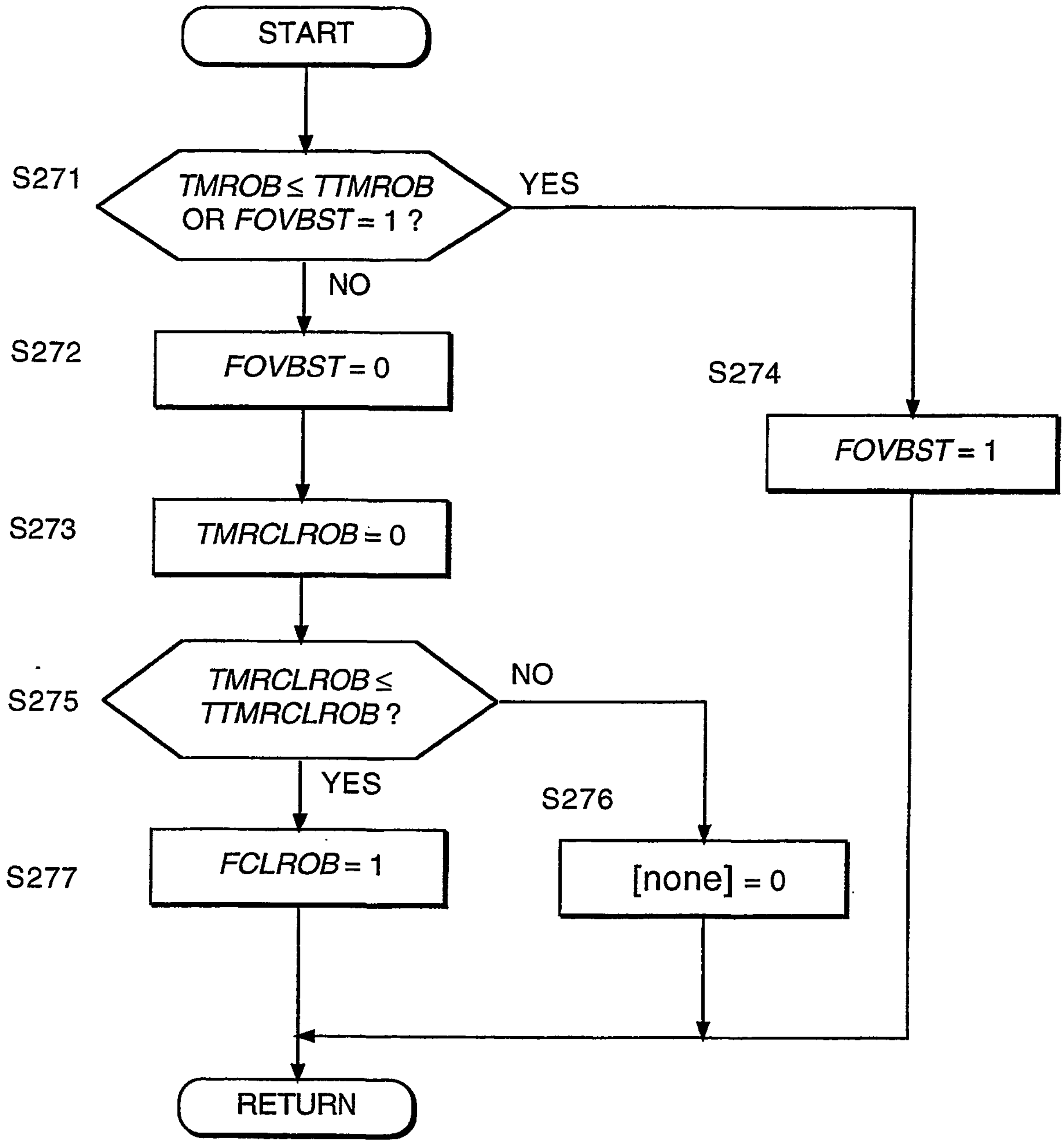
START
S271
TMROB ≤ TTMROB OR FOVBST = 1 ?
YES
NO
S272
FOVBST = 0
S274
FOVBST = 1
S273
TMRCLROB = 0
S275
TMRCLROB ≤ TTMRCLROB ?
NO
YES
S276
S277
FCLROB = 1
[none] = 0
RETURN

FIG. 43

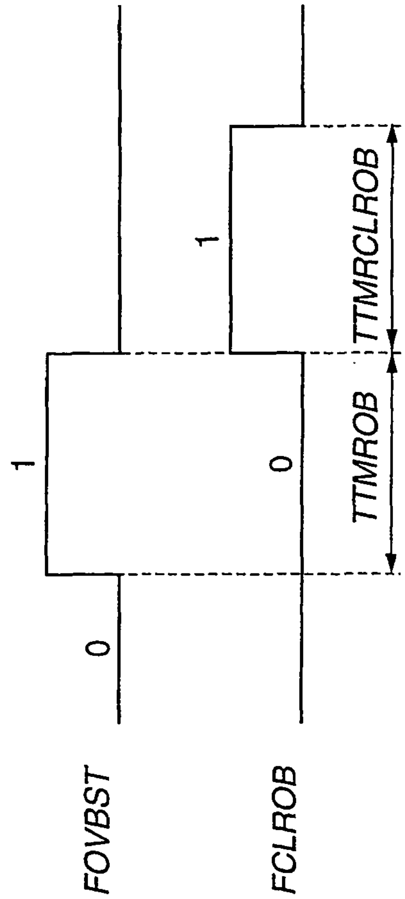


FIG. 44A

FIG. 44B

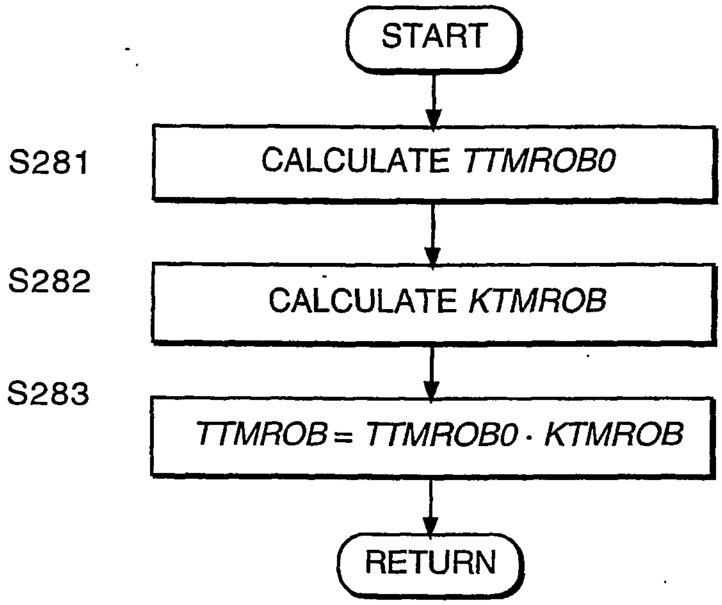
START
S281
CALCULATE TTMROB0
S282
CALCULATE KTMROB
S283
TTMROB = TTMROB0 · KTMROB
RETURN

FIG. 45

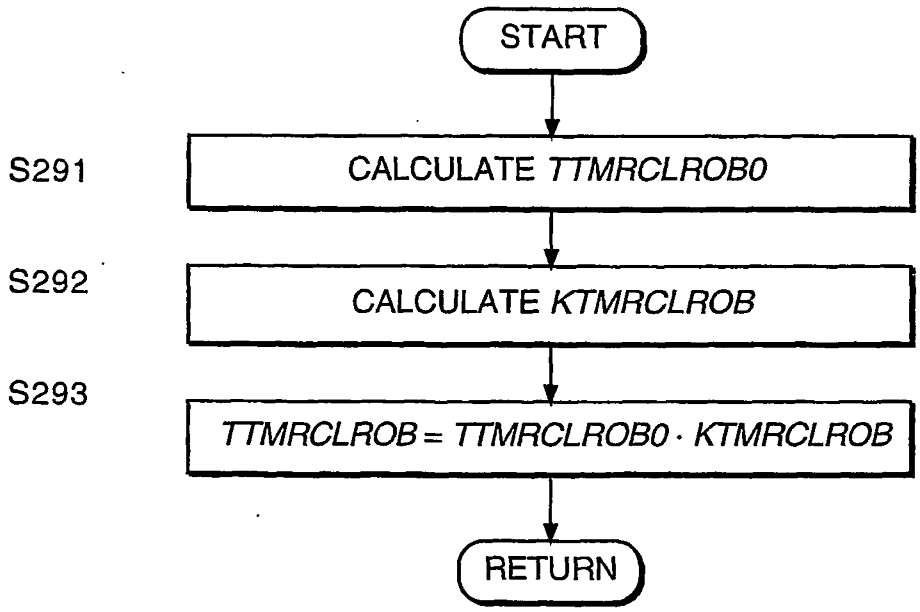
START
S291
CALCULATE TTMRCLROB0
S292
CALCULATE KTMRCLROB
S293
TTMRCLROB = TTMRCLROB0 · KTMRCLROB
RETURN

FIG. 48

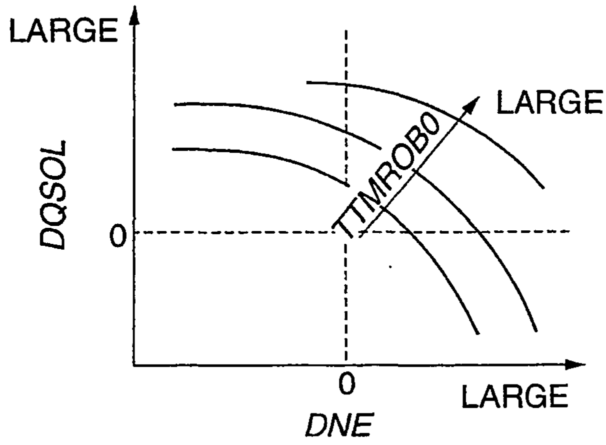
LARGE
DQSOL
0
TTMROB0
LARGE
0
LARGE
DNE

FIG. 46

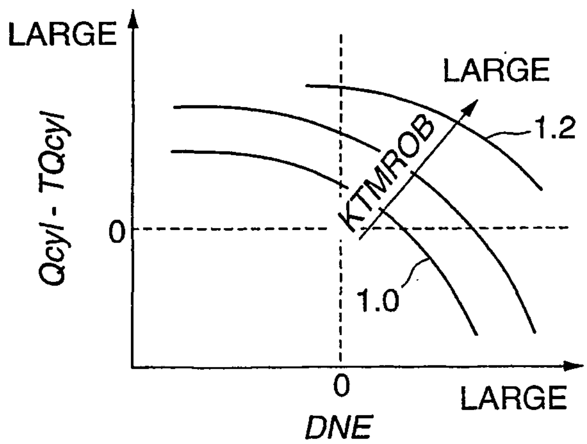
LARGE
Qcyl - TQcyl
0
KTMROB
LARGE
1.2
1.0
0
LARGE
DNE

FIG. 47

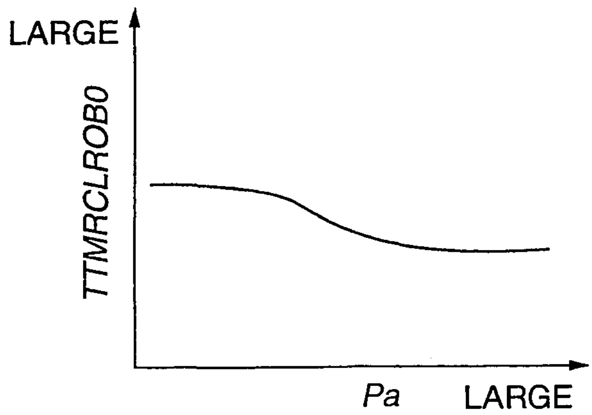


FIG. 49

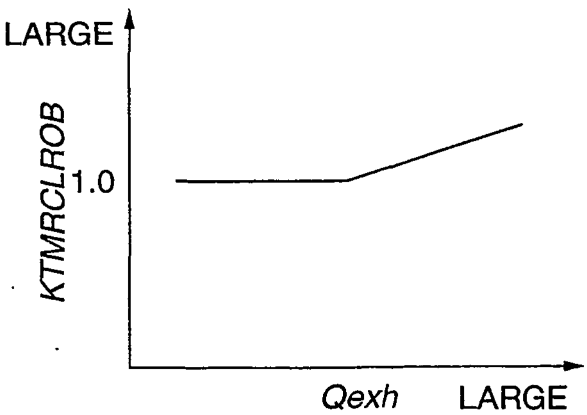


FIG. 50

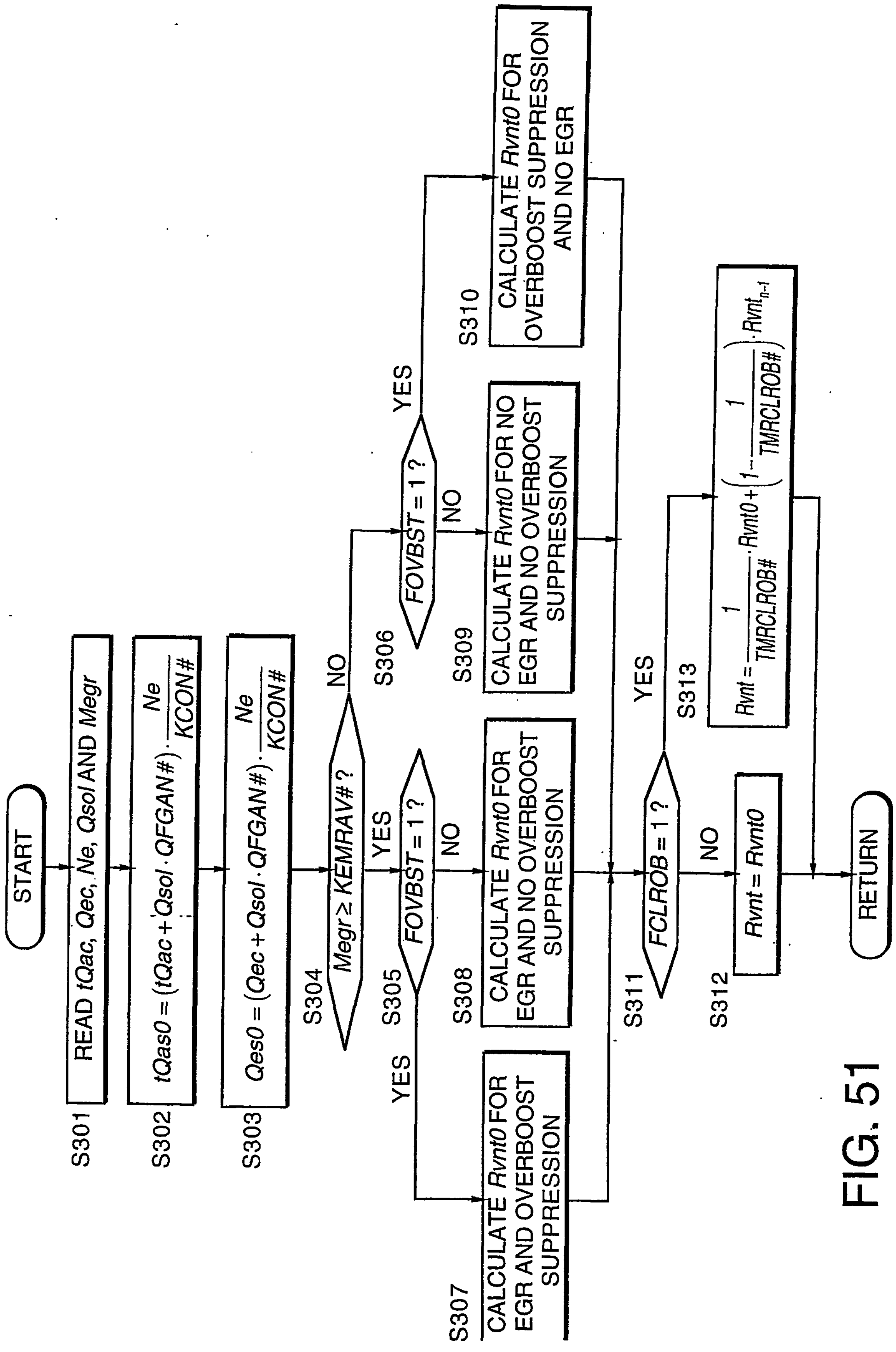
START
S301
READ tQac, Qec, Ne, Qsol AND Megr
S302
$tQas0 = (tQac + Qsol \cdot QFGAN\#) \cdot \frac{Ne}{KCON\#}$
S303
$Qes0 = (Qec + Qsol \cdot QFGAN\#) \cdot \frac{Ne}{KCON\#}$
S304
Megr ≥ KEMRAV# ?
YES
NO
S305
FOVBST = 1 ?
S306
FOVBST = 1 ?
S307
CALCULATE Rvnt0 FOR EGR AND OVERBOOST SUPPRESSION
S308
CALCULATE Rvnt0 FOR EGR AND NO OVERBOOST SUPPRESSION
S309
CALCULATE Rvnt0 FOR NO EGR AND NO OVERBOOST SUPPRESSION
S310
CALCULATE Rvnt0 FOR OVERBOOST SUPPRESSION AND NO EGR
S311
FCLROB = 1 ?
S312
Rvnt = Rvnt0
S313
$Rvnt = \frac{1}{TMRCLROB\#} \cdot Rvnt0 + \left(1 - \frac{1}{TMRCLROB\#}\right) \cdot Rvnt_{n-1}$
RETURN

FIG. 51

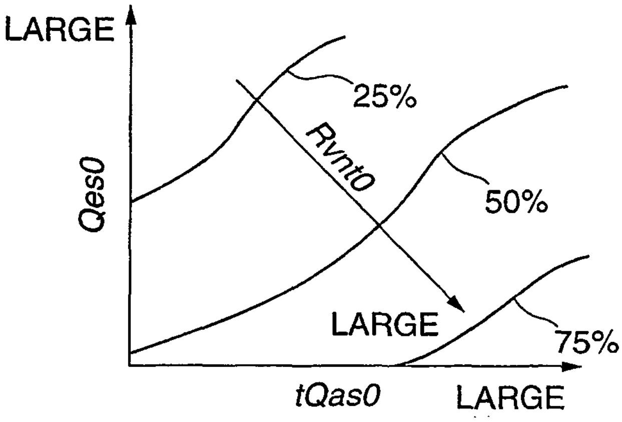
LARGE
25%
Rvnt0
Qes0
50%
LARGE
75%
tQas0
LARGE

FIG. 52

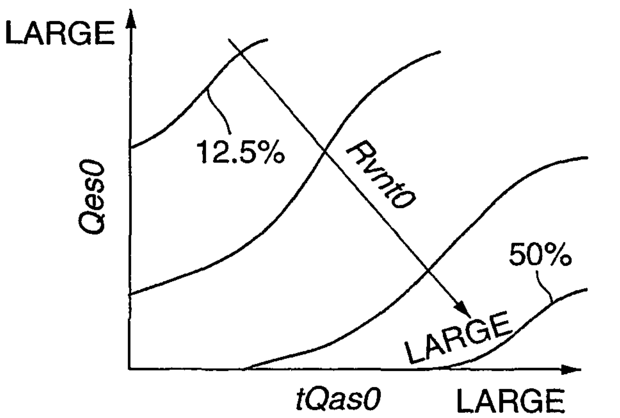
LARGE
12.5%
Rvnt0
Qes0
50%
LARGE
tQas0
LARGE

FIG. 53

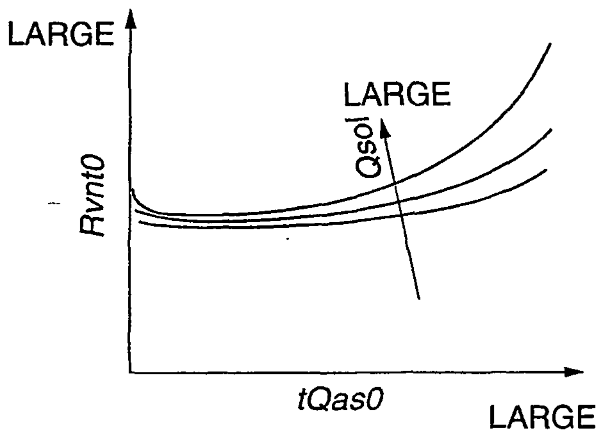
LARGE
Rvnt0
LARGE
Qsol
tQas0
LARGE

FIG. 54

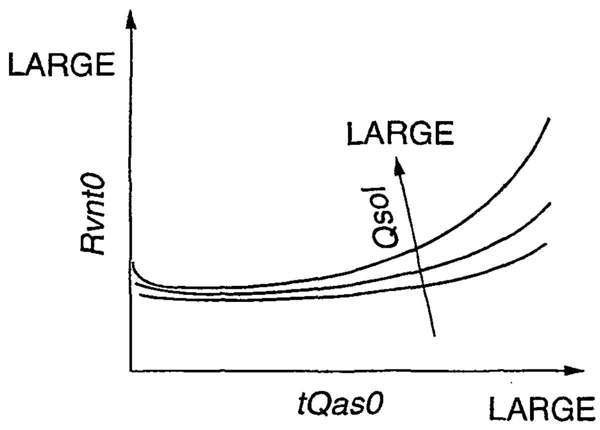
LARGE
Rvnt0
LARGE
Qsol
tQas0
LARGE

FIG. 55

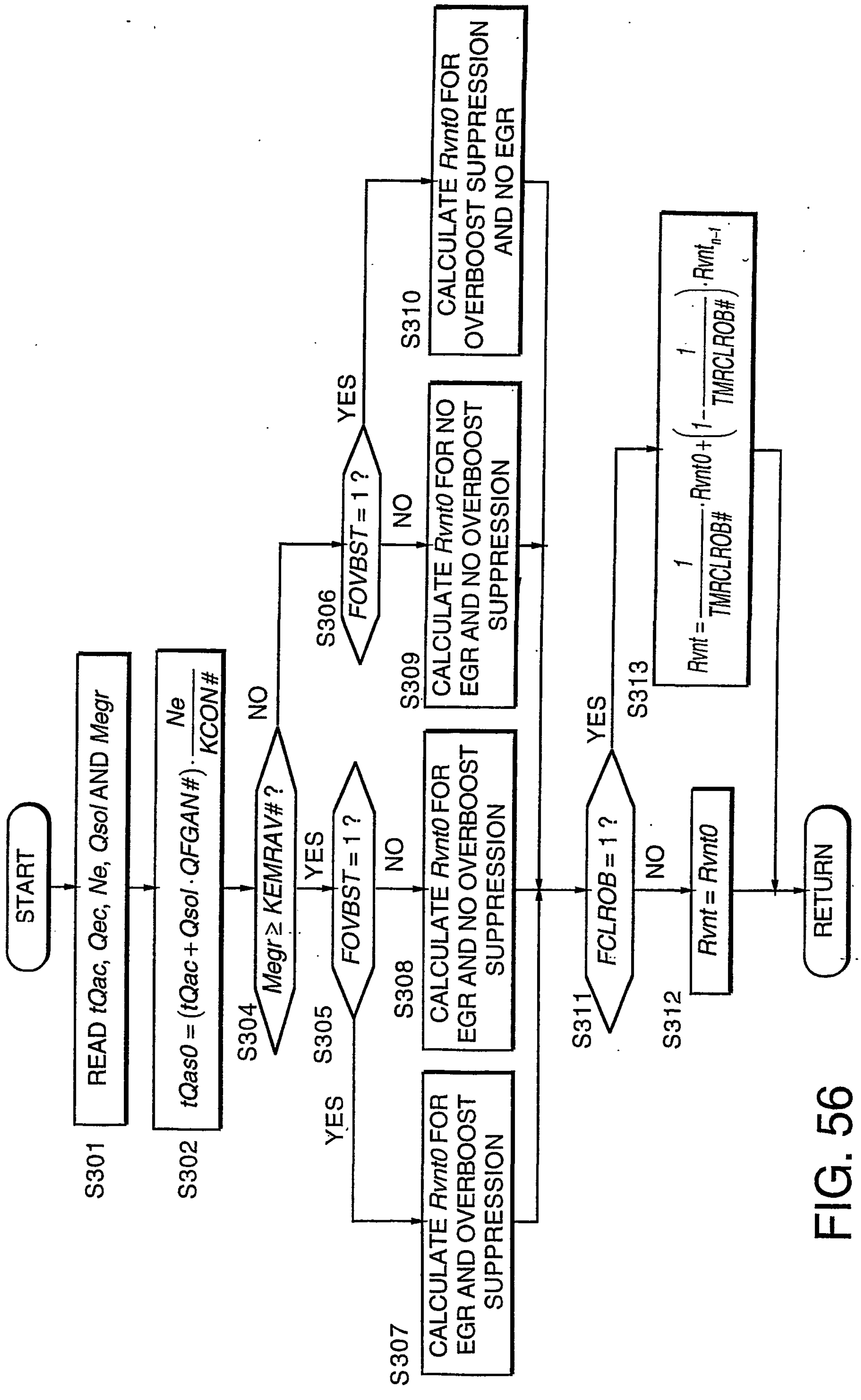
START
S301
READ tQac, Qec, Ne, Qsol AND Megr
S302
tQas0 = (tQac + Qsol · QFGAN#) · Ne/KCON#
S304
Megr ≥ KEMRAV# ?
YES
NO
S305
FOVBST = 1 ?
YES
NO
S306
FOVBST = 1 ?
NO
YES
S307
CALCULATE Rvnt0 FOR EGR AND OVERBOOST SUPPRESSION
S308
CALCULATE Rvnt0 FOR EGR AND NO OVERBOOST SUPPRESSION
S309
CALCULATE Rvnt0 FOR NO EGR AND NO OVERBOOST SUPPRESSION
S310
CALCULATE Rvnt0 FOR OVERBOOST SUPPRESSION AND NO EGR
S311
FCLROB = 1 ?
NO
YES
S312
Rvnt = Rvnt0
S313
Rvnt = 1/TMRCLROB# · Rvnt0 + (1 − 1/TMRCLROB#) · Rvnt(n-1)
RETURN

FIG. 56

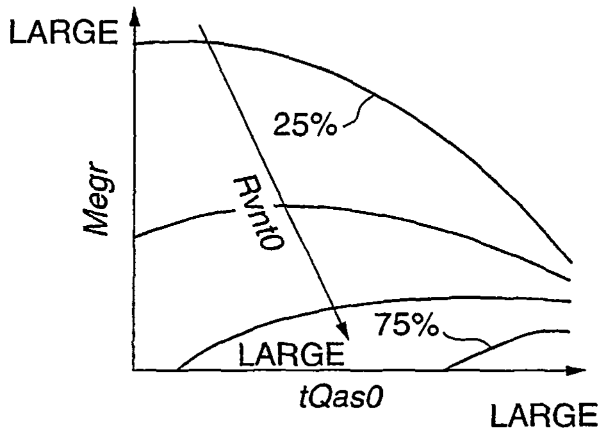
LARGE
25%
Megr
Rvnt0
75%
LARGE
tQas0
LARGE

FIG. 57

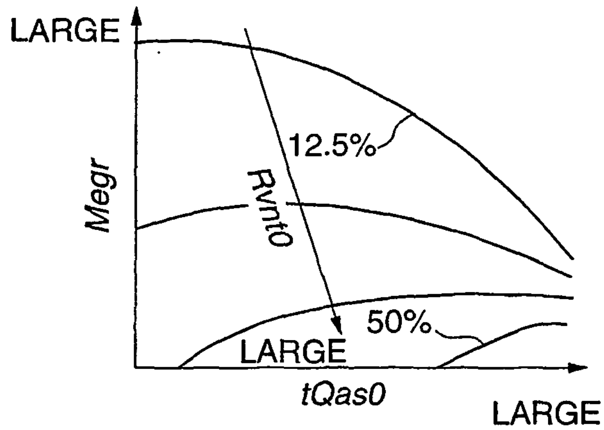
LARGE
12.5%
Megr
Rvnt0
50%
LARGE
tQas0
LARGE

FIG. 58

FIG. 59A

FIG. 59B

FIG. 59C

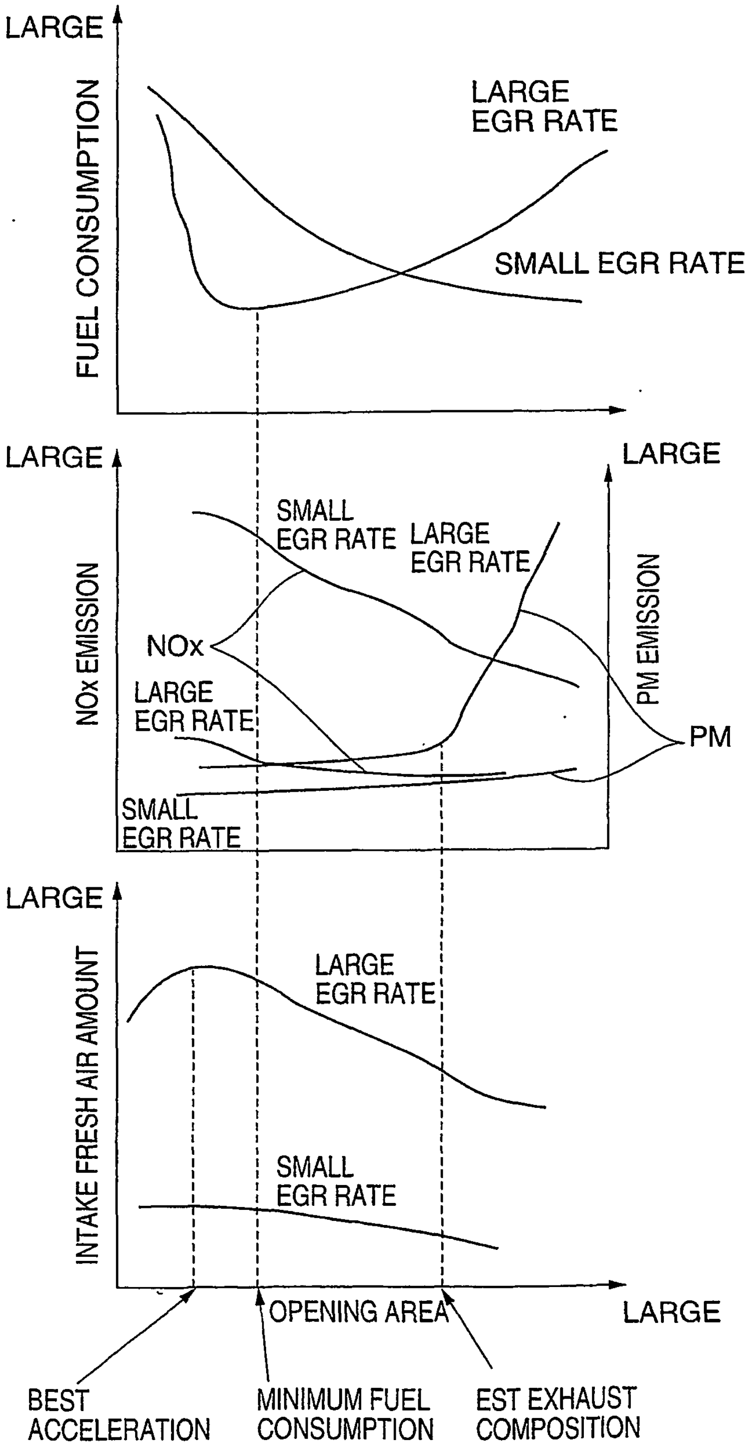

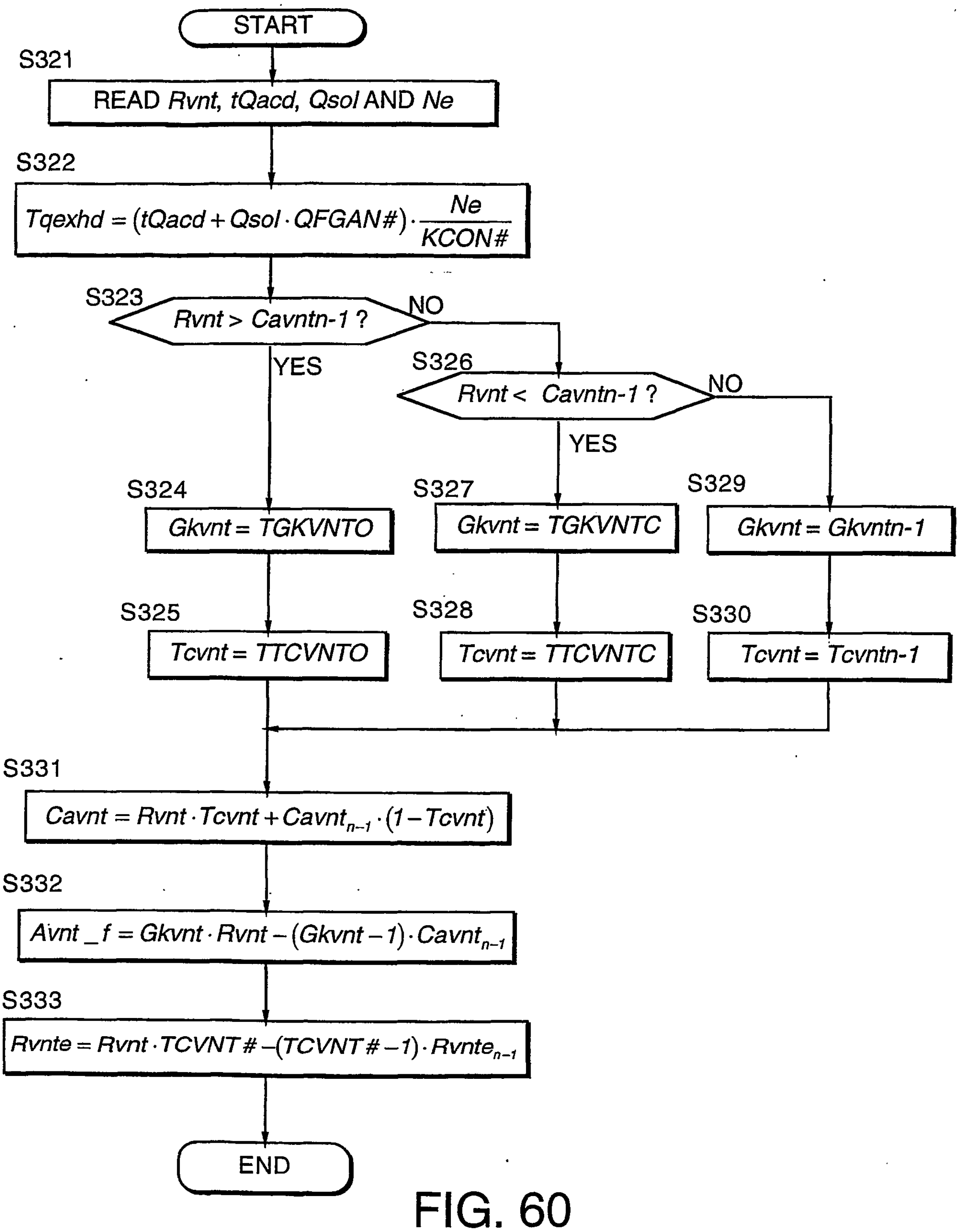
START
S321
READ Rvnt, tQacd, Qsol AND Ne
S322
Tqexhd = (tQacd + Qsol · QFGAN#) · Ne / KCON#
S323
Rvnt > Cavntn-1 ?
NO
YES
S326
Rvnt < Cavntn-1 ?
NO
YES
S324
Gkvnt = TGKVNTO
S327
Gkvnt = TGKVNTC
S329
Gkvnt = Gkvntn-1
S325
Tcvnt = TTCVNTO
S328
Tcvnt = TTCVNTC
S330
Tcvnt = Tcvntn-1
S331
Cavnt = Rvnt · Tcvnt + Cavnt_n-1 · (1 − Tcvnt)
S332
Avnt_f = Gkvnt · Rvnt − (Gkvnt − 1) · Cavnt_n-1
S333
Rvnte = Rvnt · TCVNT# −(TCVNT# − 1) · Rvnte_n-1
END

FIG. 60

FIG. 61A

FIG. 61B

FIG. 61C

FIG. 61D

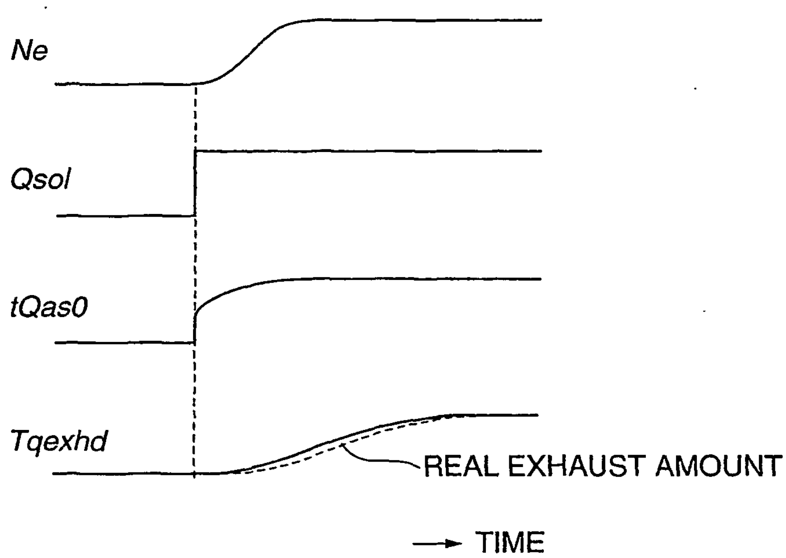

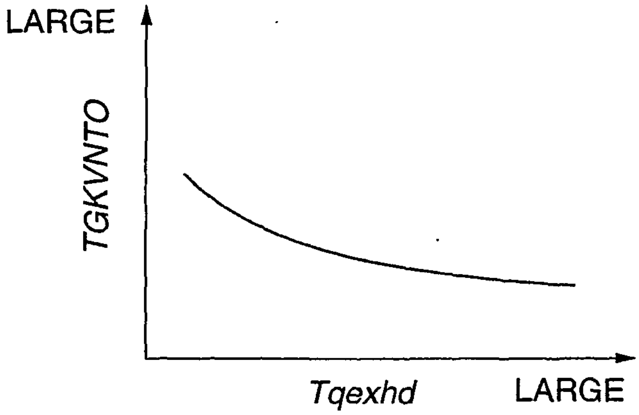


FIG. 62

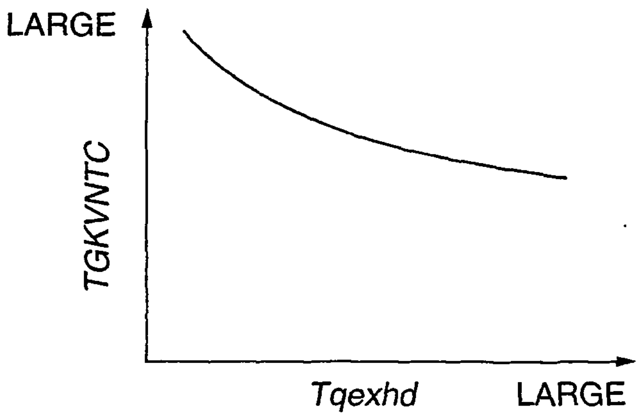


FIG. 63

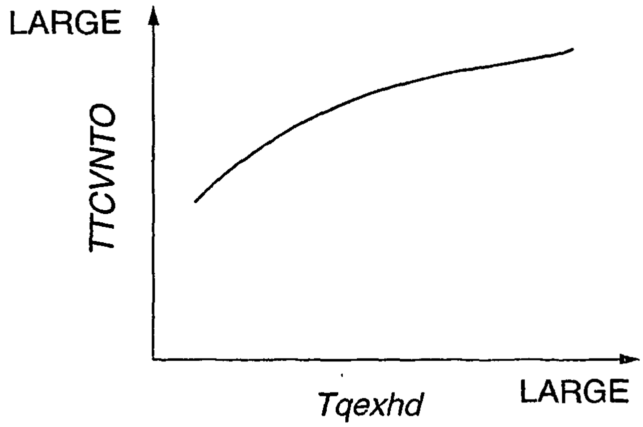


FIG. 64

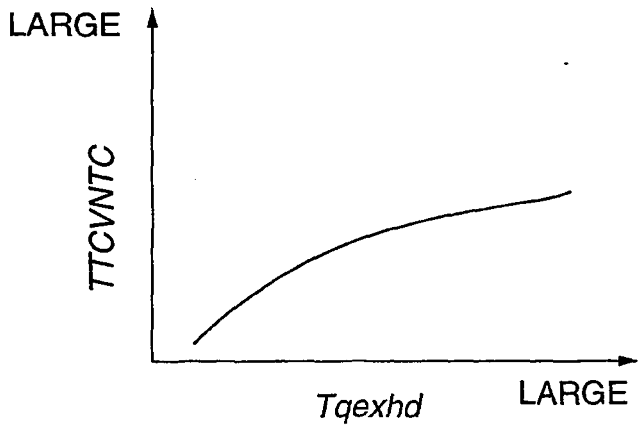


FIG. 65

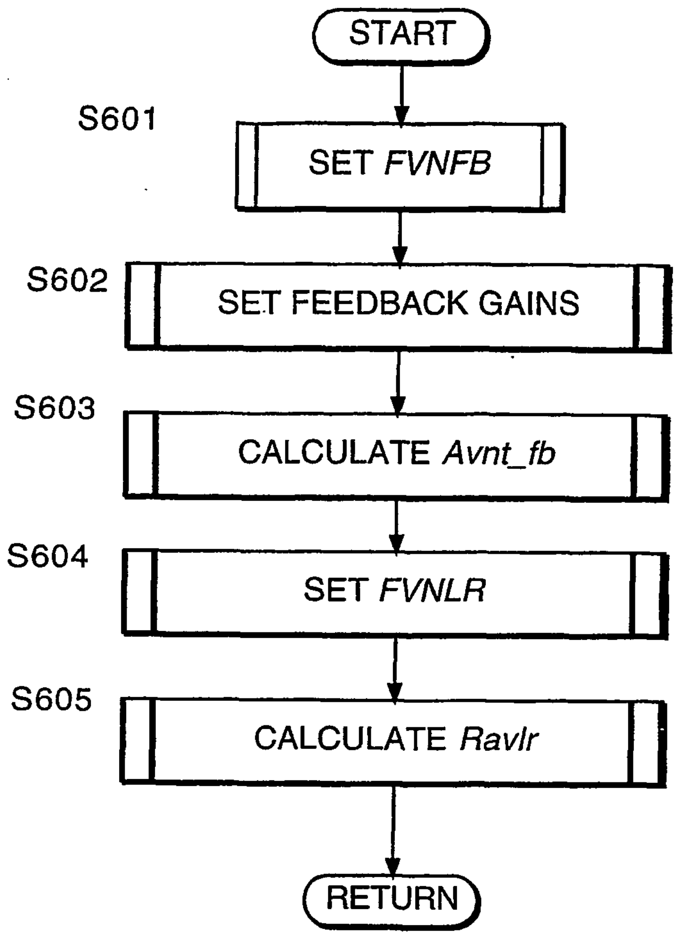
START
S601
SET FVNFB
S602
SET FEEDBACK GAINS
S603
CALCULATE Avnt_fb
S604
SET FVNLR
S605
CALCULATE Ravlr
RETURN

FIG. 66

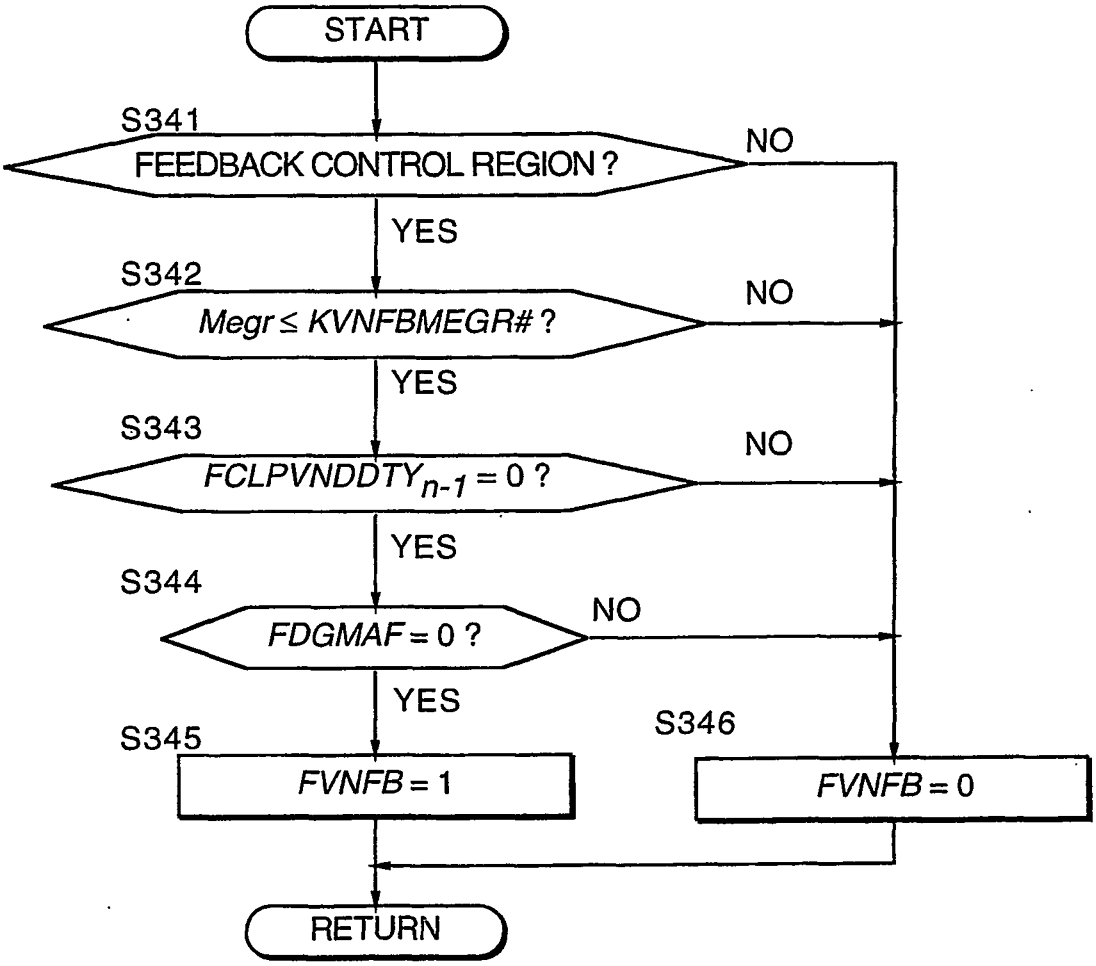
START
S341
FEEDBACK CONTROL REGION ?
NO
YES
S342
Megr ≤ KVNFBMEGR# ?
NO
YES
S343
FCLPVNDDTYn-1 = 0 ?
NO
YES
S344
FDGMAF = 0 ?
NO
YES
S345
FVNFB = 1
S346
FVNFB = 0
RETURN

FIG. 67

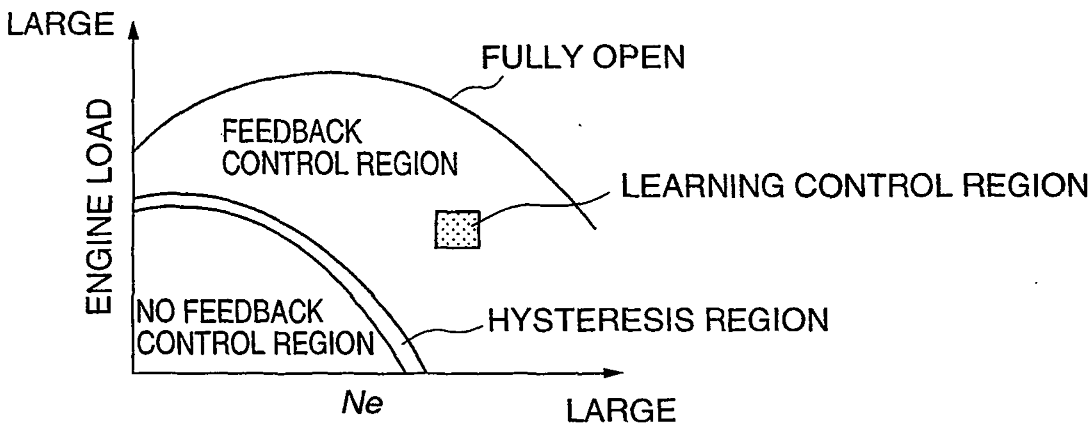
LARGE
ENGINE LOAD
FULLY OPEN
FEEDBACK
CONTROL REGION
LEARNING CONTROL REGION
NO FEEDBACK
CONTROL REGION
HYSTERESIS REGION
Ne
LARGE

FIG. 68

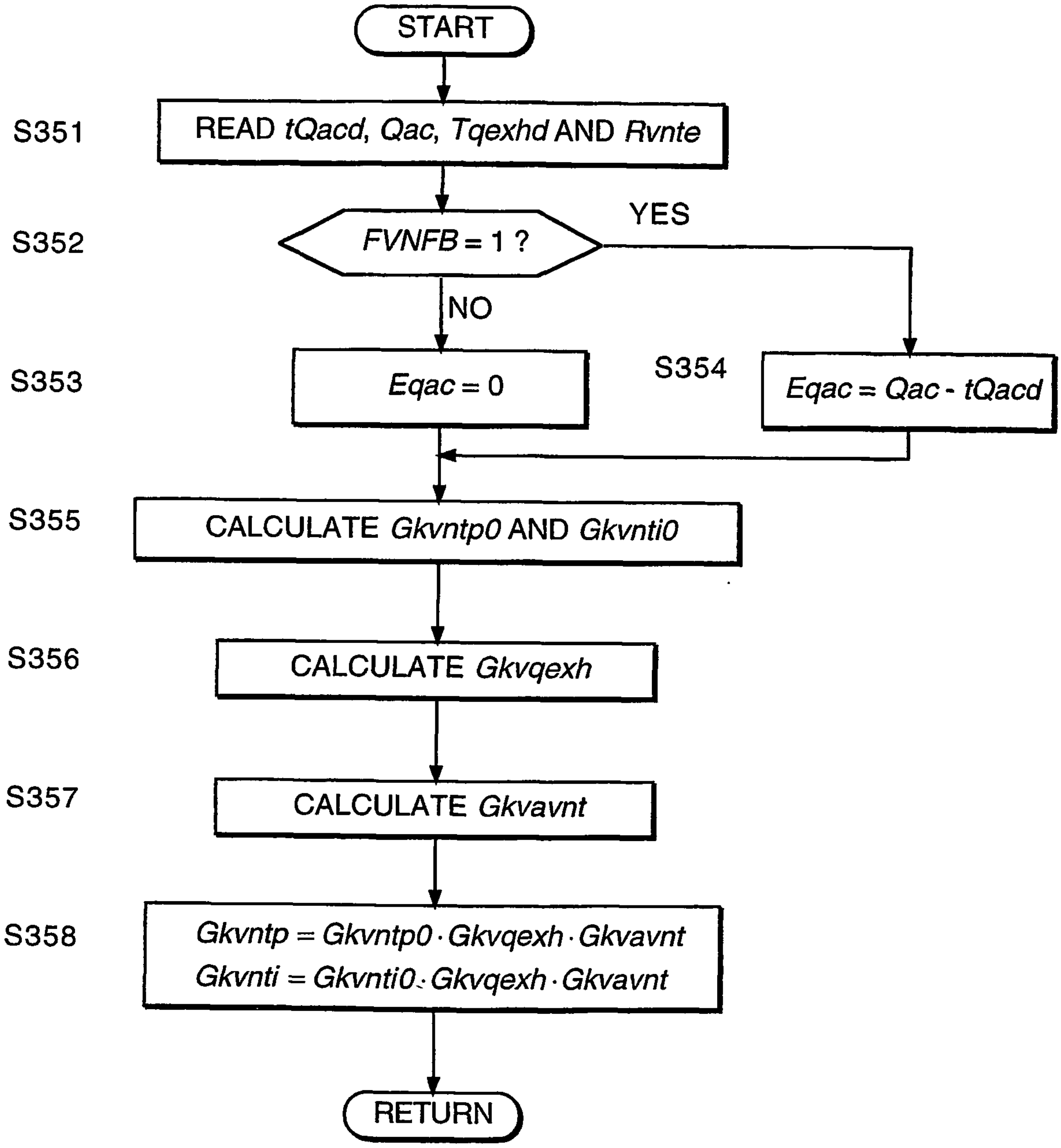
START
S351
READ tQacd, Qac, Tqexhd AND Rvnte
S352
FVNFB = 1 ?
YES
NO
S353
Eqac = 0
S354
Eqac = Qac - tQacd
S355
CALCULATE Gkvntp0 AND Gkvnti0
S356
CALCULATE Gkvqexh
S357
CALCULATE Gkvavnt
S358
Gkvntp = Gkvntp0 · Gkvqexh · Gkvavnt
Gkvnti = Gkvnti0 · Gkvqexh · Gkvavnt
RETURN

FIG. 69

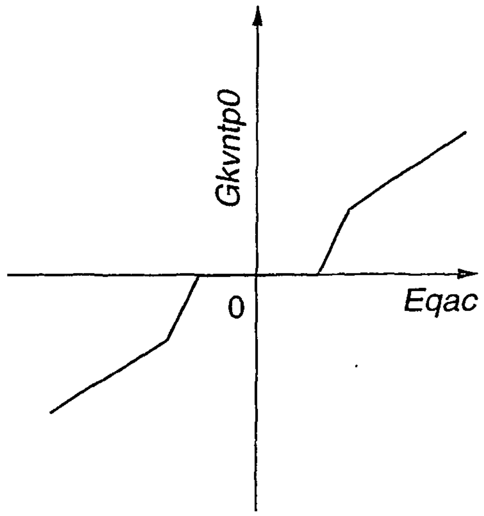


FIG. 70

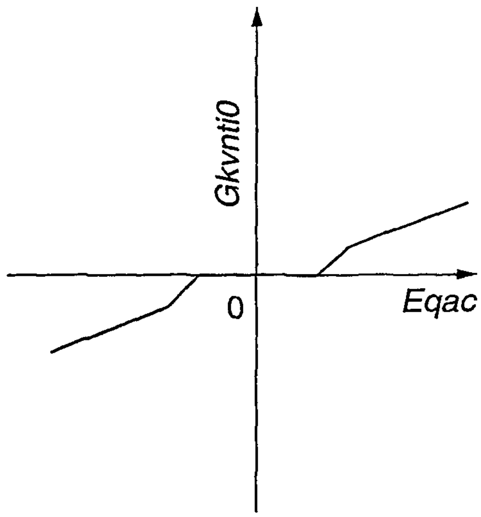


FIG. 71

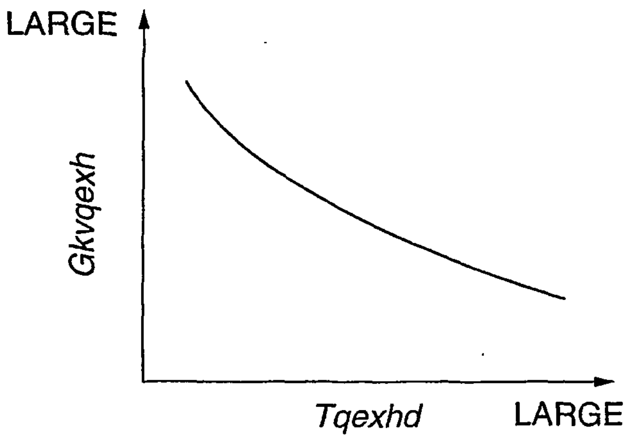


FIG. 72

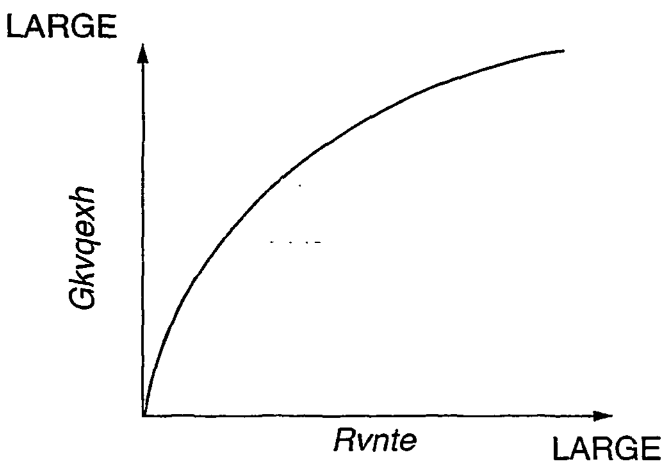


FIG. 73

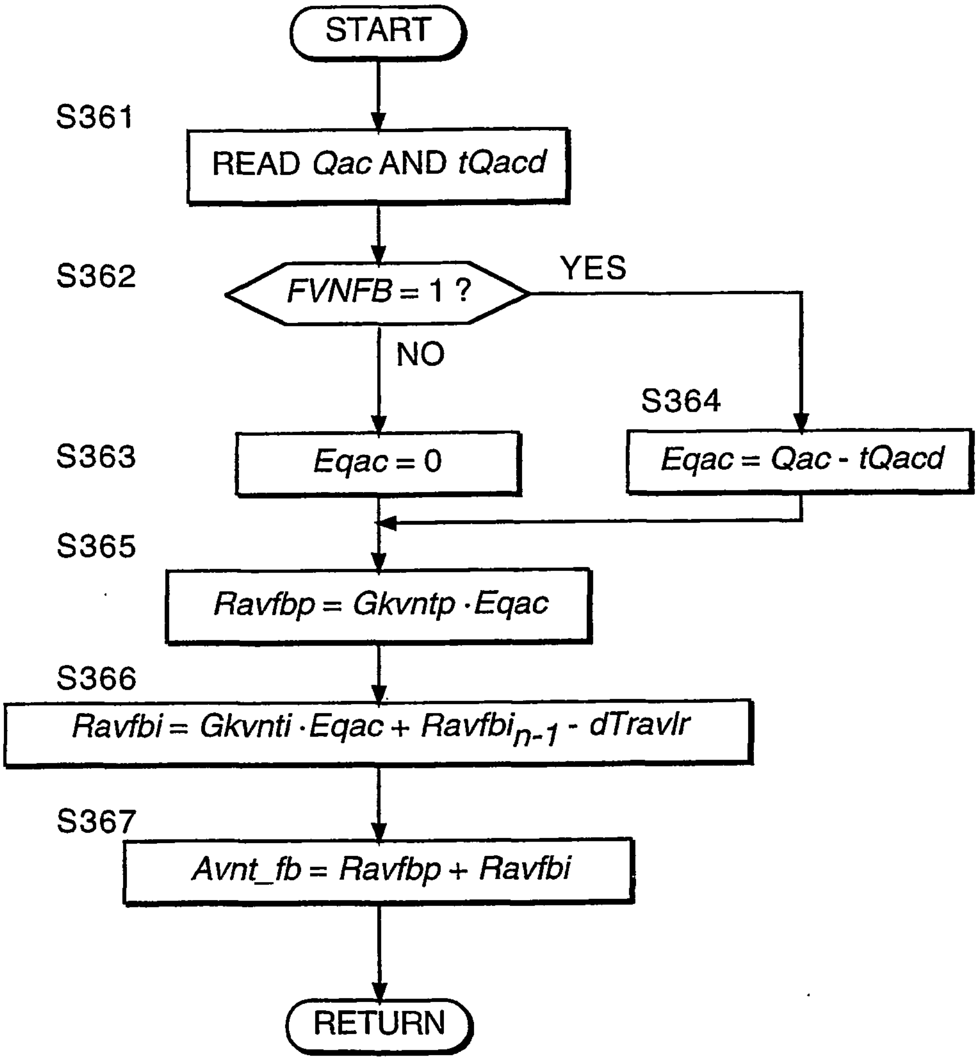
START
S361
READ Qac AND tQacd
S362
FVNFB = 1 ?
YES
NO
S363
Eqac = 0
S364
Eqac = Qac - tQacd
S365
Ravfbp = Gkvntp · Eqac
S366
Ravfbi = Gkvnti · Eqac + Ravfbi n-1 - dTravlr
S367
Avnt_fb = Ravfbp + Ravfbi
RETURN

FIG. 74

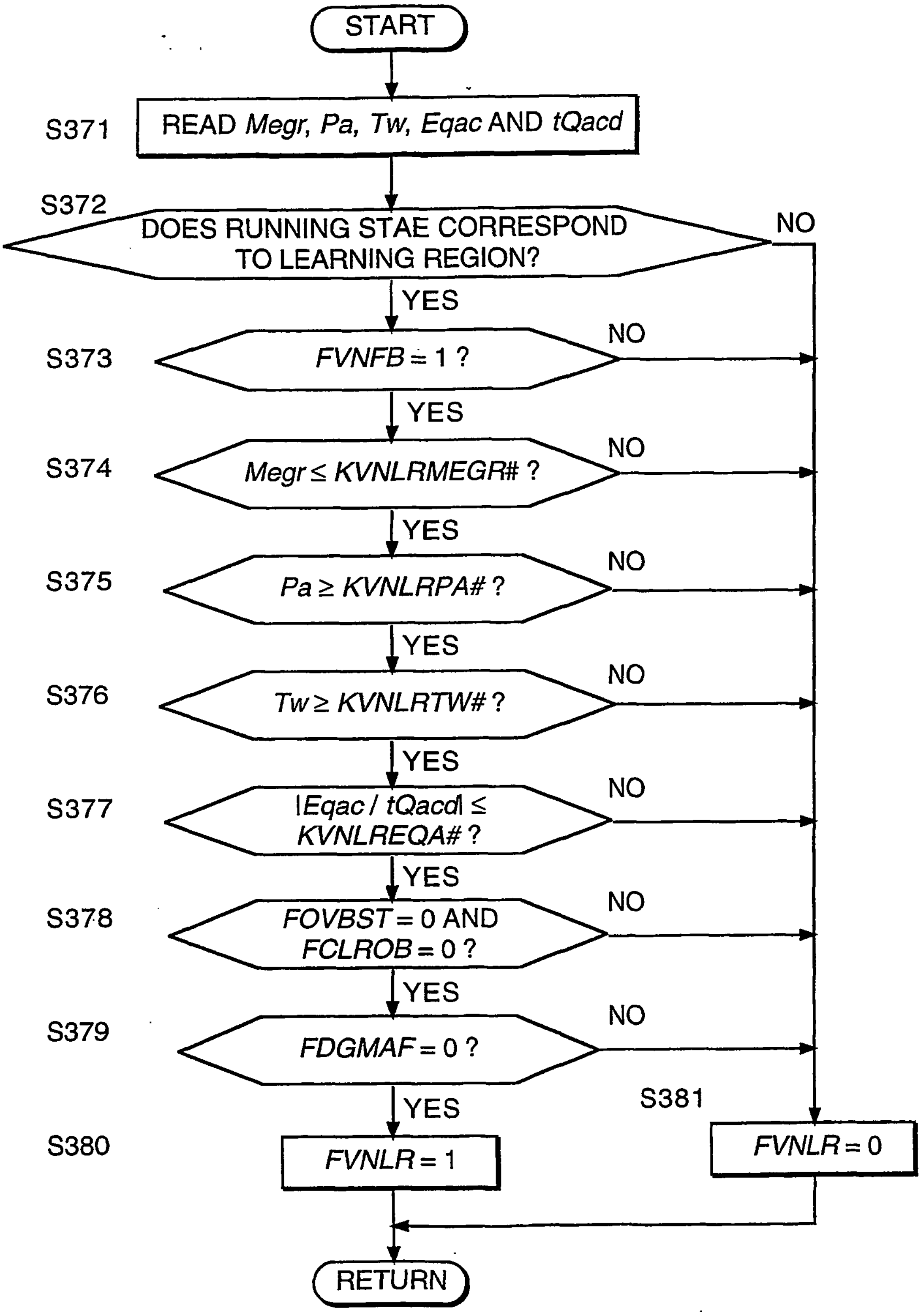
START
S371
READ Megr, Pa, Tw, Eqac AND tQacd
S372
DOES RUNNING STAE CORRESPOND TO LEARNING REGION?
NO
YES
S373
FVNFB = 1 ?
NO
YES
S374
Megr ≤ KVNLRMEGR# ?
NO
YES
S375
Pa ≥ KVNLRPA# ?
NO
YES
S376
Tw ≥ KVNLRTW# ?
NO
YES
S377
|Eqac / tQacd| ≤ KVNLREQA# ?
NO
YES
S378
FOVBST = 0 AND FCLROB = 0 ?
NO
YES
S379
FDGMAF = 0 ?
NO
YES
S380
FVNLR = 1
S381
FVNLR = 0
RETURN

FIG. 75

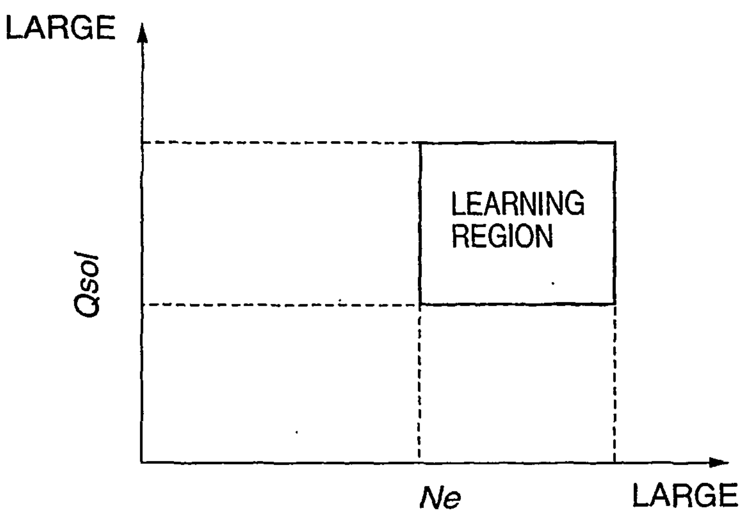
LARGE
LEARNING
REGION
Qsol
Ne
LARGE

FIG. 76

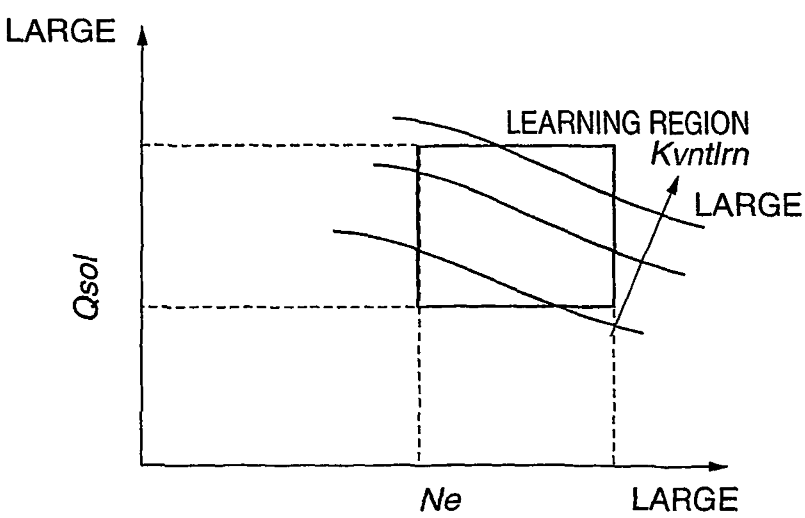
LARGE
LEARNING REGION
Kvntlrn
LARGE
Qsol
Ne
LARGE

FIG. 78

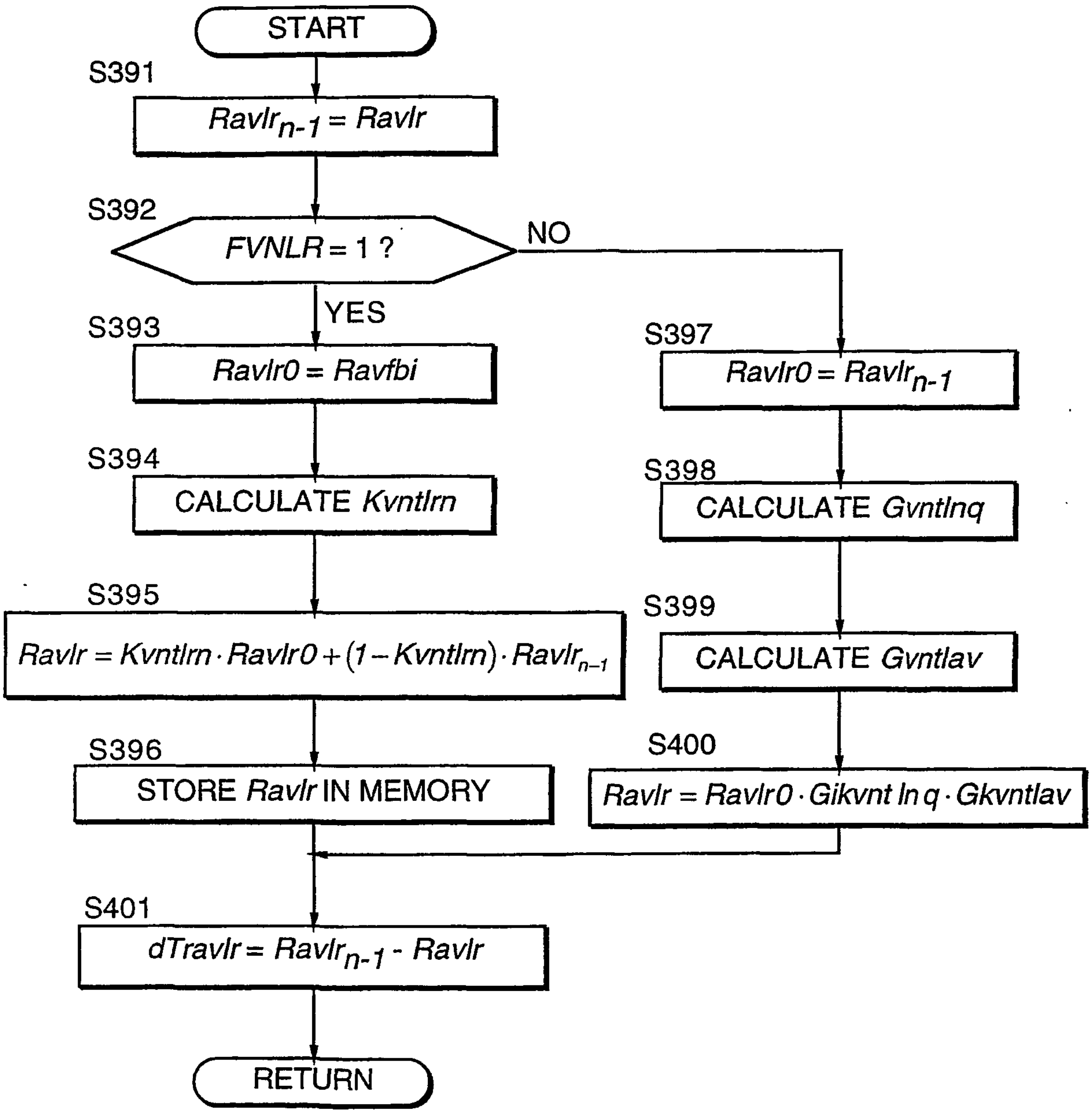
START
S391
Ravlrn-1 = Ravlr
S392
FVNLR = 1 ?
NO
YES
S393
Ravlr0 = Ravfbi
S394
CALCULATE Kvntlrn
S395
Ravlr = Kvntlrn · Ravlr0 + (1 − Kvntlrn) · Ravlrn−1
S396
STORE Ravlr IN MEMORY
S397
Ravlr0 = Ravlrn-1
S398
CALCULATE Gvntlnq
S399
CALCULATE Gvntlav
S400
Ravlr = Ravlr0 · Gikvnt lnq · Gkvntlav
S401
dTravlr = Ravlrn-1 - Ravlr
RETURN

FIG. 77

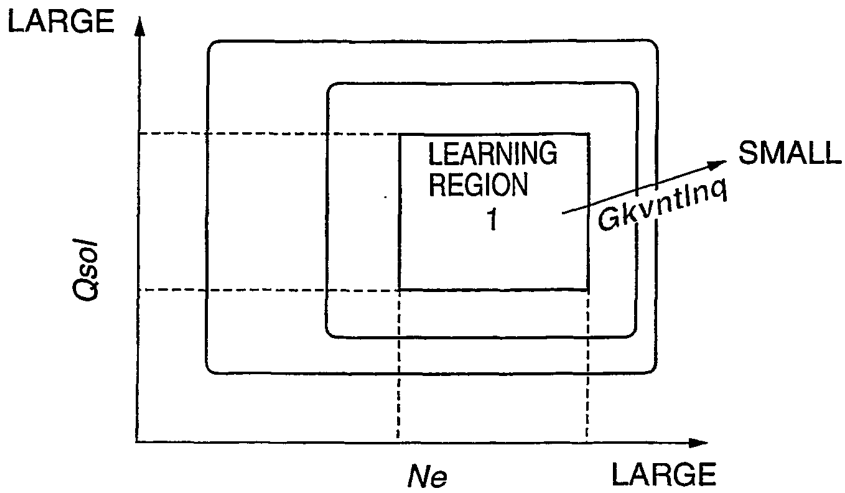
LARGE
LEARNING
REGION
1
SMALL
Gkvntlnq
Qsol
Ne
LARGE

FIG. 79

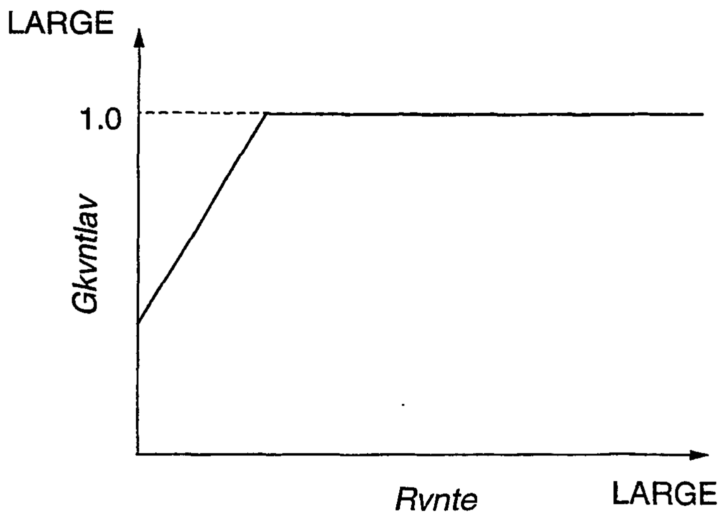
LARGE
1.0
Gkvntlav
Rvnte
LARGE

FIG. 80

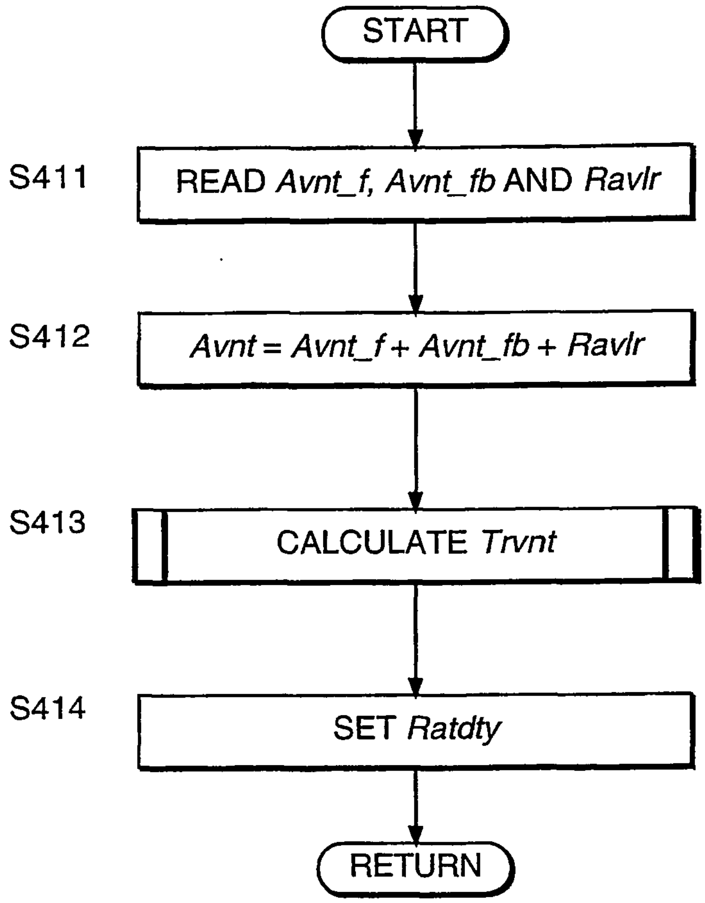
START
S411
READ Avnt_f, Avnt_fb AND Ravlr
S412
Avnt = Avnt_f + Avnt_fb + Ravlr
S413
CALCULATE Trvnt
S414
SET Ratdty
RETURN

FIG. 81

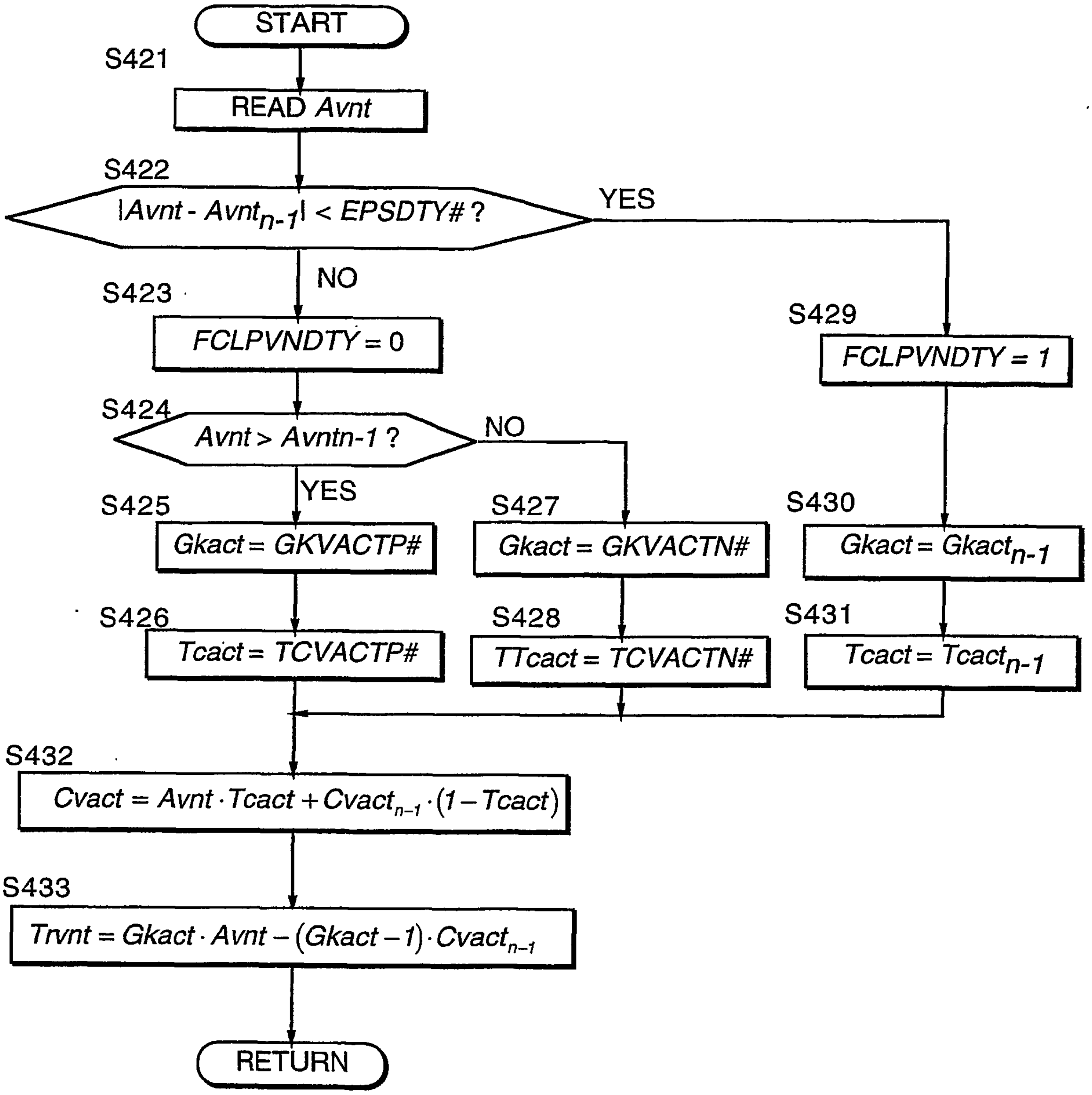
START
S421
READ Avnt
S422
|Avnt - Avntn-1| < EPSDTY# ?
YES
NO
S423
FCLPVNDTY = 0
S429
FCLPVNDTY = 1
S424
Avnt > Avntn-1 ?
NO
YES
S425
Gkact = GKVACTP#
S427
Gkact = GKVACTN#
S430
Gkact = Gkactn-1
S426
Tcact = TCVACTP#
S428
TTcact = TCVACTN#
S431
Tcact = Tcactn-1
S432
Cvact = Avnt · Tcact + Cvactn-1 · (1 – Tcact)
S433
Trvnt = Gkact · Avnt – (Gkact – 1) · Cvactn-1
RETURN

FIG. 82

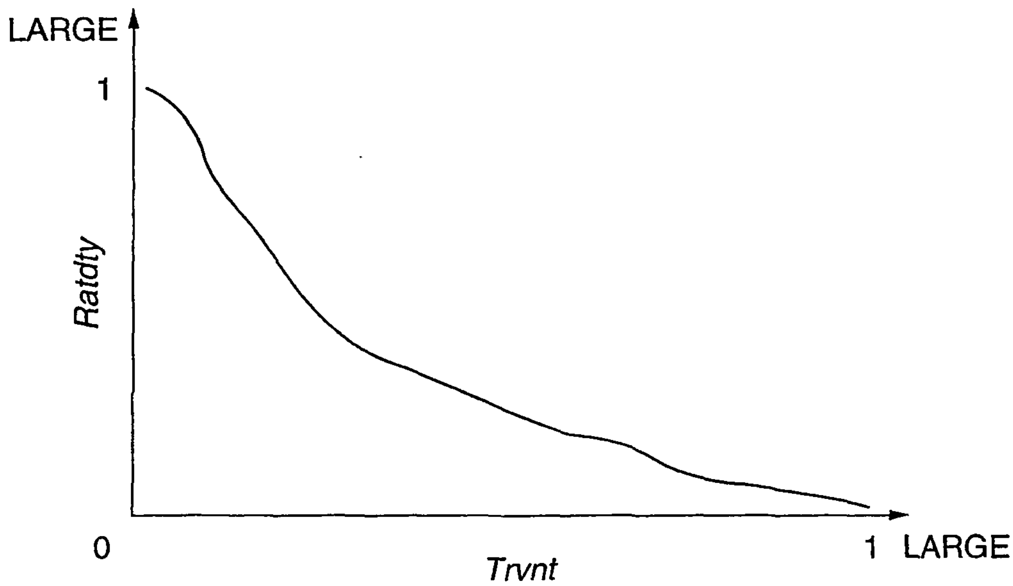


FIG. 83

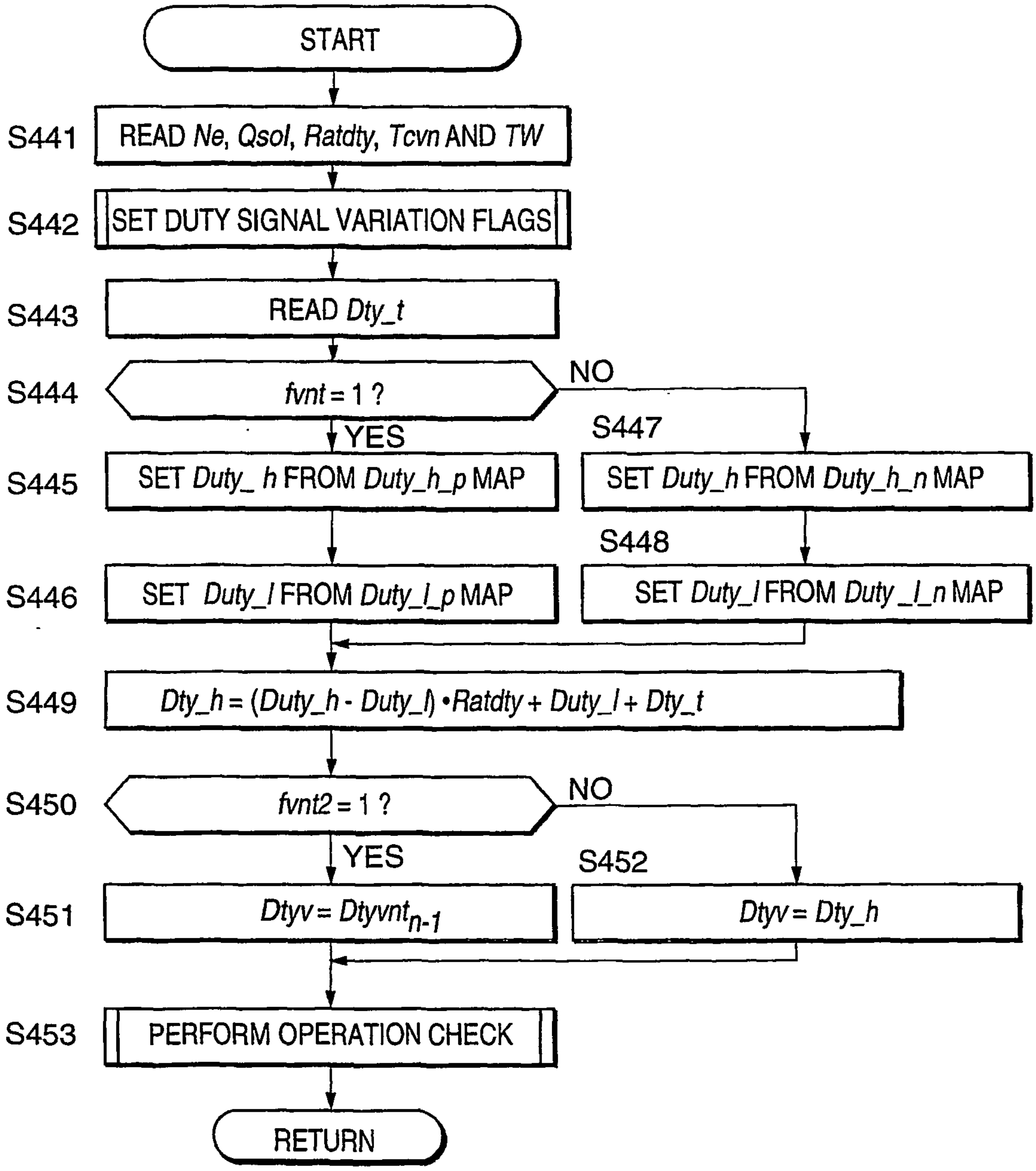
START
S441
READ Ne, Qsol, Ratdty, Tcvn AND TW
S442
SET DUTY SIGNAL VARIATION FLAGS
S443
READ Dty_t
S444
fvnt = 1 ?
NO
YES
S447
S445
SET Duty_ h FROM Duty_h_p MAP
SET Duty_h FROM Duty_h_n MAP
S448
S446
SET Duty_l FROM Duty_l_p MAP
SET Duty_l FROM Duty _l_n MAP
S449
Dty_h = (Duty_h - Duty_l) •Ratdty + Duty_l + Dty_t
S450
fvnt2 = 1 ?
NO
YES
S452
S451
Dtyv = Dtyvnt n-1
Dtyv = Dty_h
S453
PERFORM OPERATION CHECK
RETURN

FIG. 84

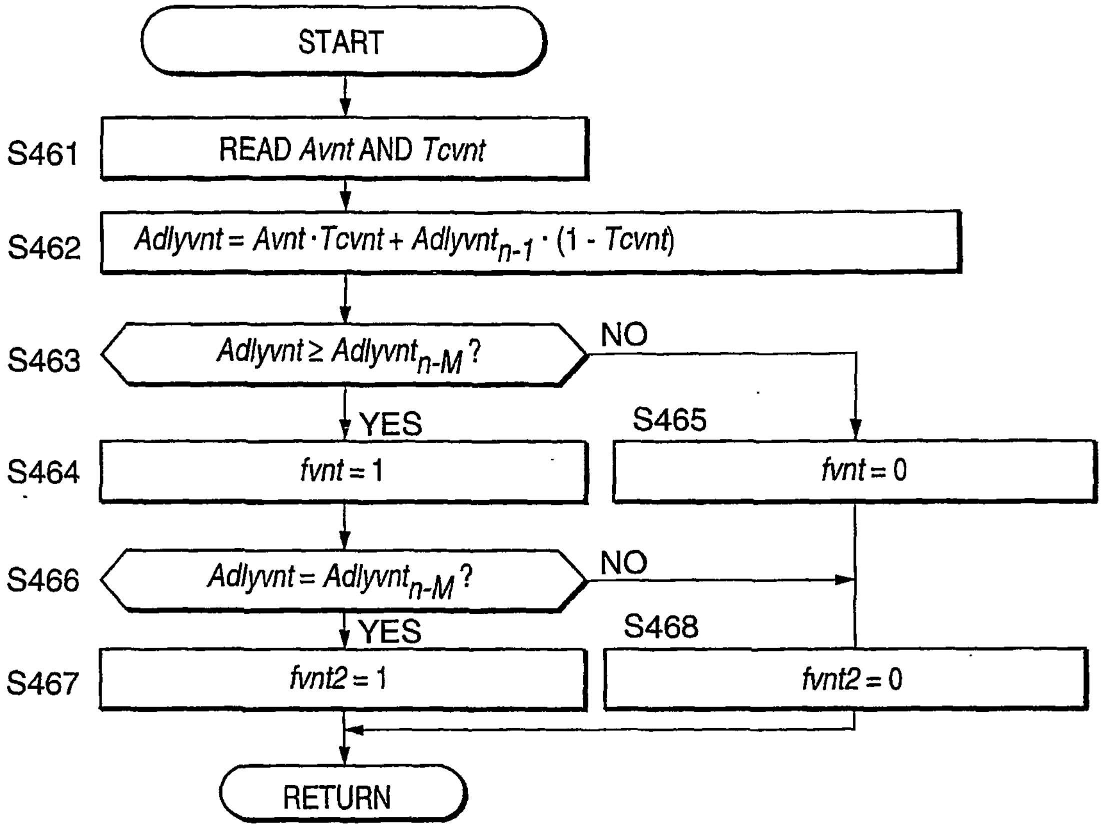
START
S461
READ Avnt AND Tcvnt
S462
Adlyvnt = Avnt · Tcvnt + Adlyvnt_n-1 · (1 - Tcvnt)
S463
Adlyvnt ≥ Adlyvnt_n-M ?
NO
YES
S465
S464
fvnt = 1
fvnt = 0
S466
Adlyvnt = Adlyvnt_n-M ?
NO
YES
S468
S467
fvnt2 = 1
fvnt2 = 0
RETURN

FIG. 85

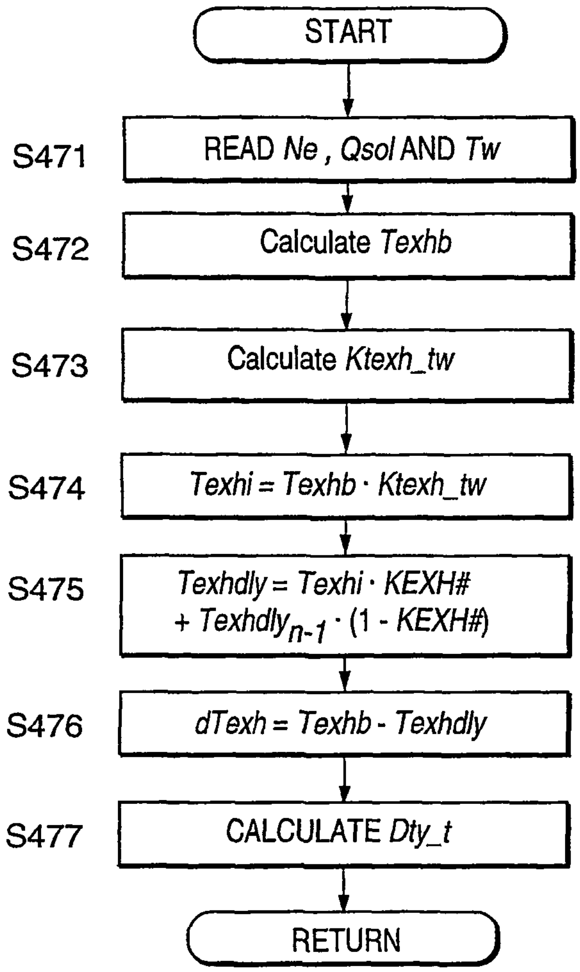
START
S471
READ Ne , Qsol AND Tw
S472
Calculate Texhb
S473
Calculate Ktexh_tw
S474
Texhi = Texhb · Ktexh_tw
S475
Texhdly = Texhi · KEXH#
+ Texhdly n-1 · (1 - KEXH#)
S476
dTexh = Texhb - Texhdly
S477
CALCULATE Dty_t
RETURN

FIG. 86

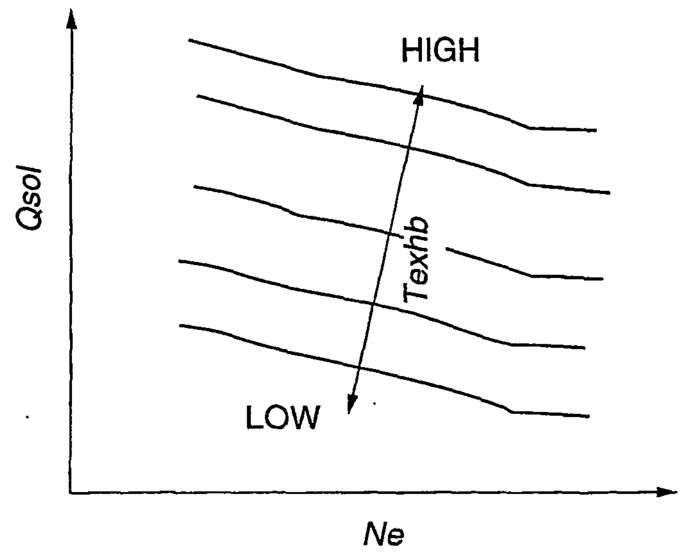


FIG. 87

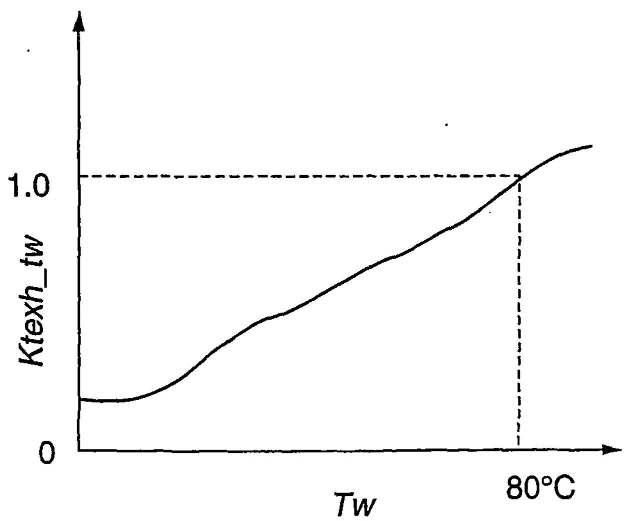


FIG. 88

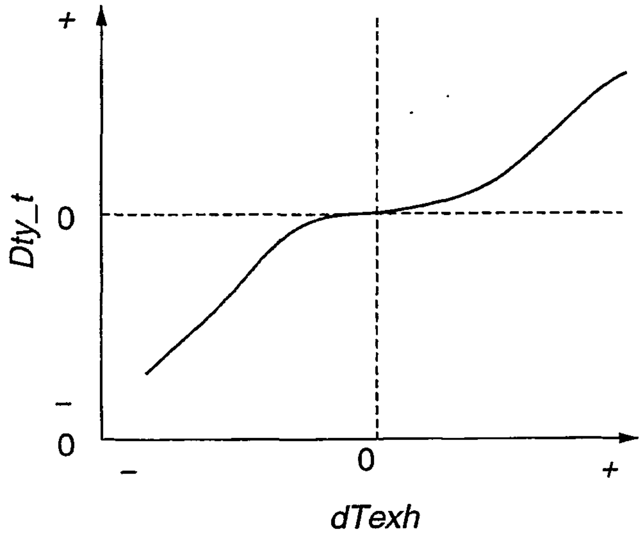
+
Dty_t
0
-
0
-
0
+
dTexh

FIG. 89

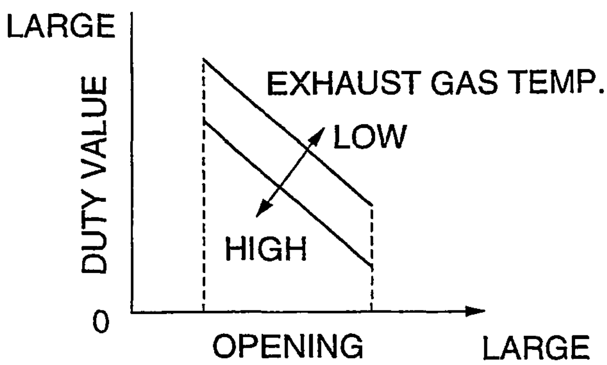
LARGE
DUTY VALUE
0
EXHAUST GAS TEMP.
LOW
HIGH
OPENING
LARGE

FIG. 90

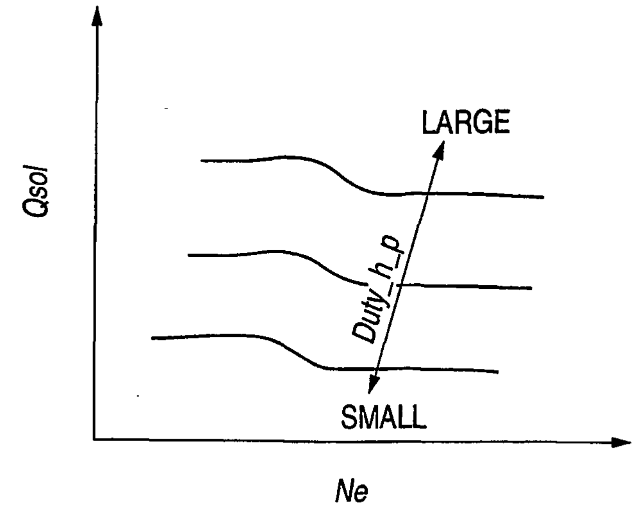


FIG. 91

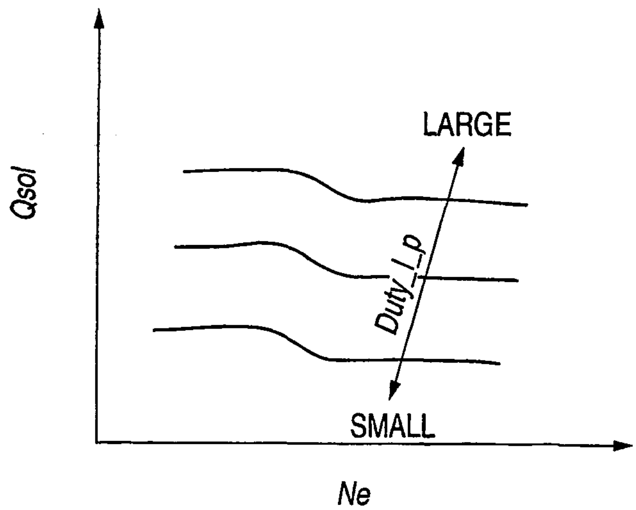


FIG. 92

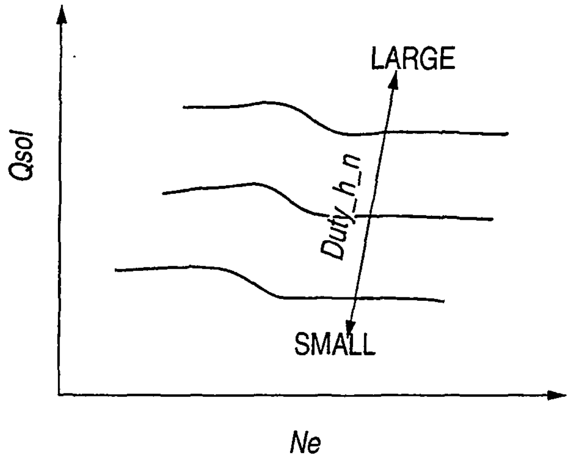


FIG. 93

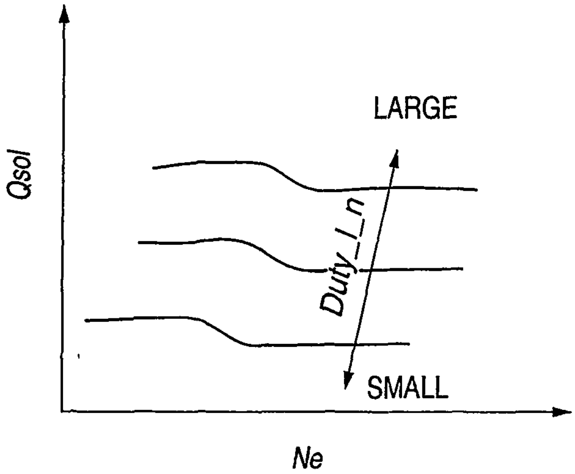


FIG. 94

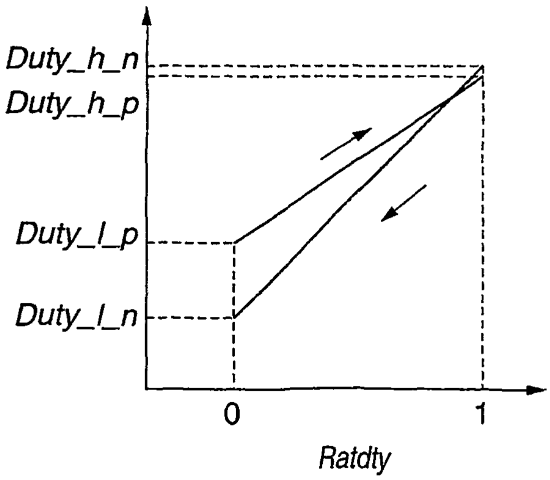


FIG. 95

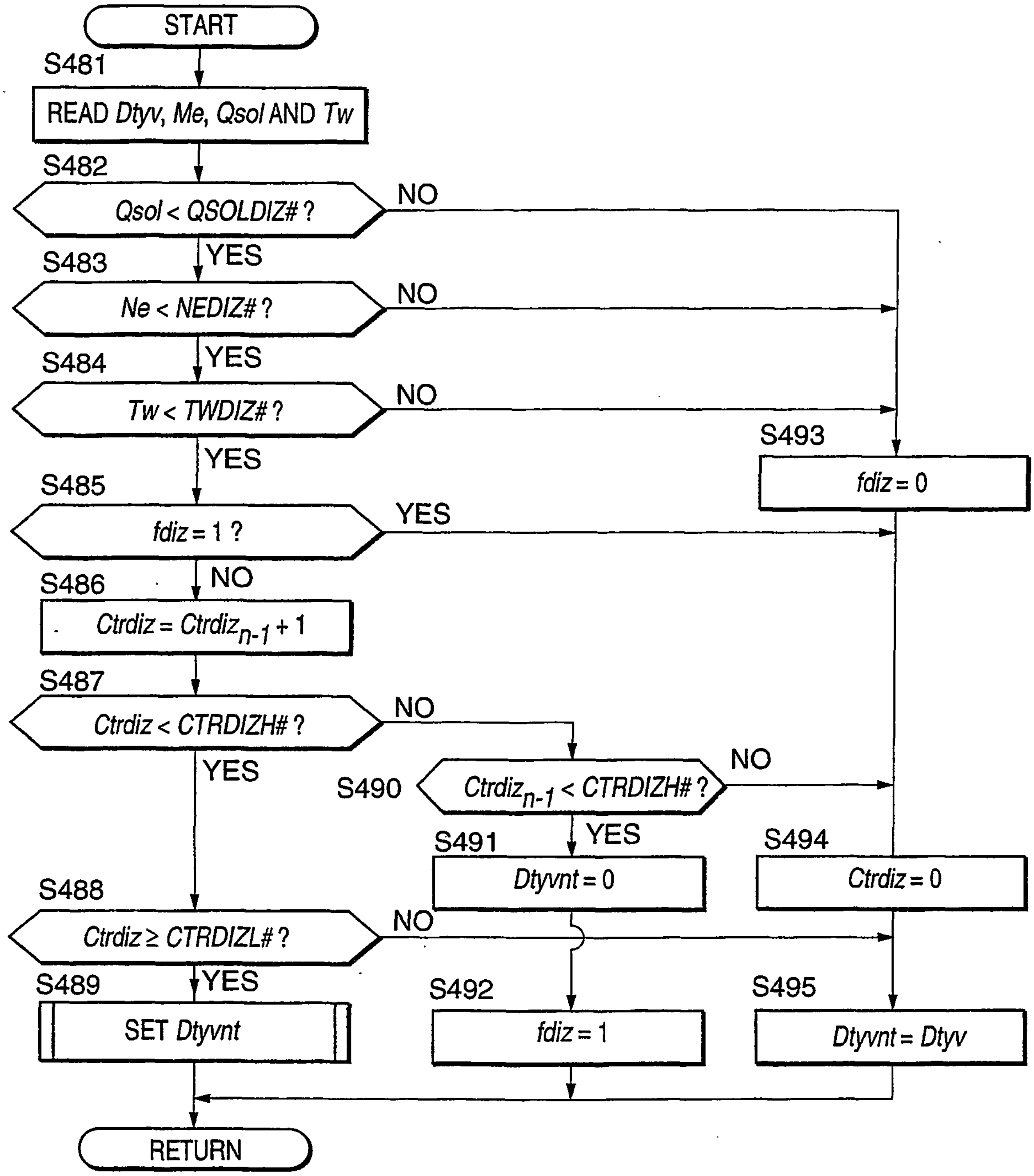
START
S481
READ Dtyv, Me, Qsol AND Tw
S482
Qsol < QSOLDIZ# ?
NO
YES
S483
Ne < NEDIZ# ?
NO
YES
S484
Tw < TWDIZ# ?
NO
YES
S485
fdiz = 1 ?
YES
NO
S486
Ctrdiz = Ctrdiz n-1 + 1
S487
Ctrdiz < CTRDIZH# ?
NO
YES
S490
Ctrdiz n-1 < CTRDIZH# ?
NO
YES
S491
Dtyvnt = 0
S488
Ctrdiz ≥ CTRDIZL# ?
NO
YES
S489
SET Dtyvnt
S492
fdiz = 1
S493
fdiz = 0
S494
Ctrdiz = 0
S495
Dtyvnt = Dtyv
RETURN

FIG. 96

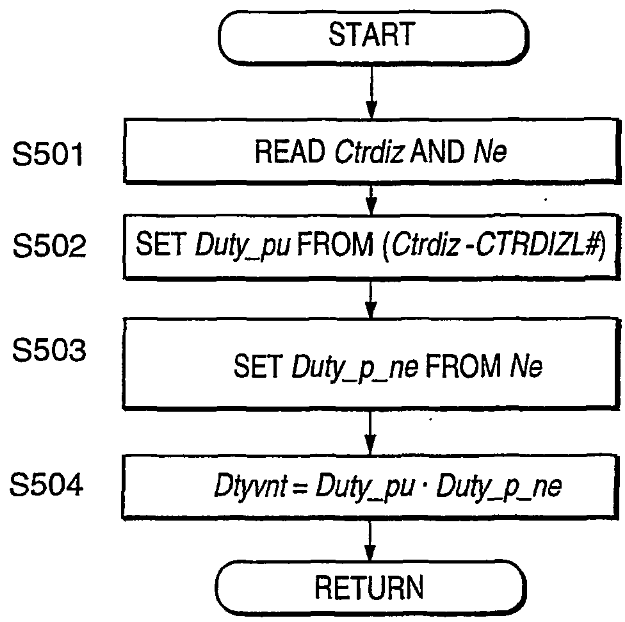
START
S501
READ Ctrdiz AND Ne
S502
SET Duty_pu FROM (Ctrdiz -CTRDIZL#)
S503
SET Duty_p_ne FROM Ne
S504
Dtyvnt = Duty_pu · Duty_p_ne
RETURN

FIG. 97

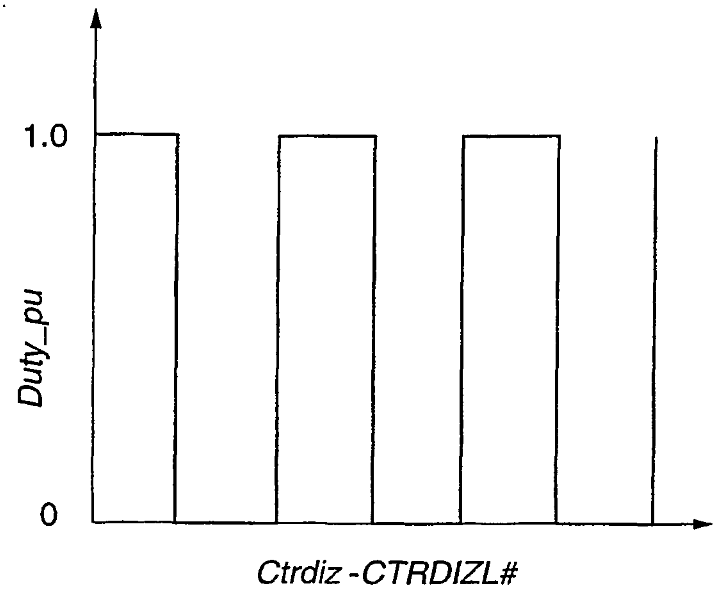


FIG. 98

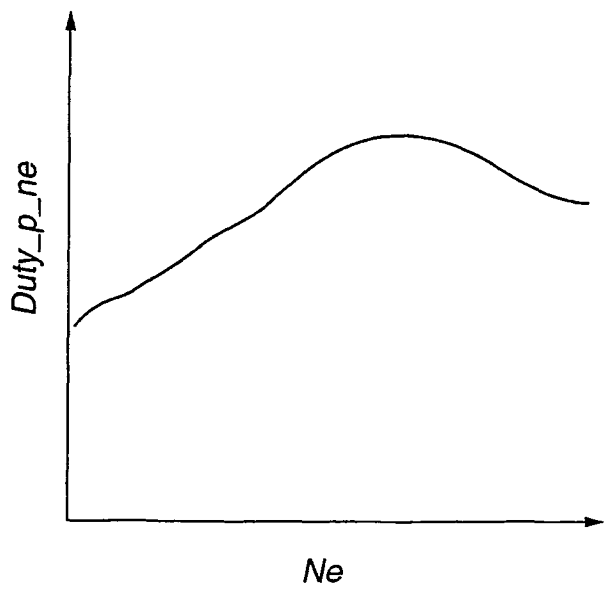


FIG. 99

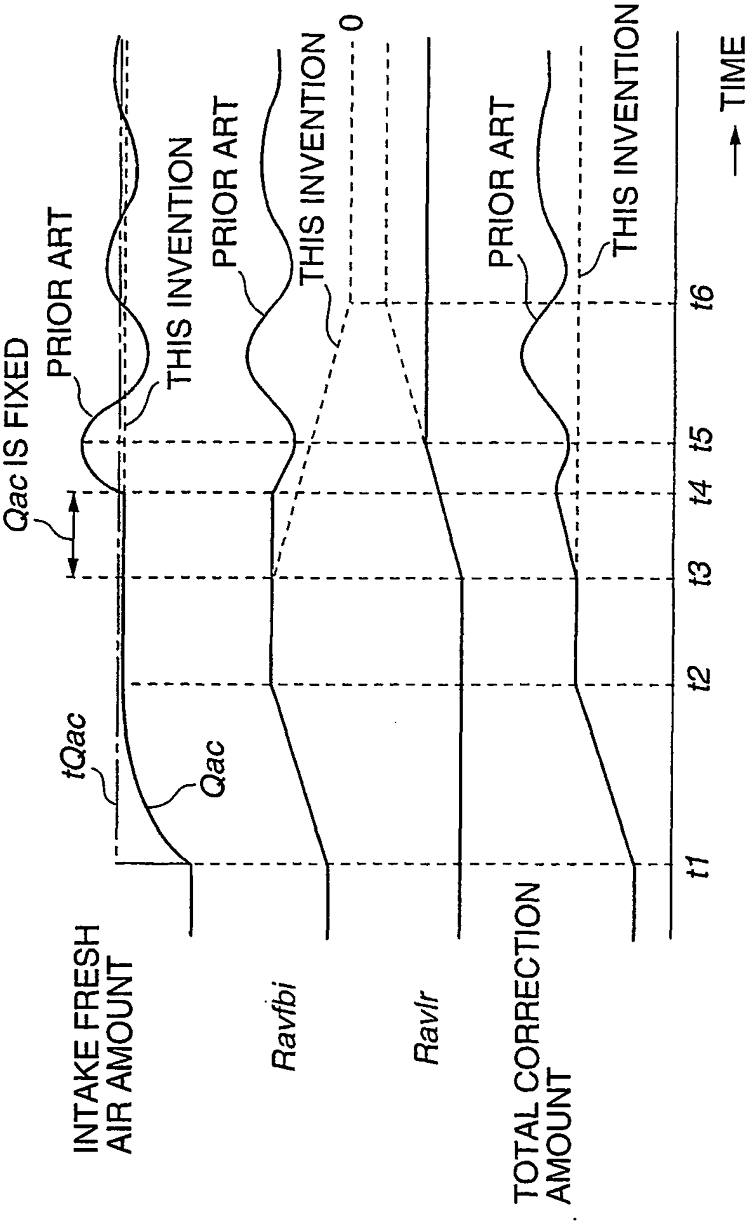


FIG. 100A

FIG. 100B

FIG. 100C

FIG. 100D

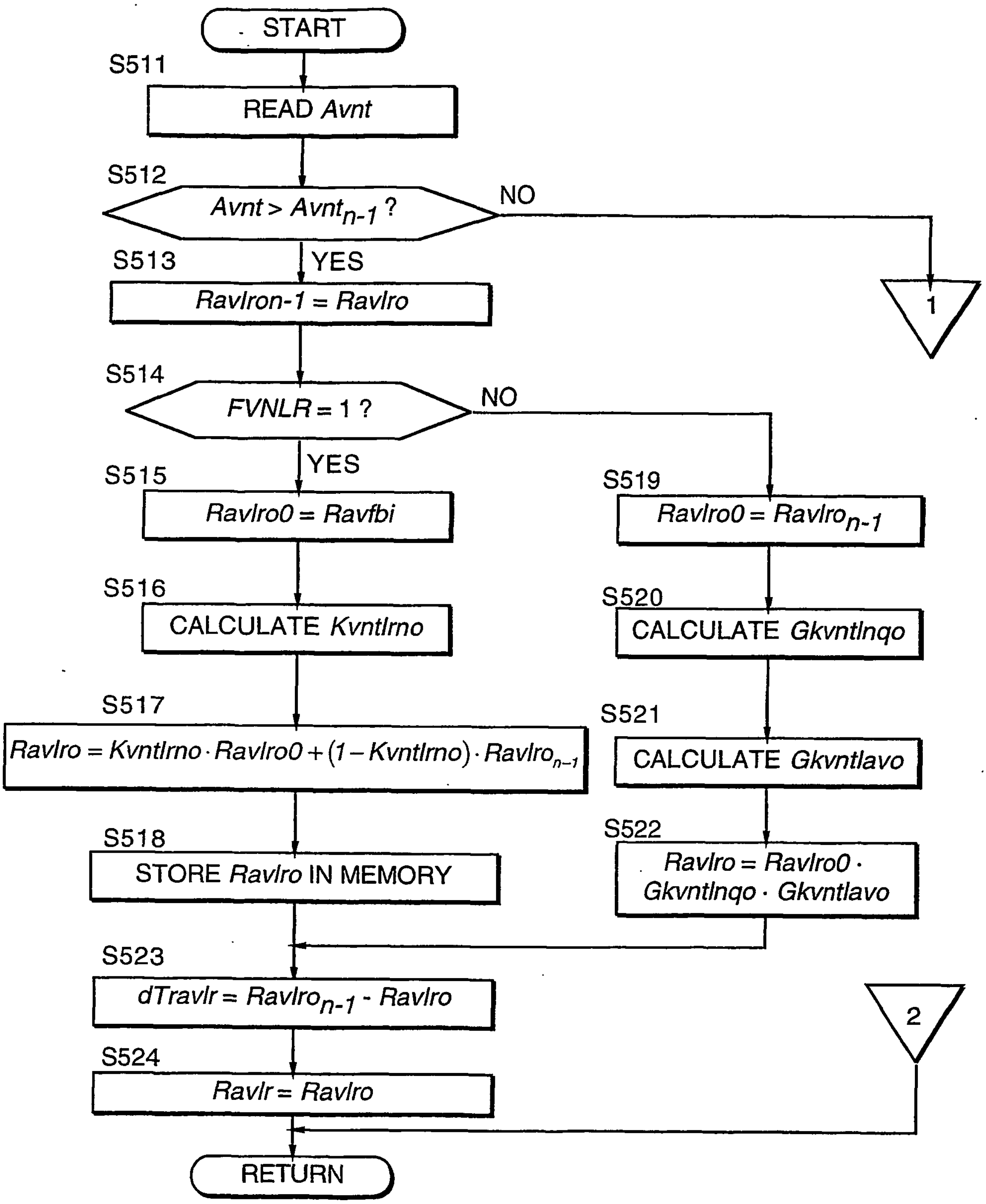
START
S511
READ Avnt
S512
Avnt > Avnt n-1 ?
NO
S513
YES
Ravlron-1 = Ravlro
1
S514
FVNLR = 1 ?
NO
S515
YES
Ravlro0 = Ravfbi
S519
Ravlro0 = Ravlro n-1
S516
CALCULATE Kvntlrno
S520
CALCULATE Gkvntlnqo
S517
Ravlro = Kvntlrno · Ravlro0 + (1 – Kvntlrno) · Ravlro n-1
S521
CALCULATE Gkvntlavo
S518
STORE Ravlro IN MEMORY
S522
Ravlro = Ravlro0 · Gkvntlnqo · Gkvntlavo
S523
dTravlr = Ravlro n-1 - Ravlro
2
S524
Ravlr = Ravlro
RETURN

FIG.101A

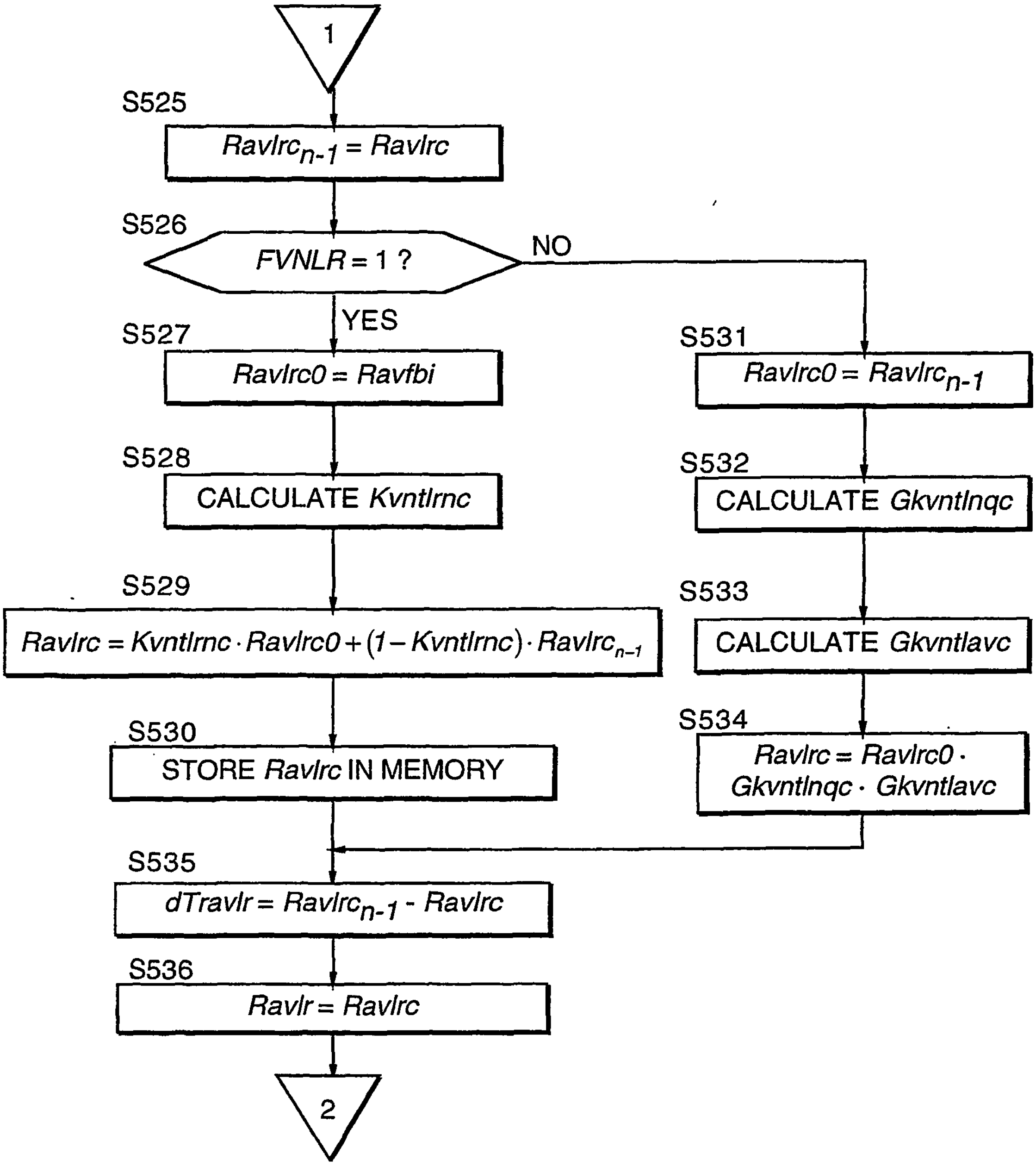
1
S525
Ravlrc$_{n-1}$ = Ravlrc
S526
FVNLR = 1 ?
NO
YES
S527
Ravlrc0 = Ravfbi
S528
CALCULATE Kvntlrnc
S529
Ravlrc = Kvntlrnc · Ravlrc0 + (1 – Kvntlrnc) · Ravlrc$_{n-1}$
S530
STORE Ravlrc IN MEMORY
S531
Ravlrc0 = Ravlrc$_{n-1}$
S532
CALCULATE Gkvntlnqc
S533
CALCULATE Gkvntlavc
S534
Ravlrc = Ravlrc0 · Gkvntlnqc · Gkvntlavc
S535
dTravlr = Ravlrc$_{n-1}$ - Ravlrc
S536
Ravlr = Ravlrc
2

FIG.101B

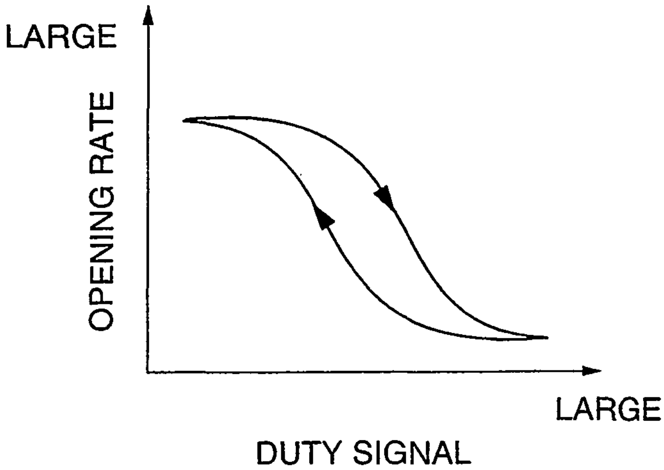


FIG. 102